# EUROPEAN PATENT APPLICATION

(11) **EP 4 521 810 A1**
(43) Date of publication of application: **12.03.2025**
(21) Application number: 22940642.6
(22) Date of filing: 06.05.2022
(51) Int. Cl.: H04W 24/08

(54) **WIRELESS COMMUNICATION METHODS, AND DEVICES**

(71) Applicant: GUANGDONG OPPO MOBILE TELECOMMUNICATIONS CORP., LTD., Dongguan, Guangdong 523860 (CN)
(72) Inventor: ZHOU, Pei, Dongguan, Guangdong 523860 (CN); HUANG, Lei, 049483 (SG)
(74) Representative: RGTH
(86) International application number: PCT/CN2022/091291
(87) International publication number: WO 2023/212948

(57) **Abstract**

Wireless communication methods and devices are provided, and a wireless communication method includes: transmitting, by a first access point (AP), a first request frame to at least one second AP, the first request frame including first indication information and/or a target coordinated transmission command, where the first indication information is used to indicate a first target coordinated transmission scheme, the first target coordinated transmission scheme is a coordinated transmission scheme in which the first AP requests the at least one second AP to participate, and the target coordinated transmission command is a coordinated transmission command corresponding to the first target coordinated transmission scheme.

## Description

### TECHNICAL FIELD

Embodiments of the present application relate to the field of communication, and in particular, to a wireless communication method, and device.

### BACKGROUND

In a multi-access point (AP) coordinated transmission scenario, an AP may support one or more multi-AP coordinated transmission schemes. For different multi-AP coordinated transmission schemes, information that the AP needs to exchange in a coordination preparation phase is different, and complexity of the AP implementation is relatively high. Therefore, how to design to reduce implementation complexity of the multi-AP coordination is an issue that needs to be solved urgently.

### SUMMARY

The present application provides a wireless communication method and device, which are conducive to reducing the implementation complexity of the multi-AP coordination.

In a first aspect, a wireless communication method is provided, and includes: transmitting, by a first access point (AP), a first request frame to at least one second AP, the first request frame including first indication information and/or a target coordinated transmission command, where the first indication information is used to indicate a first target coordinated transmission scheme, the first target coordinated transmission scheme is a coordinated transmission scheme in which the first AP requests the at least one second AP to participate, and the target coordinated transmission command is a coordinated transmission command corresponding to the first target coordinated transmission scheme.

In a second aspect, a wireless communication method is provided, and includes: receiving, by a second access point (AP), a first request frame transmitted by a first AP, the first request frame including first indication information and/or a target coordinated transmission command, where the first indication information is used to indicate a first target coordinated transmission scheme, the first target coordinated transmission scheme is a coordinated transmission scheme in which the first AP requests the second AP to participate, and the target coordinated transmission command is a coordinated transmission command corresponding to the first target coordinated transmission scheme.

In a third aspect, an access point is provided, and is configured to perform the method in the above first aspect or various implementations thereof.

Specifically, the access point includes a functional module for performing the method in the above first aspect or various implementations thereof.

In a fourth aspect, an access point is provided, and is configured to perform the method in the above second aspect or various implementations thereof.

Specifically, the access point includes a functional module for performing the method in the above second aspect or various implementations thereof.

In a fifth aspect, an access point is provided, and includes a processor and a memory. The memory is configured to store a computer program, and the processor is configured to call and run the computer program stored in the memory, to perform the method in the above first aspect or various implementations thereof.

In a sixth aspect, an access point is provided, and includes a processor and a memory. The memory is configured to store a computer program, and the processor is configured to call and run the computer program stored in the memory, to perform the method in the above second aspect or various implementations thereof.

In a seventh aspect, a chip is provided, and is configured to implement the method in any one of the above first to second aspects or various implementations thereof.

Specifically, the chip includes: a processor, which is configured to call and run a computer program from a memory, to cause a device equipped with the apparatus to perform the method in any one of the above first to second aspects or various implementations thereof.

In an eighth aspect, a computer-readable storage medium is provided, and is configured to store a computer program, where the computer program causes a computer to perform the method in any one of the above first to second aspects or various implementations thereof.

In a ninth aspect, a computer program product is provided, and includes computer program instructions, where the computer program instructions cause a computer to perform the method in any one of the above first to second aspects or various implementations thereof.

In a tenth aspect, a computer program is provided, and the computer program, when executed on a computer, causes the computer to perform the method in any one of the above first to second aspects or various implementations thereof.

Through the above technical solutions, the first AP may request, by the first request frame, the at least one second AP to participate in a multi-AP coordinated transmission of the first target coordinated transmission scheme, and indicate a coordinated transmission command related to the first target coordinated transmission scheme to the at least one second AP, thereby enabling a unified multi-AP coordinated preparation process, which is conducive to reducing complexity of the multi-AP coordinated transmission.

### BRIEF DESCRIPTION OF THE DRAWINGS

FIG. 1 is a schematic diagram of a communication system architecture provided in the embodiments of the present application.
FIG. 2 is a schematic diagram of a wired multi-AP coordinated architecture applicable according to the embodiments of the present application.
FIG. 3 is a schematic diagram of a wireless multi-AP coordinated architecture applicable according to the embodiments of the present application.
FIG. 4 is a schematic interaction diagram of a wireless communication method provided according to the embodiments of the present application.
FIG. 5 is a schematic interaction diagram of a wireless communication method according to an embodiment of the present application.
FIG. 6 is a schematic interaction diagram of a wireless communication method according to another embodiment of the present application.
FIG. 7 is a schematic interaction diagram of a wireless communication method according to yet another embodiment of the present application.
FIG. 8 is a schematic diagram of a frame format of a coordinated transmission request frame provided in the embodiments of the present application.
FIG. 9 is a schematic format diagram of a coordinated transmission scheme used field in the coordinated transmission request frame in FIG. 8.
FIG. 10 is another schematic format diagram of a coordinated transmission scheme used field in the coordinated transmission request frame in FIG. 8.
FIG. 11 is a schematic format diagram of a C-BF command field in the coordinated transmission request frame in FIG. 8.
FIG. 12 is a schematic format diagram of a C-OFDMA command field in the coordinated transmission request frame in FIG. 8.
FIG. 13 is a schematic format diagram of a C-SR command field in the coordinated transmission request frame in FIG. 8.
FIG. 14 is a schematic format diagram of a J-TX command field in the coordinated transmission request frame in FIG. 8.
FIG. 15 is a schematic diagram of a frame format of a trigger frame.
FIG. 16 is a schematic diagram of a frame format for carrying first indication information and a target coordinated transmission command by a common information field of a trigger frame.
FIG. 17 to FIG. 20 are exemplary format diagrams of a coordinated transmission scheme related command field in the trigger frame in FIG. 16.
FIG. 21 is a schematic diagram of a frame format for carrying only first indication information by a communication information field of a trigger frame.
FIG. 22 is a schematic diagram of a format for carrying a target coordinated transmission command by a special user information field of a trigger frame (specifically, trigger frame type dependent user information).
FIG. 23 to FIG. 26 are exemplary format diagrams of a trigger frame type dependent user information field in FIG. 22.
FIG. 27 is a schematic diagram of a frame format for carrying a target coordinated transmission command by a newly defined user information field of a trigger frame.
FIG. 28 is a schematic diagram of a frame format for carrying first indication information and a target coordinated transmission command by a user information field of a trigger frame.
FIG. 29 is a schematic diagram of a frame format of a coordinated transmission response frame provided in the embodiments of the present application.
FIG. 30 is a schematic format diagram of a coordinated transmission scheme accepted field in the coordinated transmission response frame in FIG. 29.
FIG. 31 is another schematic format diagram of a coordinated transmission scheme accepted field in the coordinated transmission response frame in FIG. 29.
FIG. 32 is a schematic format diagram of a participant STA list field in the coordinated transmission response frame in FIG. 29.
FIG. 33 is a schematic format diagram of a participant C-BF information field in the coordinated transmission response frame in FIG. 29.
FIG. 34 is a schematic format diagram of a participant J-TX information field in the coordinated transmission response frame in FIG. 29.
FIG. 35 is a schematic format diagram of a participant C-OFDMA information field in the coordinated transmission response frame in FIG. 29.
FIG. 36 is a schematic format diagram of a participant C-SR information field in the coordinated transmission response frame in FIG. 29.
FIG. 37 is a schematic diagram of a frame format of another coordinated transmission response frame provided in the embodiments of the present application.
FIG. 38 to FIG. 41 are schematic format diagrams of a coordinated transmission scheme information field in the coordinated transmission response frame in FIG. 37.
FIG. 42 is a schematic diagram of a frame format of a coordinated transmission announce frame provided in the embodiments of the present application.
FIG. 43 is a schematic format diagram of a coordinated transmission scheme adopted field in the coordinated transmission announce frame in FIG. 42.
FIG. 44 is another schematic format diagram of a coordinated transmission scheme adopted field in the coordinated transmission announce frame in FIG. 42.
FIG. 45 is a schematic format diagram of a participant AP list field in the coordinated transmission announce frame in FIG. 42.
FIG. 46 is a schematic format diagram of a C-BF/J-TX parameters field in the coordinated transmission announce frame in FIG. 42.
FIG. 47 is a schematic format diagram of a C-SR parameters field in the coordinated transmission announce frame in FIG. 42.
FIG. 48 is a schematic format diagram of a C-UL-MU-MIMO parameters field in the coordinated transmission announce frame in FIG. 42.
FIG. 49 is a schematic format diagram of a C-OFDMA parameters field in the coordinated transmission announce frame in FIG. 42.
FIG. 50 is a schematic block diagram of an access point provided in the embodiments of the present application.
FIG. 51 is a schematic block diagram of another access point provided in the embodiments of the present application.
FIG. 52 is a schematic block diagram of a communication device provided in the embodiments of the present application.
FIG. 53 is a schematic block diagram of a chip provided in the embodiments of the present application.
FIG. 54 is a schematic block diagram of a communication system provided in the embodiments of the present application.

### DETAILED DESCRIPTION

The technical solutions of the embodiments of the present application will be described below, in conjunction with the drawings in the embodiments of the present application. Obviously, the described embodiments are merely some but not all of the embodiments of the present application. All other embodiments obtained based on the embodiments of the present application by the ordinary skilled in the art without creative efforts shall belong to the protection scope of the present application.

The technical solutions of the embodiments of the present application may be applied to various communication systems, such as wireless local area network (WLAN), wireless fidelity (WiFi) or other communication systems, etc.

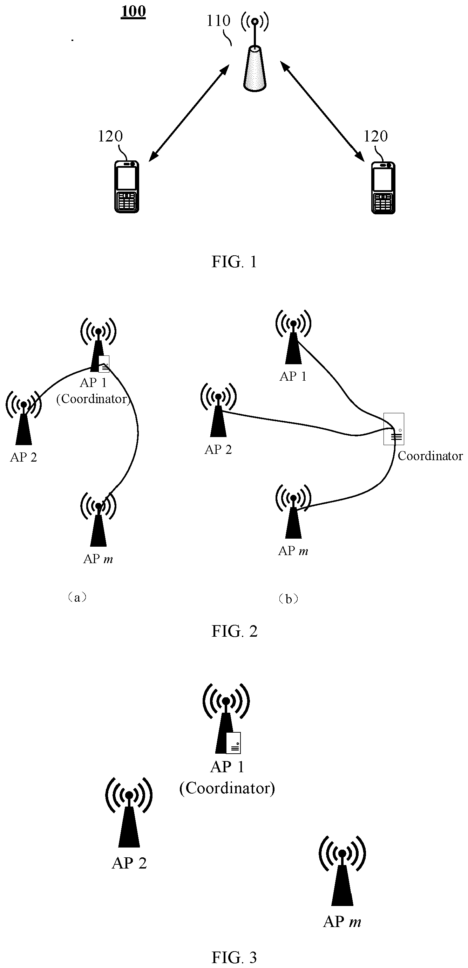

For example, a communication system 100 applied in the embodiments of the present application is shown in FIG. 1. The communication system 100 may include an access point (AP) 110 and stations (STATIONs, STAs) 120 which access a network by the access point 110.

In some scenarios, an AP may also be referred to as an AP STA. That is, in a sense, the AP is also a kind of STA.

In some scenarios, an STA is also referred to as a non-AP STA.

The communication in the communication system 100 may be a communication between an AP and a non-AP STA, a communication between a non-AP STA and a non-AP STA, or a communication between an STA and a peer STA. The peer STA may refer to a device that has a peer communication with the STA. For example, the peer STA may be an AP or a non-AP STA.

The AP is the equivalent of a bridge connecting a wired network and a wireless network, whose main role is to connect various wireless network clients together and then access the wireless network to Ethernet. The AP device may be a terminal device (e.g., a mobile phone) or network device (e.g., router) with a WiFi chip.

It should be understood that a role of the STA in the communication system is not absolute. For example, in some scenarios, in a case where a mobile phone is connected to a router, the mobile phone is the non-AP STA, and in a case where the mobile phone serves as a hotspot for other mobile phones, the mobile phone acts as the AP.

The AP and the non-AP STA may be devices applied in Vehicle to Everything, Internet of Things (IoT) nodes, sensors, etc., in IoT, smart cameras, smart remote controllers, smart watermeters, smart electricity meters, etc., in a smart home, and sensors in a smart city, etc.

In some embodiments, the non-AP STA may support an 802.11be standard. The non-AP STA may also support various wireless local area network (WLAN) standards of the current and future 802.11 family, such as 802.11ax, 802.11ac, 802.11n, 802.11g, 802.11b and 802.11a, etc.

In some embodiments, the AP may be a device supporting the 802.11be standard. The AP may also be a device supporting various WLAN standards of the current and future 802.11 family, such as 802.11ax, 802.11ac, 802.11n, 802.11g, 802.11b, and 802.11a, etc.

In the embodiments of the present application, the STA may be a mobile phone, a pad, a computer, a virtual reality (VR) device, an augmented reality (AR) device, a wireless device in industrial control, a set-top box, a wireless device in self driving, a vehicle-mounted communication device, a wireless device in remote medical, a wireless device in smart grid, a wireless device in transportation safety, a wireless device in smart city, a wireless device in smart home, a wireless communication chip/application-specific integrated circuit (ASIC)/system on chip (SoC), or the like, which support the WLAN/WiFi technology.

Frequency bands that the WLAN technology may support may include, but are not limited to: low frequency bands (e.g., 2.4 GHz, 5 GHz, 6 GHz), high frequency bands (e.g., 60 GHz).

FIG. 1 exemplarily shows one AP STA and two non-AP STAs. Optionally, the communication system 100 may include multiple AP STAs and other numbers of non-AP STAs, which are not limited to the embodiments of the present application.

It should be understood that a device with a communication function in the network/system in the embodiments of the present application may be referred to as a communication device. In an example of the communication system 100 shown in FIG. 1, the communication devices may include an access point 110 and stations 120 with the communication function. The access point 110 and the stations 120 may be specific devices described above and will not be repeated here. The communication devices may also include other devices in the communication system 100, such as a network controller, a gateway and other network entities, which are not limited to the embodiments of the present application.

It should be understood that terms herein "system" and "network" are often used interchangeably herein. The term "and/or" herein is only an association relationship to describe associated objects, indicating that there may be three relationships, for example, "A and/or B" may indicate three cases of: A alone, both A and B, and B alone. In addition, the character "/" herein generally indicates that associated objects before and after this character are in an "or" relationship.

It should be understood that the "indication" mentioned in the embodiments of the present application may be a direct indication or an indirect indication, or may represent that there is an association relationship. For example, A indicating B may mean that A directly indicates B, e.g., that B may be obtained by A; or it may mean that A indirectly indicates B, e.g., that A indicates C, and B may be obtained by C; or it may mean that there is an association relationship between A and B.

In the description of the embodiments of the present application, the term "corresponding" may mean a direct or indirect corresponding relationship between the two, or an association relationship between the two, or a relationship of indicating and being indicated, or configuring and being configured, etc.

In the embodiments of the present application, "predefined" may be implemented by pre-saving corresponding codes, tables or other manners that may be used for indicating related information, in the device (for example, including the access point and the station), and the present application does not limit its specific implementation. For example, the predefined may mean defined in a protocol.

In the embodiments of the present application, the "protocol" may refer to a standard protocol in the field of communication, which may include, for example, a WiFi protocol, and related protocols applied in the future WiFi communication system, and the present application is not limited thereto.

To facilitate the understanding of the technical solutions of the embodiments of the present application, establishment of a multi-AP coordinated set related to the present application is described below.

The establishment of the multi-AP coordinated set includes the following two phases: a multi-AP coordinated capability discovery phase and a multi-AP coordinated set establishment phase.

In the multi-AP coordinated capability discovery phase, an AP, by receiving a beacon frame or other management frames transmitted by a neighbor AP, may discover a multi-AP coordinated capability of each other.

In the multi-AP coordinated set establishment phase, an AP that initiates a multi-AP coordinated transmission is referred to as a master AP (MAP), and the MAP selects one or more slave APs (SAPs) around it to participate in the multi-AP coordinated transmission. In this process, MAP and SAP will exchange some information for configuring the multi-AP coordinated set, and the specific steps and interacted information are as follows.
1) The MAP transmits a request frame to SAPs, which mainly includes the following information: allocating identities (IDs) of the SAPs during the multi-AP coordinated transmission, and allocating an ID of the multi-AP coordinated set; and
2) The SAPs reply to the MAP with a response frame, which mainly includes the following information: information of STAs associated with the SAP, each STA information includes the STA's ID and capability information of participating in the multi-AP coordinated transmission; and a priority of the STA participating in the multi-AP coordinated transmission.

APs participating in the multi-AP coordinated transmission may include the following roles:

MAP (Master AP), SAP (Slave AP), Coordinating AP, Coordinated AP, sharing AP, and shared AP.

Herein, in the multi-AP coordinated set establishment phase, the AP in the MAP role initiates a request to the AP in the SAP role to establish the multi-AP coordinated set ; in a channel sounding phase, the cooperating AP in the cooperating AP role initiates channel sounding, and the AP in the coordinated AP role participates in the channel sounding; in a preparation phase and/or a coordinated transmission phase, the AP in the sharing AP role shares its transmission opportunity (TXOP) resource with the AP in the shared AP role, for the coordinated transmission.

In some embodiments, the present application may be applied to a wired multi-AP coordinated transmission architecture as shown in FIG. 2, or may be applied to a wireless multi-AP coordinated transmission architecture as shown in FIG. 3.

In the wired multi-AP coordinated transmission architecture, as shown in (a) of FIG. 2, a coordinator in the network is in a certain AP and controls other APs by a wired connection; as shown in (b) of FIG. 2, there is an independent coordinator in the network that controls other APs by a wired connection. For the wired multi-AP coordinated transmission architecture, the multi-AP coordinated set establishment is set by a network operator directly at a controller.

In the wireless multi-AP coordinated transmission architecture, a coordinator in the network is in a certain AP (called MAP) and controls other APs (called SAPs) wirelessly.

In some scenarios, the AP may support one or more of the following multi-AP coordinated transmission schemes:
a coordinated beamforming (Coordinated Beamforming, C-BF) scheme;
a coordinated orthogonal frequency division multiple access (Coordinated Orthogonal Frequency Division Multiple Access, C-OFDMA) scheme;
a coordinated spatial reuse (Coordinated Spatial Reuse, C-SR) scheme;
a joint transmission (Joint Transmission, J-TX) scheme; and
a coordinated uplink multiple-user multiple input multiple output (Coordinated Uplink Multiple-User Multiple Input Multiple Output, C-UL MU MIMO) scheme.

For different multi-AP coordinated transmission schemes, the information that needs to be exchanged in the preparation phase is different. Therefore, how to design a unified coordinated preparation process to reduce the complexity of the multi-AP coordination is an urgent problem to be solved.

To facilitate the understanding of the technical solutions of the embodiments of the present application, the technical solutions of the present application are described in detail below by specific embodiments. The following related technologies as optional solutions, may be arbitrarily combined with the technical solutions of the embodiments of the present application, and they all belong to the protection scope of the embodiments of the present application. The embodiments of the present application include at least a part of the following content.

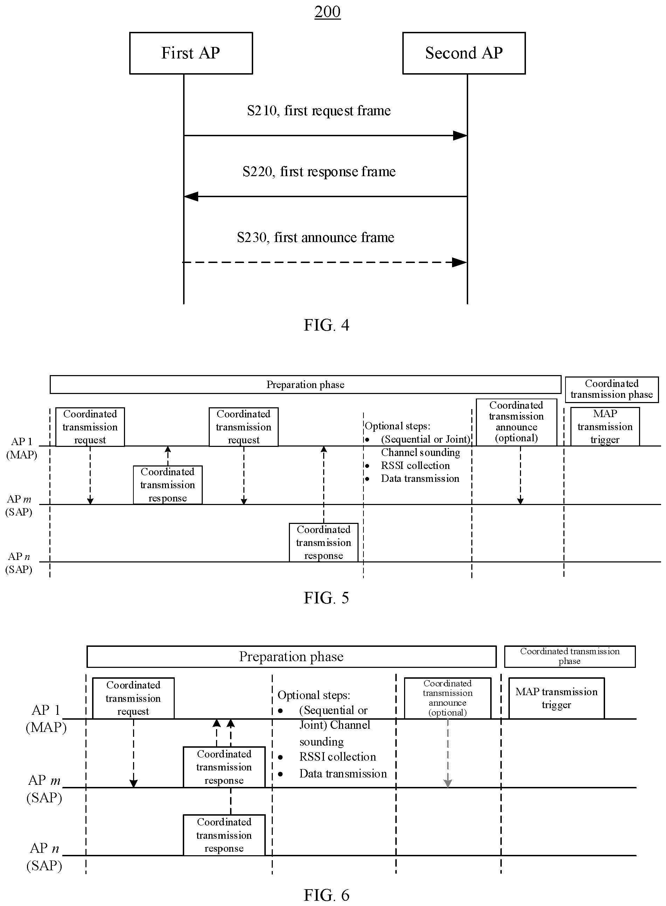

FIG. 4 is a schematic interaction diagram of a method 200 of wireless communication, according to the embodiments of the present application. As shown in FIG. 4, the method 200 includes the following content:

S210, transmitting, by a first access point (AP), a first request frame to at least one second AP.

Correspondingly, the at least one second AP receives the first request frame of the first AP.

Herein, the first request frame includes first indication information and/or a target coordinated transmission command, where the first indication information is used to indicate a first target coordinated transmission scheme, the first target coordinated transmission scheme is a coordinated transmission scheme in which the first AP requests the at least one second AP to participate, and the target coordinated transmission command is a coordinated transmission command corresponding to the first target coordinated transmission scheme.

In some embodiments, the first request frame is also referred to as a coordinated transmission request (Coordinated TX Request) frame, or a multi-AP preparation trigger frame (Multi-AP Preparation Trigger frame), or other similar names are used, which are not limited in this application.

In some embodiments, the first AP and the at least one second AP belong to a multi-AP coordinated set.

In some embodiments, the first AP is a sharing AP, and the second AP is a shared AP.

In some embodiments, the first AP is an MAP and the second AP is an SAP.

In some embodiments, the first target coordinated transmission scheme may include at least one of the following schemes:
a C-BF scheme, a C-OFDMA scheme, a C-SR scheme, a J-TX scheme, or a C-UL MU-MIMO scheme.

In some embodiments, the first AP may request the at least one second AP to participate in a multi-AP coordinated transmission of the first target coordinated transmission scheme, by the first request frame, and indicate a coordinated transmission command related to the first target coordinated transmission scheme to the at least one second AP, thereby enabling a unified multi-AP coordinated preparation process, which is conducive to reducing the complexity of the multi-AP coordinated transmission.

In some embodiments, in a case where the first target coordinated transmission scheme includes the C-OFDMA scheme, the target coordinated transmission command may be used to inquire whether the at least one second AP participates in a multi-AP coordinated transmission of the C-OFDMA scheme, and/or allocate a frequency domain resource, such as a resource unit (RU) or multiple resource units (MRU), for the multi-AP coordinated transmission of the C-OFDMA scheme.

In some embodiments, in a case where the first target coordinated transmission scheme includes the C-BF scheme, the target coordinated transmission command may be used to inquire whether the at least one second AP participates in a multi-AP coordinated transmission of the C-BF scheme, and/or request the second AP to report channel state information (CSI).

In some embodiments, in a case where the first target coordinated transmission scheme includes the J-TX scheme, the target coordinated transmission command may be used to inquire whether the at least one second AP participates in a multi-AP coordinated transmission of the J-TX scheme, and/or request the second AP to report the CSI.

In some embodiments, in a case where the first target coordinated transmission scheme includes the C-UL MU-MIMO scheme, the target coordinated transmission command may be used to inquire whether the at least one second AP participates in a multi-AP coordinated transmission of the C-UL MU-MIMO scheme.

In some embodiments, in a case where the first target coordinated transmission scheme includes the C-SR scheme, the target coordinated transmission command may be used to inquire whether the at least one second AP participates in a multi-AP coordinated transmission of the C-SR scheme, and/or request the second AP to report a received signal strength indicator (RSSI).

In the embodiments of the present application, the AP participating in the multi-AP coordinated transmission of the C-BF scheme may also be referred to as the AP participating in the C-BF scheme. The same is true for other multi-AP coordination schemes, which will not be repeated here.

Method 1: The first indication information indicates, by a bitmap, the coordinated transmission scheme in which the first AP requests the at least one second AP to participate.

Optionally, in Method 1, the number of bits occupied by the first indication information may be equal to a total number P of candidate multi-AP coordination schemes.

For example, the first indication information includes multiple bits, each bit corresponds to one of multiple coordinated transmission schemes, and a value of the each bit is used to indicate whether the first AP requests the at least one second AP to participate in a corresponding coordinated transmission scheme. For example, the value of 1 indicates to request, and the value of 0 indicates to not request; or the value of 1 indicates to not request, and the value of 0 indicates to request.

Optionally, the first indication information may be 5 bits, respectively used to indicate whether to request the C-BF scheme, C-OFDMA scheme, C-SR scheme, J-TX scheme and C-UL MU-MIMO scheme.

In Method 1, the first AP may request the at least one second AP to participate the multi-AP coordinated transmission of one or more schemes.

Method 2: different values of the first indication information are used to indicate different coordinated transmission schemes in which the first AP requests the at least one second AP to participate.

In Method 2, the number of bits occupied by the first indication information may be determined according to the total number P of the candidate multi-AP coordination schemes.

For example, if the candidate multi-AP coordination schemes include five multi-AP coordination schemes: the C-BF scheme, C-OFDMA scheme, C-SR scheme, J-TX scheme and C-UL MU-MIMO scheme, the first indication information may occupy 3 bits, and different values of the 3 bits are used to indicate the multi-AP coordinated transmission schemes in which the first AP requests the at least one second AP to participate, respectively.

As an example, the 3-bit value of 001 indicates to request to participate in the C-BF scheme, the value of 010 indicates to request to participate in the C-OFDMA scheme, the value of 011 indicates to request to participate in the C-SR scheme, the value of 100 indicates to request to participate in the J-TX scheme, and the value of 101 indicates to request to participate in the C-UL MU-MIMO scheme, where the values 000 and 110 to 111 are reserved values.

In some embodiments, the target coordinated transmission command includes at least one of the following information:
indication information on whether to report CSI between the second AP and associated STAs of the second AP;
indication information on whether to report CSI between the second AP and unassociated STAs of the second AP (e.g., an overlapping basic service set (OBSS) STA);
available RUs or MRUs shared by the first AP to the at least one second AP;
indication information on whether to report RSSI between the second AP and associated STAs of the second AP; or
indication information on whether to report RSSI between the second AP and unassociated STAs of the second AP (e.g., an OBSS STA).

For example, in a case where the first AP requests the second AP to participate in the multi-AP coordinated transmission of the C-BF scheme (i.e., the first target coordinated transmission scheme includes the C-BF scheme), the target coordinated transmission command includes a coordinated transmission command corresponding to the C-BF scheme.

Optionally, the coordinated transmission command corresponding to the C-BF scheme includes at least one of the following information:
indication information on whether to report CSI between the second AP and associated STAs of the second AP; or
indication information on whether to report CSI between the second AP and OBSS STAs of the second AP.

Optionally, in the embodiments of the present application, whether to request to report the CSI between the second AP and the associated STAs and whether to request to report the CSI between the second AP and the OBSS STAs may also correspond to the same indication information. In this case, the first AP may indicate the second AP to simultaneously report the CSI between the second AP and the associated STAs and the CSI between the second AP and the OBSS STAs, or may also indicate the second AP not to report the CSI between the second AP and the associated STAs and the CSI between the second AP and the OBSS STAs.

For another example, in a case where the first AP requests the second AP to participate in the multi-AP coordinated transmission of the J-TX scheme (i.e., the first target coordinated transmission scheme includes the J-TX scheme), the target coordinated transmission command includes a coordinated transmission command corresponding to the J-TX scheme.

Optionally, the coordinated transmission command corresponding to the J-TX scheme includes at least one of the following information:
indication information on whether to report CSI between the second AP and associated STAs of the second AP; or
indication information on whether to report CSI between the second AP and OBSS STAs of the second AP.

It should be understood that in a case where the first target coordinated transmission scheme includes the C-BF scheme and the J-TX scheme, the first request frame may include coordinated transmission commands corresponding to the C-BF scheme and the J-TX scheme respectively, or the same coordinated transmission command may be shared.

For another example, in a case where the first AP requests the second AP to participate in the multi-AP coordinated transmission of the C-OFDMA scheme (i.e., the first target coordinated transmission scheme includes the C-OFDMA scheme), the target coordinated transmission command includes a coordinated transmission command corresponding to the C-OFDMA scheme.

Optionally, the coordinated transmission command corresponding to the C-OFDMA scheme includes:
available RUs or MRUs shared by the first AP to the at least one second AP.

For yet another example, in a case where the first AP requests the second AP to participate in the multi-AP coordinated transmission of the C-SR scheme (i.e., the first target coordinated transmission scheme includes the C-SR scheme), the target coordinated transmission command includes a coordinated transmission command corresponding to the C-SR scheme.

Optionally, the coordinated transmission command corresponding to the C-SR scheme includes at least one of the following information:
indication information on whether to report RSSI between the second AP and associated STAs of the second AP; or
indication information on whether to report RSSI between the second AP and OBSS STAs of the second AP.

For yet another example, in a case where the first AP requests the second AP to participate in the multi-AP coordinated transmission of the C-UL MU-MIMO scheme (i.e., the first target coordinated transmission scheme includes the C-UL MU-MIMO scheme), the target coordinated transmission command includes a coordinated transmission command corresponding to the C-UL MU-MIMO scheme.

In some embodiments of the present application, as shown in FIG. 4, the method 200 further includes:
receiving, by the first AP, a first response frame transmitted by the at least one second AP, where the first response frame is used to indicate whether the at least one second AP participates in a multi-AP coordinated transmission of the first target coordinated transmission scheme.

In some embodiments, the first response frame is also referred to as a coordinated transmission response (Coordinated TX Response) frame, or other similar names, which are not limited in the present application.

In some embodiments, the first response frame includes second indication information and/or target coordinated transmission information, the second indication information is used to indicate a second target coordinated transmission scheme, the second target coordinated transmission scheme is a coordinated transmission scheme in which the second AP participates, or in other words, a coordinated transmission scheme in which the second AP accepts to participate, and the target coordinated transmission information is coordinated transmission information corresponding to the second target coordinated transmission scheme.

That is, the second AP may respond whether to participate in the multi-AP coordinated transmission in which the first AP request to participate, by the first response frame. In a case of participating, the second AP may report related coordinated transmission information to the first AP, thereby enabling the unified multi-AP coordinated preparation process, which is conducive to reducing the complexity of the multi-AP coordinated transmission.

In some embodiments of the present application, the first AP may transmit the first request frame to the at least one second AP in a unicast, multicast or broadcast manner.

For example, as shown in FIG. 5, the first request frame may be transmitted by the first AP (e.g., AP1) to the at least one second AP (e.g., APm and APn) in a one-to-one sequence.

Further, the second APs that receive the first request frame may reply with the first response frame in sequence. For example, the second AP replies with the first response frame after a short interframe space (SIFS) since receiving the first request frame.

For another example, as shown in FIG. 6, the first request frame may be transmitted by the first AP (e.g., AP1) to the at least one second AP (e.g., APm and APn) in a multicast or broadcast manner.

Further, each second AP that receives the first request frame may synchronously reply with the first response frame. For example, each second AP simultaneously replies with the first response frame after the SIFS since receiving the first request frame.

That is, the at least one second AP may reply with the first response frame synchronously or asynchronously.

In some embodiments, the first request frame is included in an aggregate medium access control (MAC) protocol data unit (A-MPDU), and in a case where the at least one second AP synchronously transmits the first response frame, the A-MPDU further includes a trigger frame, and the trigger frame is used to allocate a transmission resource to the at least one second AP and trigger the at least one second AP to transmit the first response frame simultaneously.

In some embodiments, the second target coordinated transmission scheme may be a multi-AP coordinated transmission scheme in which the second AP accepts to participate, among the multi-AP coordinated transmission schemes in which the first AP requests the second AP to participate.

In some cases, the second target coordinated transmission scheme may include at least one of the following schemes:
a C-BF scheme, a C-OFDMA scheme, a C-SR scheme, a J-TX scheme, or a C-UL MU-MIMO scheme.

In some other embodiments, the second AP may not accept any multi-AP coordinated transmission scheme requested by the first AP. In this case, the second AP may not reply with the first response frame, or the second AP may reply with the first response frame, and the second indication information in the first response frame is used to indicate that the second AP does not accept to participate in any multi-AP coordinated transmission scheme. Optionally, in a case where the second AP does not accept to participate in any multi-AP coordinated transmission scheme, the first response frame may not include the target coordinated transmission information.

In some embodiments, in a case where the second target coordinated transmission scheme includes the C-OFDMA scheme, the target coordinated transmission information may be used to report a target RU or MRU selected by the second AP from the available RUs or MRUs provided by the first AP.

In some embodiments, in a case where the second target coordinated transmission scheme includes the C-BF scheme, the target coordinated transmission information may be used to report participation of STAs associated with the second AP in the multi-AP coordinated transmission of the C-BF scheme and/or to report CSI information.

In some embodiments, in a case where the second target coordinated transmission scheme includes the J-TX scheme, the target coordinated transmission information may be used to report participation of STAs associated with the second AP in the multi-AP coordinated transmission of the J-TX scheme and/or to report CSI information.

In some embodiments, in a case where the second target coordinated transmission scheme includes the C-UL MU-MIMO scheme, the target coordinated transmission information may be used to report participation of STAs associated with the second AP in the multi-AP coordinated transmission of the C-UL MU-MIMO scheme.

In some embodiments, in a case where the second target coordinated transmission scheme includes the C-SR scheme, the target coordinated transmission information may be used to report RSSI information of the STAs.

Method 1: the second indication information is indicated by a bitmap.

Optionally, in method 1, the number of bits occupied by the second indication information may be equal to the total number P of candidate multi-AP coordination schemes.

For example, the second indication information includes a plurality of bits, each bit corresponds to one of the multiple coordinated transmission schemes, and a value of the each bit is used to indicate whether the second AP participates in a corresponding coordinated transmission scheme. For example, the value of 1 indicates acceptance, and the value of 0 indicates non-acceptance, or the value of 1 indicates non-acceptance, and the value of 0 indicates acceptance.

Optionally, the second indication information may be 5 bits, respectively used to indicate whether to accept the C-BF scheme, C-OFDMA scheme, C-SR scheme, J-TX scheme and C-UL MU-MIMO scheme.

In Method 1, the second AP may indicate that the second AP accepts to participate in the multi-AP coordinated transmission of one or more schemes.

Method 2: different values of the second indication information are used to indicate different coordinated transmission schemes in which the second AP accepts to participate.

In Method 2, the number of bits occupied by the second indication information may be determined according to the total number P of the candidate multi-AP coordination schemes.

For example, if the candidate multi-AP coordination schemes include five multi-AP coordination schemes: the C-BF scheme, C-OFDMA scheme, C-SR scheme, J-TX scheme and C-UL MU-MIMO scheme, the second indication information may occupy 3 bits, and different values of the 3 bits are used to indicate the multi-AP coordinated transmission scheme in which the second AP accepts to participate, respectively.

As an example, the 3-bit value of 001 indicates acceptance of participating in the C-BF scheme, the value of 010 indicates acceptance of participating in the C-OFDMA scheme, the value of 011 indicates acceptance of participating in the C-SR scheme, the value of 100 indicates acceptance of participating in the J-TX scheme, and the value of 101 indicates acceptance of participating in the C-UL MU-MIMO scheme, where the values 000 and 110 to 111 are reserved values.

In some embodiments of the present application, the target coordinated transmission information includes at least one of the following information:
a list of STAs participating in the second target coordinated transmission scheme, an RU or MRU selected by the second AP, CSI between the second AP and the STAs, or RSSI between the second AP and the STAs.

It should be understood that in the embodiments of the present application, the list of STAs participating in the second target coordinated transmission scheme may be indicated by STA IDs (for example, association IDs (AIDs)), or may be indicated by a bitmap. For example, a bitmap may be used to indicate whether each AP in the multi-AP coordinated transmission set participates in a third target coordinated transmission scheme.

In some embodiments, the list of STAs participating in the second target coordinated transmission scheme may refer to a list of STAs participating in the second target coordinated transmission scheme and associated with the second AP.

Optionally, the list of STAs participating in the second target coordinated transmission scheme may include STA lists respectively corresponding to various coordinated transmission schemes in which the second AP accepts to participate, or may include only one STA list applicable to all coordinated transmission schemes accepted by the second AP.

For example, if the second target coordinated transmission scheme includes the C-BF scheme and the J-TX scheme, the target coordinated transmission information may include a list of STAs participating in the C-BF scheme and associated with the second AP, and a list of STAs participating in the J-TX scheme and associated with the second AP, or may also include only one STA list, indicating that the STAs participating in the C-BF scheme and associated with the second AP are the same as the STAs participating in the J-TX scheme and associated with the second AP.

In some embodiments, the CSI between the second AP and the STAs may refer to:

CSI between the second AP and the STAs (e.g., including associated STAs and/or OBSS STAs) participating in the second target coordinated transmission scheme.

In some other embodiments, the CSI between the second AP and the STAs may refer to:

CSI between the second AP and associated STAs and/or OBSS STAs (i.e., regardless of whether the STAs participate in the second target coordinated transmission scheme), for example, may include all CSI obtained by the second AP in a channel sounding phase.

In some embodiments, the RSSI between the second AP and the STAs may refer to:

RSSI between the second AP and the STAs (e.g., including associated STAs and/or OBSS STAs) participating in the second target coordinated transmission scheme.

In some other embodiments, the RSSI between the second AP and the STAs may refer to:

RSSI between the second AP and associated STAs and/or OBSS STAs (i.e., regardless of whether the STAs participate in the second target coordinated transmission scheme), for example, may include all RSSI obtained by the second AP in a channel sounding phase.

In some embodiments, in a case where the second target coordinated transmission scheme includes the C-BF scheme, the target coordinated transmission information includes coordinated transmission information corresponding to the C-BF scheme.

Optionally, the coordinated transmission information corresponding to the C-BF scheme includes at least one of:
a list of STAs participating in the C-BF scheme, CSI between the second AP and associated STAs participating in the C-BF scheme, or CSI between the second AP and OBSS STAs participating in the C-BF scheme.

Optionally, the coordinated transmission information corresponding to the C-BF scheme includes at least one of:
a list of STAs participating in the C-BF scheme, or CSI between the second AP and at least one STA, where the at least one CSI may include all CSI obtained by the second AP in the channel sounding phase. Optionally, the at least one STA may include an STA participating in the C-BF scheme and/or an STA not participating in the C-BF scheme.

In some embodiments, in a case where the second target coordinated transmission scheme includes the J-TX scheme, the target coordinated transmission information includes coordinated transmission information corresponding to the J-TX scheme, and the coordinated transmission information corresponding to the J-TX scheme includes at least one of:
a list of STAs participating in the J-TX scheme, CSI between the second AP and associated STAs participating in the J-TX scheme, or CSI between the second AP and OBSS STAs participating in the J-TX scheme.

Optionally, the coordinated transmission information corresponding to the J-TX scheme includes at least one of:
a list of STAs participating in the J-TX scheme, and CSI between the second AP and at least one STA, where the at least one CSI may include all CSI obtained by the second AP in the channel sounding phase. Optionally, the at least one STA may include an STA participating in the C-BF scheme and/or an STA not participating in the C-BF scheme.

In some embodiments, in a case where the second target coordinated transmission scheme includes the C-OFDMA scheme, the target coordinated transmission information includes coordinated transmission information corresponding to the C-OFDMA scheme, where the coordinated transmission information corresponding to the C-OFDMA scheme includes: an RU or MRU selected by the second AP.

In some embodiments, in a case where the second target coordinated transmission scheme includes the C-SR scheme, the target coordinated transmission information includes coordinated transmission information corresponding to the C-SR scheme.

Optionally, the coordinated transmission information corresponding to the C-SR scheme includes at least one of:
a list of STAs participating in the C-SR scheme, RSSI between the second AP and associated STAs participating in the C-RS scheme, or RSSI between the second AP and OBSS STAs participating in the C-RS scheme.

Optionally, the coordinated transmission information corresponding to the C-SR scheme includes at least one of:
a list of STAs participating in the C-SR scheme, or RSSI between the second AP and at least one STA, where the at least one RSSI may include all RSSI obtained by the second AP in the channel sounding phase. Optionally, the at least one STA may include an STA participating in the C-BF scheme and/or an STA not participating in the C-BF scheme.

In some embodiments, in a case where the second target coordinated transmission scheme includes the C-UL MU-MIMO scheme, the target coordinated transmission information includes coordinated transmission information corresponding to the C-UL MU-MIMO scheme.

Optionally, in some embodiments of the present application, as shown in FIG. 4, the method 200 further includes:

S230, transmitting, by the first AP, a first announce frame to at least one third AP, where the first announce frame is used to announce coordinated transmission parameters used by APs participating in a coordinated transmission.

In some embodiments, the first announce frame is also referred to as a coordinated transmission announce (Coordinated TX Announce) frame, or other similar names, which are not limited in the present application.

In some embodiments, the at least one third AP may be a second AP participating in the first target coordination scheme among the at least one second AP.

In some embodiments, the first announce frame includes first announce information, and the first announce information includes at least one of:

third indication information, used to indicate a third target coordinated transmission scheme, where the third target coordinated transmission scheme is a coordinated transmission scheme determined to be adopted by the first AP;
a list of APs participating in the third target coordinated transmission scheme; or
a target coordinated transmission parameter, used to indicate coordinated transmission parameters corresponding to the third target coordinated transmission scheme.

That is, the first AP may announce the multi-AP coordinated transmission scheme adopted by the second AP participating in the multi-AP coordinated transmission and related coordinated transmission parameters, by the first announce frame, thereby enabling the unified multi-AP coordinated preparation process, which is conducive to reducing the complexity of the multi-AP coordinated transmission.

In some embodiments, the third target coordinated transmission scheme is the same as the first target coordinated transmission scheme, or may be different. For example, the third target coordinated transmission scheme includes a part of the coordinated transmission schemes in the first target coordinated transmission scheme, or the third target coordinated transmission scheme includes the coordinated transmission schemes in which the second AP accepts to participate, in the first target coordinated transmission scheme.

In some embodiments, the third target coordinated transmission scheme may include at least one of the following schemes:
a C-BF scheme, a C-OFDMA scheme, a C-SR scheme, a J-TX scheme, or a C-UL MU-MIMO scheme.

In some embodiments, in a case where the third target coordinated transmission scheme includes the C-OFDMA scheme, the target coordinated transmission parameter may be used to indicate an RU or MRU determined by the first AP and allocated to the second AP.

In some embodiments, in a case where the third target coordinated transmission scheme includes the C-BF scheme, the target coordinated transmission parameter may be used to announce information of APs and STAs participating in the multi-AP coordinated transmission of the C-BF scheme, and/or steering matrix information used by the APs participating in the multi-AP coordinated transmission of the C-BF scheme.

In some embodiments, in a case where the third target coordinated transmission scheme includes the J-TX scheme, the target coordinated transmission parameter may be used to steering matrix information used by APs participating in the multi-AP coordinated transmission of the J-TX scheme.

In some embodiments, in a case where the third target coordinated transmission scheme includes the C-UL MU-MIMO scheme, the target coordinated transmission parameter may be used to announce a spatial stream (SS) of APs participating in the multi-AP coordinated transmission of the C-UL MU-MIMO scheme.

In some embodiments, in a case where the third target coordinated transmission scheme includes the C-SR scheme, the target coordinated transmission parameter may be used to transmission power information used by APs participating in the multi-AP coordinated transmission of the C-SR scheme.

In some embodiments of the present application, the steering matrix information used by the APs participating in the multi-AP coordinated transmission of the C-BF scheme may be calculated by the APs participating in the C-BF scheme. In this case, the first AP may not need to announce the steering matrix used by each AP participating in the C-BF scheme by the first announce frame. Each AP participating in the C-BF scheme may use the steering matrix determined by itself to perform the multi-AP coordinated transmission. Optionally, the AP participating in the C-BF scheme may determine according to the information of APs and STAs participating in the multi-AP coordinated transmission of the C-BF scheme announced in the first announce frame. For example, the AP participating in the C-BF scheme may eliminate CSI between this AP and STAs not participating in the C-BF scheme (including STAs not participating in the C-BF scheme and associated with this AP, and CSI between this AP and OBSS STAs not participating in the C-BF scheme) from all CSI obtained in the channel sounding phase, and further, determine the steering matrix used by this AP based on the remaining CSI.

In some other embodiments of the present application, the steering matrix information used by the AP participating in the multi-AP coordinated transmission of the C-BF scheme may be calculated by the first AP. In this case, the first AP may need to announce the steering matrix used by each AP participating in the C-BF scheme by the first announce frame. Furthermore, each AP participating in the C-BF scheme may use the steering matrix announced by the first announce frame to perform the multi-AP coordinated transmission. Optionally, the first AP may determine according to information of APs and STAs participating in the multi-AP coordinated transmission of the C-BF scheme and CSI information reported in the first response frame transmitted by each second AP. The specific determination method is similar and will not be repeated here.

In some embodiments, the target coordinated transmission parameter includes at least one of:
a coordinated transmission parameter used for the C-BF scheme;
a coordinated transmission parameter used for the C-OFDMA scheme;
a coordinated transmission parameter used for the C-SR scheme;
a coordinated transmission parameter used for the J-TX scheme; or
a coordinated transmission parameter used for the C-UL-MU-MIMO scheme.

For example, in a case where the third target coordinated transmission scheme includes the C-BF scheme, the target coordinated transmission parameter includes the coordinated transmission parameter used for the C-BF scheme.

For another example, in a case where the third target coordinated transmission scheme includes the C-OFDMA scheme, the target coordinated transmission parameter includes the coordinated transmission parameter used for the C-OFDMA scheme.

For another example, in a case where the third target coordinated transmission scheme includes the C-SR scheme, the target coordinated transmission parameter includes the coordinated transmission parameter used for the C-SR scheme.

For another example, in a case where the third target coordinated transmission scheme includes the J-TX scheme, the target coordinated transmission parameter includes the coordinated transmission parameter used for the J-TX scheme.

For another example, in a case where the third target coordinated transmission scheme includes the C-UL-MU-MIMO scheme, the target coordinated transmission parameter includes the coordinated transmission parameter used for the C-UL-MU-MIMO scheme.

In some embodiments, the coordinated transmission parameter used for the C-BF scheme includes:
a list of APs participating in the C-BF scheme, and a transmission matrix (Tx matrix) or a transmitting matrix or a steering matrix used for each AP participating in the C-BF scheme.

In some embodiments, the coordinated transmission parameter used for the J-TX scheme includes:
a list of APs participating in the J-TX scheme, and a transmission matrix (Tx matrix) or a transmitting matrix or a steering matrix used for each AP participating in the J-TX scheme.

In some embodiments, the coordinated transmission parameter used for the C-OFDMA scheme includes:
a list of APs participating in the C-OFDMA scheme, or an RU/MRU used for each AP participating in the C-OFDMA scheme.

In some embodiments, the coordinated transmission parameter used for the C-SR scheme includes:
a list of APs participating in the C-SR scheme, and transmitting power used for each AP participating in the C-SR scheme.

In some embodiments, the coordinated transmission parameter used for the C-UL-MU-MIMO scheme includes: a list of APs participating in the C-UL-MU-MIMO scheme, and spatial stream (SS) allocation information used for each AP participating in the C-UL-MU-MIMO scheme.

Optionally, a list of STAs participating in the third target coordinated transmission scheme may include AP lists corresponding to APs participating in various coordinated transmission schemes respectively, or may also include only one AP list applicable to all coordinated transmission schemes.

For example, in a case where the third target coordinated transmission scheme includes the C-BF scheme and the J-TX scheme, the target coordinated transmission parameter may include AP lists corresponding to the C-BF scheme and the J-TX scheme respectively, or the same AP list may be shared.

It should be understood that in the embodiments of the present application, the list of APs participating in the third target coordinated transmission scheme may be indicated by AP IDs, or may be indicated by a bitmap. For example, the bitmap may be used to indicate whether each AP in the multi-AP coordinated transmission set participates in the third target coordinated transmission scheme.

In some embodiments, after receiving the first response frame of the second AP, the first AP may announce the multi-AP coordinated parameter used for participating in the multi-AP coordinated transmission of the third target coordinated transmission scheme to the second AP participating in the third target coordinated transmission scheme, by the first announce frame.

As shown in FIG. 5 and FIG. 6, after the second AP replies with the first response frame, the first AP may announce the multi-AP coordinated transmission parameters used for the multi-AP coordinated transmission to the second AP participating in the third target coordinated transmission scheme, by the first announce frame.

Optionally, in the preparation phase, the first AP may also not transmit the first announce frame to the second AP participating in the third target coordinated transmission scheme, but instead, in the coordinated transmission phase, carry the first announce information by an MAP transmission trigger frame, where the MAP transmission trigger frame is used to trigger the multi-AP coordinated transmission of the third target coordinated transmission scheme.

Optionally, in some embodiments, in a case where the third target coordinated transmission scheme includes the J-TX scheme, the coordinated preparation phase may further include a channel sounding step and a data transmission step, where in the channel sounding step, the sharing AP may initiate a joint or sequential channel sounding, and the sharing AP or MAP may collect all CSI. In the data transmission step, the sharing AP may transmit the collected CSI data to the shared AP, and the shared AP may confirm it.

Optionally, in some embodiments, in a case where the third target coordinated transmission scheme includes the C-SR scheme, the coordinated preparation phase may further include an RSSI request step and an RSSI report step, where in the RSSI request step, the shared AP may request STA device RSSI, such as RSSI between the STA and the associated AP or neighboring AP. In the RSSI report step, the STA may report RSSI information to the associated AP.

In some embodiments, the first request frame may be implemented by a control frame, or may also be implemented by a trigger frame, which is not limited in the present application.

In some embodiments, the first response frame is implemented by the control frame, or may also be implemented by a management frame, or for example, implemented by a quality of service (Quality-of-Service, QoS) null frame, such as implemented by the QoS null frame carrying a high throughput control (HT Control) field.

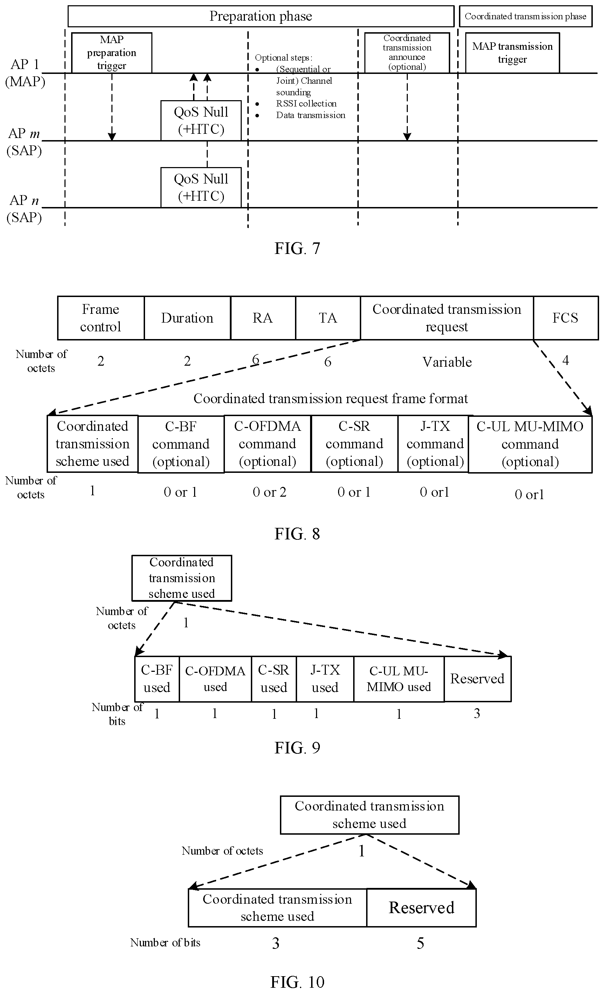

As shown in FIG. 7, the first AP (i.e., AP1) transmits an MAP preparation trigger frame to the second AP (e.g., APm and APn). The second AP, after receiving the MAP preparation trigger frame, replies with a QoS null frame carrying the HT control field at the same time after the SIFS time. Further, optionally, the first AP may announce the multi-AP coordinated transmission parameter used for the multi-AP coordinated transmission to the second AP participating in the multi-AP coordinated transmission, by the first announce frame.

It should be understood that in the examples of FIG. 5 to FIG. 7, the coordinated TX request frame or MAP preparation trigger frame transmitted by the sharing AP and the coordinated TX response frame or QoS null frame replied by the shared AP may be arbitrarily combined. For example, in a case where the sharing AP transmits the coordinated TX request frame, the shared AP may also reply with the QoS null frame; in a case where the sharing AP transmits the MAP preparation trigger frame, the shared AP may also reply with the coordinated TX response frame, which is not limited to the corresponding relationships shown in FIG. 5 to FIG. 7.

Below, in combination with FIG. 8 to FIG. 49, the design of frame formats of the first request frame, the first response frame and the first announce frame is illustrated.

It should be understood that information carried in the frame formats, as well as a position, size and name of each field in the frame formats illustrated in FIG. 8 to FIG. 49 are merely examples, which may be flexibly adjusted according to actual needs or the information carried, which are not limited in the present application.

In some embodiments of the present application, the first request frame may be implemented by a control frame. For example, the first request frame may be a newly defined control frame.

In combination with FIG. 8 to FIG. 28, the design of the frame structure of the first request frame is described.

In some embodiments, in a case where the first request frame is implemented by the control frame, the first request frame is also referred to as a coordinated transmission request frame.

FIG. 8 is a schematic frame format diagram of a coordinated transmission request frame provided in the embodiments of the present application.

As shown in FIG. 8, the coordinated transmission request frame may include the following domains (or fields):

frame control (occupying 2 octets), duration (occupying 2 octets), receiving address (RA) (occupying 6 octets), transmission address (TA) (occupying 6 octets), coordinated TX request (occupying a variable number of octets), frame check sequence (FCS, occupying 4 octets).

In some embodiments, the coordinated transmission request field is used to carry the first indication information and/or the target coordinated transmission command.

In some embodiments, as shown in FIG. 8, the coordinated transmission request field includes at least one of the following fields:
a coordinated transmission scheme used field (Coordinated TX Scheme Used field), used to indicate a coordinated transmission scheme in which the first AP requests the second AP to participate, that is, to carry the aforementioned first indication information;
a C-BF command field, used to indicate a coordinated transmission command corresponding to a C-BF scheme;
a C-OFDMA command field, used to indicate a coordinated transmission command corresponding to a C-OFDMA scheme;
a C-SR command field, used to indicate a coordinated transmission command corresponding to a C-SR scheme;
a J-TX command field, used to indicate a coordinated transmission command corresponding to a J-TX scheme; or
a C-UL MU-MIMO command field, used to indicate a coordinated transmission command corresponding to a C-UL MU-MIMO scheme.

In some embodiments, as shown in FIG. 9, the Coordinated TX Scheme Used field includes at least one of the following fields:
a C-BF used field, to indicate whether to request to use the multi-AP coordinated transmission of the C-BF scheme;
a C-OFDMA used field, to indicate whether to request to use the multi-AP coordinated transmission of the C-OFDMA scheme;
a C-SR used field, to indicate whether to request to use the multi-AP coordinated transmission of the C-SR scheme;
a J-TX used field, to indicate whether to request to use the multi-AP coordinated transmission of the J-TX scheme; or
a C-UL MU MIMO used field, to indicate whether to request to use the multi-AP coordinated transmission of the C-UL MU MIMO scheme.

Optionally, the value of the C-BF used field being 1, indicates that the shared AP is requested to perform the multi-AP coordinated transmission of the C-BF scheme, in this case, the coordinated transmission request frame includes the C-BF command field. The value of the C-BF used field being 0, indicates that the shared AP is not requested to perform the multi-AP coordinated transmission of the C-BF scheme, in this case, the coordinated transmission request frame does not include the C-BF command field.

Optionally, the value of the C-OFDMA used field being 1, indicates that the shared AP is requested to perform the multi-AP coordinated transmission of the C-OFDMA scheme, in this case, the coordinated transmission request frame includes the C-OFDMA command field. The value of the C-OFDMA used field being 0, indicates that the shared AP is not requested to perform the multi-AP coordinated transmission of the C-OFDMA scheme, in this case, the coordinated transmission request frame does not include the C-OFDMA command field.

Optionally, the value of the C-SR used field being 1, indicates that the shared AP is requested to perform the multi-AP coordinated transmission of the C-SR scheme, in this case, the coordinated transmission request frame includes the C-SR command field. The value of the C-SR used field being 0, indicates that the shared AP is not requested to perform the multi-AP coordinated transmission of the C-SR scheme, in this case, the coordinated transmission request frame does not include the C-SR command field.

Optionally, the value of the J-TX used field being 1, indicates that the shared AP is requested to perform the multi-AP coordinated transmission of the J-TX scheme, in this case, the coordinated transmission request frame includes the J-TX command field. The value of the J-TX used field being 0, indicates that the shared AP is not requested to perform the multi-AP coordinated transmission of the J-TX scheme, in this case, the coordinated transmission request frame does not include the J-TX command field.

Optionally, the value of the C-UL MU-MIMO used field being 1, indicates that the shared AP is requested to perform the multi-AP coordinated transmission of the C-UL MU-MIMO scheme, in this case, the coordinated transmission request frame includes the C-UL MU-MIMO command field. The value of the C-UL MU-MIMO used field being 0, indicates that the shared AP is not requested to perform the multi-AP coordinated transmission of the C-UL MU-MIMO scheme, in this case, the coordinated transmission request frame does not include the C-UL MU-MIMO command field.

In some embodiments, as shown in FIG. 10, the Coordinated TX Scheme Used field includes:
a coordinated transmission scheme used subfield (Coordinated TX Scheme Used subfield), used to indicate the coordinated transmission scheme in which the first AP requests the at least one second AP to participate.

Optionally, the Coordinated TX Scheme Used field may be 8 bits, the Coordinated TX Scheme Used subfield may be 3 bits, and the remaining 5 bits are reserved bits. Herein, different values of the 3 bits are used to indicate different coordinated transmission schemes requested by the first AP to be used.

As an example, the 3-bit value of 001 indicates to request to participate in the C-BF scheme, the value of 010 indicates to request to participate in the C-OFDMA scheme, the value of 011 indicates to request to participate in the C-SR scheme, the value of 100 indicates to request to participate in the J-TX scheme, and the value of 101 indicates to request to participate in the C-UL MU-MIMO scheme, where the values 000 and 110 to 111 are reserved values.

Optionally, in a case where the 3 bits indicate to request the C-BF scheme, the coordinated transmission request frame includes the C-BF command field, or in a case where the 3 bits indicate to request the C-OFDMA scheme, the coordinated transmission request frame includes the C-OFDMA command field, or in a case where the 3 bits indicate to request the C-SR scheme, the coordinated transmission request frame includes the C-SR command field, or in a case where the 3 bits indicate to request the J-TX scheme, the coordinated transmission request frame includes the J-TX command field, or in a case where the 3 bits indicate to request the C-UL MU-MIMO scheme, the coordinated transmission request frame includes the C-UL MU-MIMO command field.

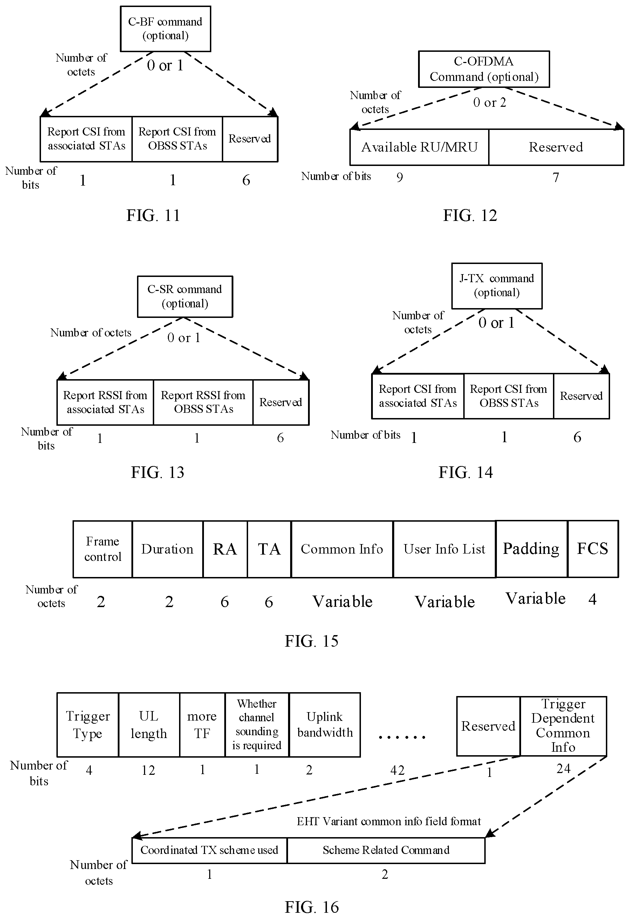

In some embodiments, as shown in FIG. 11, the C-BF command field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In some embodiments, the C-BF command field may be 8 bits, the report CSI from associated STAs field may be 1 bit, the report CSI from OBSS STAs field may be 1 bit, and the remaining 6 bits are reserved bits.

Optionally, the report CSI from associated STAs field is set to 1, to indicate that the shared AP needs to report the CSI between the shared AP and the associated STAs, and set to 0, to indicate that the shared AP does not need to report the CSI between the shared AP and the associated STAs.

Optionally, the report CSI from OBSS STAs field is set to 1, to indicate that the shared AP needs to report the CSI between the shared AP and the associated STAs, and set to 0, to indicate that the shared AP does not need to report the CSI between the shared AP and the associated STAs.

In some embodiments, as shown in FIG. 12, the C-OFDMA command field includes:
an available RU/MRU field, used to indicate an RU or MRU shared by the first AP to the at least one second AP.

Optionally, the C-OFDMA command field may be 0 or 2 octets.

Optionally, the available RU/MRU field may be 9 bits.

In some embodiments, as shown in FIG. 13, the C-SR command field includes at least one of the following fields:
a report RSSI from associated STAs field (Report CSI from Associated STAs), used to indicate whether to report RSSI between the second AP and associated STAs; or
a report RSSI from OBSS STAs field (Report CSI from OBSS STAs), used to indicate whether to report RSSI between the second AP and OBSS STAs.

In some embodiments, the C-SR command field may be 8 bits, the Report CSI from Associated STAs field may be 1 bit, the Report CSI from OBSS STAs field may be 1 bit, and the remaining 6 bits are reserved bits.

Optionally, the Report CSI from Associated STAs is set to 1, to indicate that the shared AP needs to report CSI between the shared AP and associated STAs, and set to 0, to indicate that the shared AP does not need to report CSI between the shared AP and associated STAs.

Optionally, the Report CSI from OBSS STAs is set to 1, to indicate that the shared AP needs to report RSSI between the shared AP and OBSS STAs, and set to 0, to indicate that the shared AP does not need to report RSSI between the shared AP and OBSS STAs.

In some embodiments, as shown in FIG. 14, the J-TX command field includes at least one of the following fields:
a report CSI from associated STAs (Report CSI from Associated STAs) field, used to indicate whether to report CSI between the second AP and associated STAs; or
a report CSI from OBSS STAs (Report CSI from OBSS STAs) field, used to indicate whether to report CSI between the second AP and OBSS STAs.

In some embodiments, the J-TX command field may be 8 bits, the Report CSI from Associated STAs field may be 1 bit, the Report CSI from OBSS STAs field may be 1 bit, and the remaining 6 bits are reserved bits.

Optionally, the Report CSI from Associated STAs field is set to 1, to indicate that the shared AP needs to report CSI between the shared AP and associated STAs, and set to 0, to indicate that the shared AP does not need to report CSI between the shared AP and associated STAs.

Optionally, the Report CSI from OBSS STAs field is set to 1, to indicate that the shared AP needs to report CSI between the shared AP and OBSS STAs, and set to 0, to indicate that the shared AP does not need to report CSI between the shared AP and OBSS STAs.

In some other embodiments of the present application, the first request frame may be implemented by a trigger frame. For example, the first request frame may be implemented by an existing trigger frame format, or a trigger frame may be defined newly. For example, a trigger frame type is defined newly to indicate that the trigger frame is used to request to participate in the multi-AP coordinated transmission or to trigger preparation for the multi-AP coordinated transmission.

In some embodiments, in a case where the first request frame is implemented by the trigger frame, the first request frame is also referred to as a multi-AP preparation trigger frame.

FIG. 15 is a schematic diagram of a frame format of a trigger frame.

As shown in FIG. 15, the following domains (or fields) may be included:
frame control (occupying 2 octets), duration (occupying 2 octets), receiving address (RA) (occupying 6 octets), transmission address (TA) (occupying 6 octets), common information (Common Info, occupying a variable number of octets), user information list (User Info List, occupying a variable number of octets), and FCS (occupying 4 octets).

In some embodiments, the User Info List field may include at least one user information (User Info) field.

In some embodiments, the first indication information is carried in the Common Info field or the User Info field in the trigger frame.

In some embodiments, the target coordinated transmission command is carried in the Common Info field or the User Info field in the trigger frame.

In some embodiments, a trigger frame type (Trigger Type) field in the Common Info field may be used to indicate that the trigger frame is used to request the at least one second AP to participate in the multi-AP coordinated transmission of the first target coordinated transmission scheme. For example, a value of the Trigger Type field is a first value, to indicate that the trigger frame is used to request the at least one second AP to participate in the multi-AP coordinated transmission of the first target coordinated transmission scheme, where the first value is a reserved value of the Trigger Type field, such as 8.

In some embodiments, an AID12 field in the User Info field may be used to indicate that the trigger frame is used to request the at least one second AP to participate in the multi-AP coordinated transmission of the first target coordinated transmission scheme. For example, a value of the AID12 field is a reserved value of the AID12 field, such as 2045.

Case 1: the first indication information and the target coordinated transmission command are carried by the Common Info field.

FIG. 16 is a schematic diagram of a frame format for carrying the first indication information and the target coordinated transmission command by the Common Info field in the trigger frame.

As shown in FIG. 16, the Common Info field may include a trigger frame type dependent common information (Trigger Dependent Common Info) field, and the first indication information and the target coordinated transmission command are carried in the Trigger Dependent Common Info field.

In some embodiments, as shown in FIG. 16, the trigger frame type (Trigger Type) field in the Common Info field may be used to indicate that the trigger frame is used to request the at least one second AP to participate in the multi-AP coordinated transmission of the first target coordinated transmission scheme. For example, a value of the Trigger Type field is a first value, to indicate that the trigger frame is used to request the at least one second AP to participate in the multi-AP coordinated transmission of the first target coordinated transmission scheme, where the first value is a reserved value of the Trigger Type field, such as 8.

Herein, the Trigger Dependent Common Info field includes at least one of the following fields:
a coordinated transmission scheme used (Coordinated TX Scheme Used) field, used to indicate the coordinated transmission scheme in which the first AP requests the second AP to participate; or
a coordinated transmission scheme related command (Scheme Related Command) field, used to indicate the coordinated transmission command corresponding to the first target coordinated transmission scheme.

Optionally, the coordinated transmission scheme used (Coordinated TX Scheme Used) field may be designed in the format of FIG. 9 or FIG. 10, which will not be repeated here for the sake of brevity.

In some embodiments, the coordinated transmission scheme related command (Scheme Related Command) field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, the specific fields included in the Scheme Related Command field are related to the coordinated transmission scheme indicated by the Coordinated TX Scheme Used field.

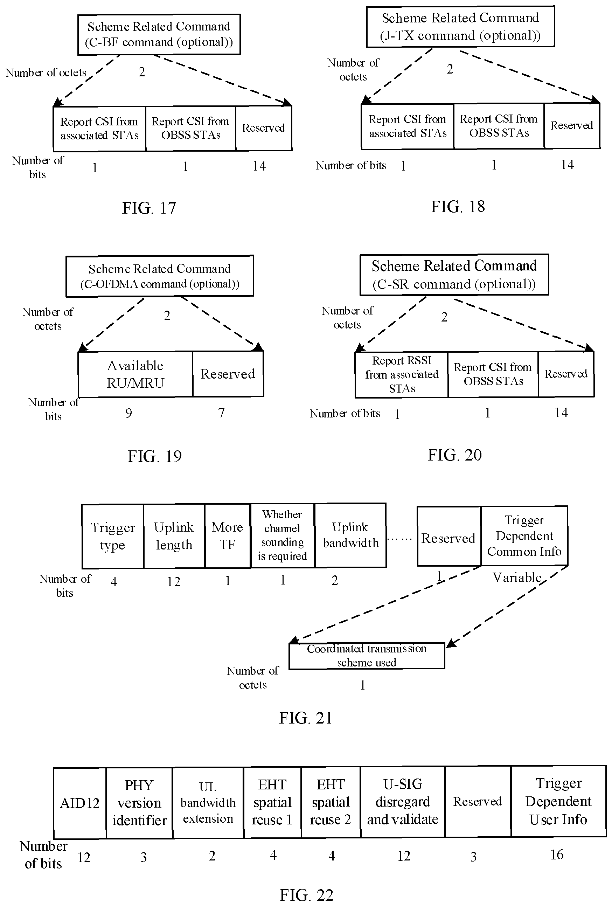

As shown in FIG. 17, in a case where the first target coordinated transmission scheme includes the C-BF scheme, the Scheme Related Command field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

As shown in FIG. 18, in a case where the first target coordinated transmission scheme includes the J-TX scheme, the Scheme Related Command field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

As shown in FIG. 19, in a case where the first target coordinated transmission scheme includes the C-OFDMA scheme, the Scheme Related Command field includes:
an available RU/MRU field, used to indicate an RU or MRU shared by the first AP to the at least one second AP.

As shown in FIG. 20, in a case where the first target coordinated transmission scheme includes the C-SR scheme, the Scheme Related Command field includes at least one of the following fields:
a report RSSI from associated STAs field, used to indicate whether to report RSSI between the second AP and associated STAs; or
a report CSI from OBSS STAs field, used to indicate whether to report RSSI between the second AP and OBSS STAs.

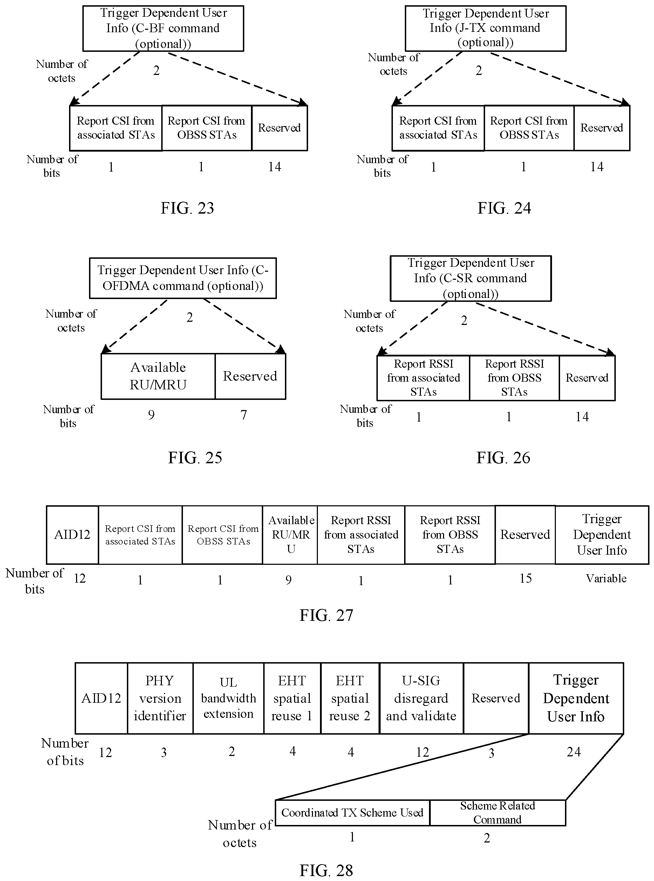

It should be understood that FIG. 17 to FIG. 20 illustrate the format design of the Scheme Related Command field only by taking an example in which the first target coordinated transmission scheme includes one coordinated transmission scheme. In a case where the first target coordinated transmission scheme includes a plurality of coordinated transmission schemes, the Scheme Related Command field may include more fields, for example, the Scheme Related Command field may adopt the format design shown in FIG. 27.

Case 2: the first indication information is carried by the Common Info field, and the target coordinated transmission command is carried by the User Info field.

Optionally, the target coordinated transmission command may be carried by an existing User Info field, or a User Info field may be defined newly to carry the target coordinated transmission command, which is not limited in the present application.

Case 2-1: the first indication information is carried by the Common Info field, and the target coordinated transmission command is carried by a special user information field (Special User Info field).

FIG. 21 is a schematic diagram of a frame format for carrying first indication information by a Common Info field in a trigger frame. For example, the first indication information is carried by the Trigger Dependent Common Info field in the Common Info field.

In some embodiments, as shown in FIG. 21, the trigger frame type (Trigger Type) field in the Common Info field may be used to indicate that the trigger frame is used to request the at least one second AP to participate in the multi-AP coordinated transmission of the first target coordinated transmission scheme. For example, a value of the Trigger Type field is a first value, to indicate that the trigger frame is used to request the at least one second AP to participate in the multi-AP coordinated transmission of the first target coordinated transmission scheme, where the first value is a reserved value of the Trigger Type field, such as 8.

As shown in FIG. 21, the Trigger Dependent Common Info field includes:
a coordinated transmission scheme used (Coordinated TX Scheme Used) field, used to indicate the coordinated transmission scheme in which the first AP requests the second AP to participate.

Optionally, the coordinated transmission scheme used (Coordinated TX Scheme Used) field may be designed in the format of FIG. 9 or FIG. 10, which will not be repeated here for the sake of brevity.

FIG. 22 is a schematic diagram of a frame format of a Special User Info field.

For example, the target coordinated transmission command is carried by the Trigger Dependent User Info field in the Special User Info field.

As shown in FIG. 22, the Special User Info field includes an AID12 field, and a value of the AID12 field is a second value, to indicate that the first request frame is used to request the at least one second AP to participate in the multi-AP coordinated transmission of the first target coordinated transmission scheme, and the second value is a reserved value of the AID12 field, such as 2045.

Optionally, the length of the Special User Info field may be 40 bits.

In some embodiments, the Trigger Dependent User Info field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, the specific fields included in the Trigger Dependent User Info field are related to the coordinated transmission scheme indicated by the Trigger Dependent Common Info field in the Common Info field.

In the case where the coordinated transmission scheme indicated by the Coordinated TX Scheme Used field includes the C-BF scheme, as shown in FIG. 23, the Trigger Dependent User Info field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In the case where the coordinated transmission scheme indicated by the Coordinated TX Scheme Used field includes the J-TX scheme, as shown in FIG. 24, the Trigger Dependent User Info field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In the case where the coordinated transmission scheme indicated by the Coordinated TX Scheme Used field includes the C-OFDMA scheme, as shown in FIG. 25, the Trigger Dependent User Info field includes:
an available RU/MRU field, used to indicate an RU or MRU shared by the first AP to the at least one second AP.

In the case where the coordinated transmission scheme indicated by the Coordinated TX Scheme Used field includes the C-SR scheme, as shown in FIG. 26, the Trigger Dependent User Info field includes at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

It should be understood that FIG. 23 to FIG. 26 only illustrate the format design of the Trigger Dependent User Info field by taking an example in which the first target coordinated transmission scheme includes one coordinated transmission scheme. In a case where the first target coordinated transmission scheme includes a plurality of coordinated transmission schemes, it may include more fields, for example, the Scheme Related Command field may adopt the format design shown in FIG. 27.

Case 2-2: The first indication information is carried by the Common Info field, and the target coordinated transmission command is carried by the newly defined User Info field. For example, a multi-AP user information field (Multi-AP User Info field) is newly defined, to carry the target coordinated transmission command.

In Case 2-2, the first indication information may be carried by the Trigger Dependent Common Info field in the Common Info field. For example, the frame format diagram shown in FIG. 21 may be adopted. For the specific implementations, please refer to the related description of FIG. 21, which will not be repeated here for the sake of brevity.

FIG. 27 is a schematic format diagram of a Multi-AP User Info field provided in the embodiments of the present application.

As shown in FIG. 27, the Multi-AP User Info field may include an AID12 field, a value of the AID12 field is a third value, to indicate that the first request frame is used to request the at least one second AP to participate in the multi-AP coordinated transmission of the first target coordinated transmission scheme, and the third value is a reserved value of the AID12 field, such as 2045.

As shown in FIG. 27, the Multi-AP User Info field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

Case 3: both the first indication information and the target coordinated transmission command are carried by the User Info field.

For example, the first indication information and the target coordinated transmission command may be carried by the Trigger Dependent User Info field in the User Info field.

FIG. 28 is a schematic diagram of a frame format of a User Info field provided in the embodiments of the present application.

As shown in FIG. 28, the User Info field includes an AID12 field, and a value of the AID12 field is a second value, to indicate that the first request frame is used to request the at least one second AP to participate in the multi-AP coordinated transmission of the first target coordinated transmission scheme, and the second value is a reserved value of the AID12 field, such as 2045.

Optionally, the length of the User Info field may be 40 bits.

In some embodiments, as shown in FIG. 28, the Trigger Dependent User Info field includes at least one of the following fields:
a coordinated transmission scheme used (Coordinated TX Scheme Used) field, used to indicate the coordinated transmission scheme in which the first AP requests the second AP to participate; or
a coordinated transmission scheme related command (Scheme Related Command) field, used to indicate the coordinated transmission command corresponding to the first target coordinated transmission scheme.

Optionally, the design of the Coordinated TX Scheme Used field and the Scheme Related Command field refers to the format design of the Coordinated TX Scheme Used field and the Scheme Related Command field in FIG. 16, which will not be repeated here for the sake of brevity.

It should be understood that the meanings of the Coordinated TX Scheme Used field and its various subfields, and the coordinated transmission command field and its various subfields in FIG. 16 to FIG. 28, refer to the explanations of the corresponding fields in FIG. 8 to FIG. 14, which will not be repeated here for the sake of brevity.

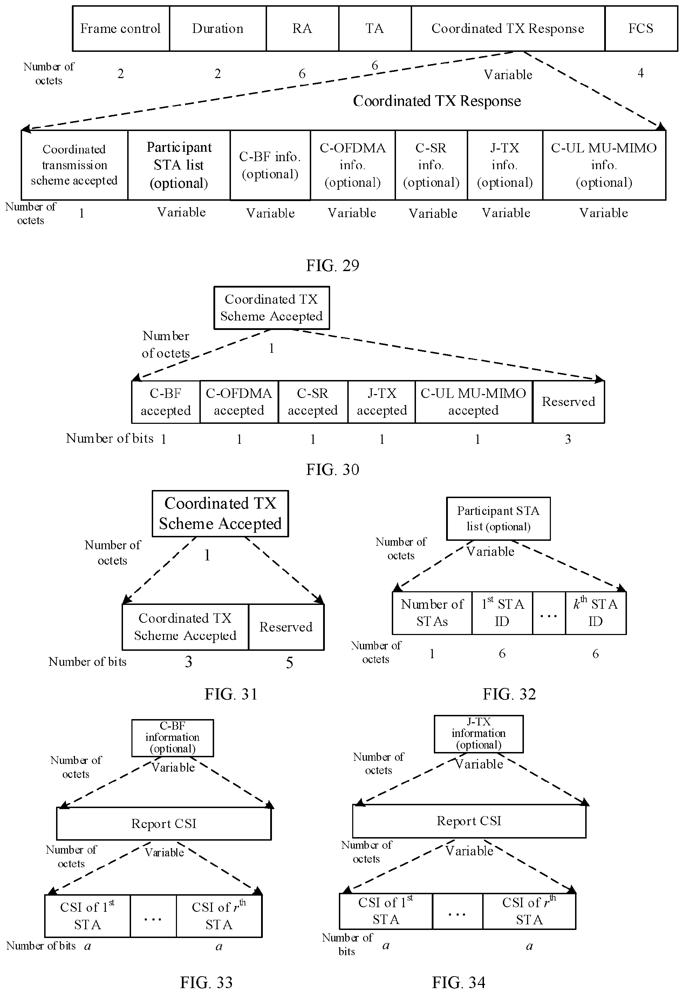

In combination with FIG. 29 to FIG. 41, the frame structure design of the first response frame is illustrated.

FIG. 29 shows a schematic diagram of an example frame format of a coordinated transmission response frame implemented by a control frame.

As shown in FIG. 29, the following domains (or fields) may be included:

frame control (occupying 2 octets), duration (occupies 2 octets), receiving address (RA, occupying 6 octets), transmission address (TA, occupying 6 octets), coordinated transmission response (Coordinated TX Response, occupying a variable number of octets), and FCS (occupying 4 octets).

In some embodiments, the first response frame includes a coordinated transmission response field, and the second indication information and/or the target coordinated transmission information are carried in the coordinated transmission response field.

In some embodiments, as shown in FIG. 29, the Coordinated TX Response field includes at least one of the following fields:
a coordinated transmission scheme accepted field (Coordinated TX Scheme Accepted field), used to indicate the coordinated transmission scheme in which the second AP participates;
a participant STA list field (Participant STA List field), used to indicate STAs participating in the second target coordinated transmission scheme;
a C-BF information field (C-BF Info. field), used to indicate coordinated transmission information corresponding to a C-BF scheme;
a C-OFDMA information field (C-OFDMA Info. field), used to indicate coordinated transmission information corresponding to a C-OFDMA scheme;
a C-SR information field (C-SR Info. field), used to indicate coordinated transmission information corresponding to a C-SR scheme;
a J-TX information field (J-TX Info. field), used to indicate coordinated transmission information corresponding to a J-TX scheme; or
a C-UL MU-MIMO information field (C-UL MU-MIMO Info. field), used to indicate coordinated transmission information corresponding to a C-UL MU-MIMO scheme.
In some embodiments, as shown in FIG. 30, the Coordinated TX Scheme Accepted field includes at least one of the following fields:
a C-BF accepted field, used to indicate whether the multi-AP coordinated transmission of the C-BF scheme is accepted;
a C-OFDMA accepted field, used to indicate whether the multi-AP coordinated transmission of the C-OFDMA scheme is accepted;
a C-SR accepted field, used to indicate whether the multi-AP coordinated transmission of the C-SR scheme is accepted;
a J-TX accepted field, used to indicate whether a multi-AP coordinated transmission of the J-TX scheme is accepted; or
a C-UL MU-MIMO accepted field, used to indicate whether the multi-AP coordinated transmission of the C-UL MU MIMO scheme is accepted.

Optionally, the value of the C-BF accepted field being 1, indicates that the multi-AP coordinated transmission of the C-BF scheme is accepted, in this case, the coordinated transmission response frame includes the C-BF information field. The value of the C-BF accepted field being 0, indicates that the multi-AP coordinated transmission of the C-BF scheme is rejected, in this case, the coordinated transmission response frame does not include the C-BF information field.

Optionally, the value of the C-OFDMA accepted field being 1, indicates that the multi-AP coordinated transmission of the C-OFDMA scheme is accepted, in this case, the coordinated transmission response frame includes the C-OFDMA information field. The value of the C-OFDMA accepted field being 0, indicates that the multi-AP coordinated transmission of the C-OFDMA scheme is rejected, in this case, the coordinated transmission response frame does not include the C-OFDMA information field.

Optionally, the value of the C-SR accepted field being 1, indicates that the multi-AP coordinated transmission of the C-SR scheme is accepted, in this case, the coordinated transmission response frame includes the C-SR information field. The value of the C-SR accepted field being 0, indicates that the multi-AP coordinated transmission of the C-SR scheme is rejected, in this case, the coordinated transmission response frame does not include the C-SR information field.

Optionally, the value of the J-TX accepted field being 1, indicates that the multi-AP coordinated transmission of the J-TX scheme is accepted, in this case, the coordinated transmission response frame includes the J-TX information field. The value of the J-TX accepted field being 0, indicates that the multi-AP coordinated transmission of the J-TX scheme is rejected, in this case, the coordinated transmission response frame does not include the J-TX information field.

Optionally, the value of the C-UL MU-MIMO accepted field being 1, indicates that the multi-AP coordinated transmission of the C-UL MU-MIMO scheme is accepted, in this case, the coordinated transmission response frame includes the C-UL MU-MIMO information field. The value of the C-UL MU-MIMO accepted field being 0, indicates that the multi-AP coordinated transmission of the C-UL MU-MIMO scheme is rejected, in this case, the coordinated transmission response frame does not include the C-UL MU-MIMO information field.

In some embodiments, the participant STA list field may exist only in a case where the C-BF accepted equals to 1 or the C-SR accepted equals to 1 or the J-TX accepted equals to 1 or the C-UL MU-MIMO accepted equals to 1. In a case where the Coordinated TX Scheme Accepted field indicates that the C-OFDMA accepted equals to 1, the participant STA list field may not exist.

In some embodiments, as shown in FIG. 31, the Coordinated TX Scheme Accepted field includes:
a coordinated transmission scheme accepted subfield (Coordinated TX Scheme Accepted subfield), used to indicate the coordinated transmission scheme in which the second AP accepts to participate.

Optionally, the Coordinated TX Scheme Accepted field may be 8 bits, the Coordinated TX Scheme Accepted subfield may be 3 bits, and the remaining 5 bits are reserved bits. Herein, different values of the 3 bits are used to indicate different coordinated transmission schemes in which the second AP accepts to participate.

As an example, the 3-bit value of 001 indicates acceptance of participating in the C-BF scheme, the value of 010 indicates acceptance of participating in the C-OFDMA scheme, the value of 011 indicates acceptance of participating in the C-SR scheme, the value of 100 indicates acceptance of participating in the J-TX scheme, and the value of 101 indicates acceptance of participating in the C-UL MU-MIMO scheme, where the values 000 and 110 to 111 are reserved values.

Optionally, in a case where the 3 bits indicate acceptance of the C-BF scheme, the coordinated transmission response frame includes the C-BF information field, or in a case where the 3 bits indicate acceptance of the C-OFDMA scheme, the coordinated transmission response frame includes the C-OFDMA information field, or in a case where the 3 bits indicate acceptance of the C-SR scheme, the coordinated transmission response frame includes the C-SR information field, or in a case where the 3 bits indicate acceptance of the J-TX scheme, the coordinated transmission response frame includes the J-TX information field, or in a case where the 3 bits indicate acceptance of the C-UL MU-MIMO scheme, the coordinated transmission response frame includes the C-UL MU-MIMO information field.

In some embodiments, as shown in FIG. 32, the participant STA list field may include at least one of the following fields:
a number of STAs field, used to indicate the number of APs participating in the multi-AP coordinated transmission; or
at least one STA ID field, used to indicate STAs participating in the multi-AP coordinated transmission.

For example, k IDs of STAs participating in the multi-AP coordinated transmission may be included, where k is a positive integer.

In some embodiments, as shown in FIG. 33, the C-BF information field includes at least one of the following fields:
at least one CSI field, used to indicate CSI between the second AP and at least one STA.

Optionally, the at least one CSI field may be used to carry r pieces of CSI information, where the r pieces of CSI information are CSI information between the second AP and r STAs, and r is a positive integer.

In some embodiments, the r pieces of CSI information may include all CSI obtained by the second AP in the channel sounding phase, or may also include CSI between the second AP and k STAs (i.e., STAs indicated by the participant STA list field) participating in the multi-AP coordinated transmission of the C-BF scheme, that is, r may be equal to k.

In some embodiments, the CSI field may occupy a bits, where a is a positive integer, and the size of a may be determined according to the size of the carried CSI information.

In some embodiments, as shown in FIG. 34, the J-TX information field includes at least one of the following fields:
at least one CSI field, used to indicate CSI between the second AP and at least one STA.

Optionally, the at least one CSI field may be used to carry r pieces of CSI information, the r pieces of CSI information are CSI information between the second AP and r STAs, and r is a positive integer.

In some embodiments, the r pieces of CSI information may include all CSI obtained by the second AP in the channel sounding phase, or may also include CSI between the second AP and k STAs (i.e., STAs indicated by the participant STA list field) participating in the multi-AP coordinated transmission of the J-TX scheme, that is, r may be equal to k.

In some embodiments, the CSI field may occupy a bits, a is a positive integer, and the size of a may be determined according to the size of the carried CSI information.

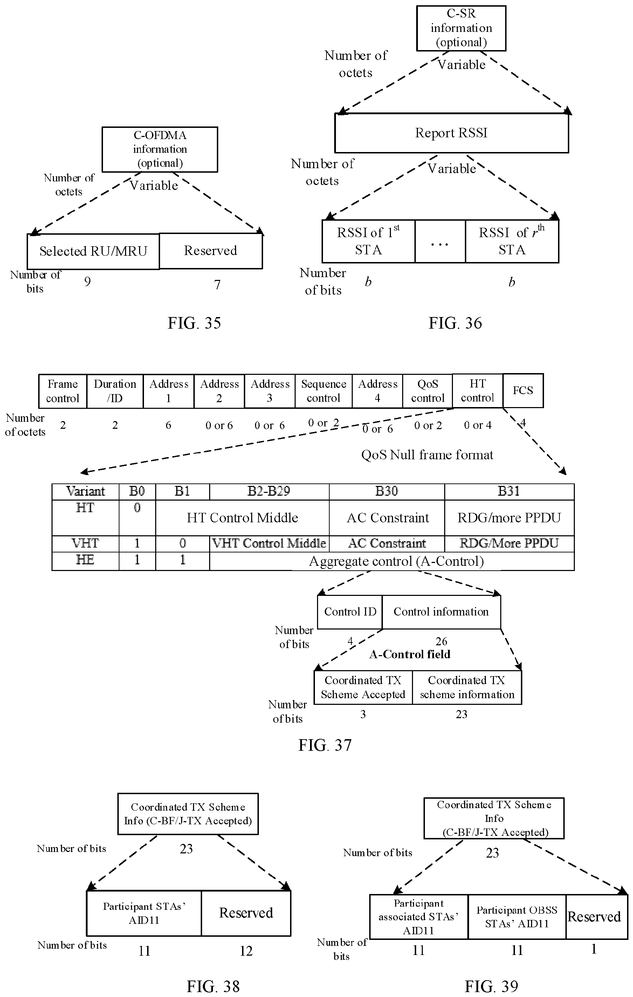

In some embodiments, as shown in FIG. 35, the C-UL MU-MIMO information field includes:
a selected RU/MRU field, used to indicate an RU/MRU selected by the second AP.

In some embodiments, as shown in FIG. 36, the C-SR information field (C-SR Info. field) includes at least one of the following fields:
at least one RSSI field, used to indicate RSSI between the second AP and at least one STA.

Optionally, the at least one RSSI field may be used to carry r pieces of RSSI information, the r pieces of RSSI information are RSSI information between the second AP and r STAs, and r is a positive integer.

In some embodiments, the r pieces of RSSI information may include all RSSI obtained by the second AP, or may also include RSSI between the second AP and k STAs (i.e., STAs indicated by the participant STA list field) participating in the multi-AP coordinated transmission of the C-SR scheme, that is, r may be equal to k.

In some embodiments, the RSSI field may occupy b bits, b is a positive integer, and the size of b may be determined according to the size of the RSSI information carried.

FIG. 37 is a schematic diagram of a frame structure for implementing a first response frame by a QoS null frame.

For example, as shown in FIG. 37, the QoS null frame may include an HT control field. The HT control field may occupy 4 octets, where the HT control field includes the following three variants according to different values of B0 and B1 bits:

HT variant, VHT variant, and HE variant.

For example, in a case where the B0 is 0, the HT control field is the HT variant, in a case where the B0 is 1 and the B1 is 0, the HT control field is the VHT variant, and in a case where the B0 is 1 and the B1 is 1, the HT control field is the HE variant.

In a case where the HT control field is the HE variant, the HT control field may include an aggregate control (A-Control) field.

In some embodiments, the second indication information and/or the target coordinated transmission information are carried in the A-Control field in the QoS null frame. Specifically, the A-Control field includes a control identify (Identify, ID) field and a control information field, and the second indication information and/or the target coordinated transmission information are carried in the control information field.

In some embodiments, a value of the control ID field is a fourth value, used to indicate that the QoS null frame is used to carry coordinated transmission response information. Herein, the fourth value is a reserved value of the control ID field, such as 7.

As shown in FIG. 37, the control information field includes at least one of:
a coordinated transmission scheme accepted field (Coordinated TX Scheme Accepted field), used to indicate the coordinated transmission scheme in which the second AP participates; or
a coordinated transmission scheme information field (Coordinated TX Scheme Info field), used to indicate the target coordinated transmission information.

Optionally, the Coordinated TX Scheme Accepted field may be designed in the format of FIG. 30 or FIG. 31.

In some embodiments, in a case where the second AP accepts to participate in the multi-AP coordinated transmission of the C-BF or J-TX scheme, the Coordinated TX Scheme Info field includes:

a participant STA list field, used to indicate IDs of STAs participating in the C-BF scheme or the J-TX scheme.

For example, as shown in FIG. 38, the Coordinated TX Scheme Info field may include an STA's AID11 field, used to report an AID of associated STA participating in the C-BF scheme and/or the J-TX scheme.

For another example, as shown in FIG. 39, the Coordinated TX Scheme Info field may also include two STAs' AID11 fields, such as a participant associated STA's AID11 field and a participant OBSS STA's AID11 field, where the participant associated STA's AID11 field is used to report the AID of associated STA participating in the C-BF scheme and/or the J-TX scheme, and the participant OBSS STA's AID11 field is used to report the AID of OBSS STA participating in the C-BF scheme and/or the J-TX scheme.

Optionally, in a case where the second AP is associated with one STA and participates in the C-BF scheme and/or the J-TX scheme, the second AP may use the frame structure shown in FIG. 38 to report the STA information participating in the C-BF scheme and/or the J-TX scheme, or may use the frame structure shown in FIG. 39 to report the associated STA and OBSS STA participating in the C-BF scheme and/or J-TX scheme.

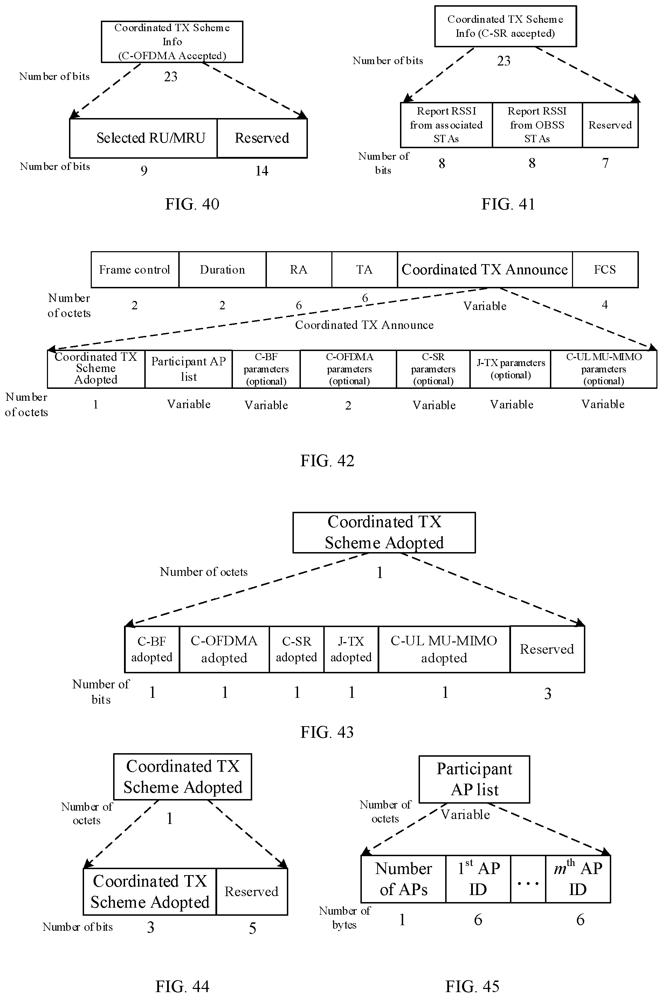

In some embodiments, in a case where the second AP accepts to participate in the multi-AP coordinated transmission of the C-OFDMA scheme, as shown in FIG. 40, the coordinated transmission scheme information field (Coordinated TX Scheme Info field) includes:
a selected RU/MRU field, used to indicate an RU/MRU selected by the second AP.

In some embodiments, in a case where the second AP accepts to participate in the multi-AP coordinated transmission of the C-SR scheme, as shown in FIG. 41, the Coordinated TX Scheme Info field includes at least one of the following fields:
an RSSI from associated STA field, used to indicate RSSI between the second AP and the at least one associated STA participating in the C-SR scheme; or
an RSSI from OBSS STA (RSSI from Unassociated STA) field, used to indicate RSSI between the second AP and the at least one OBSS STA participating in the C-SR scheme.

In some embodiments of the present application, the first announce frame may be implemented by the control frame, or may also be implemented by other frames such as the trigger frame or the management frame, which is not limited in the present application.

In conjunction with FIG. 42 to FIG. 49, the design of the frame structure of the first announce frame is illustrated.

FIG. 42 is a schematic diagram of an example frame format of a coordinated transmission announce frame implemented by a control frame.

As shown in FIG. 42, the following domains (or fields) may be included:

frame control (occupying 2 octets), duration (occupying 2 octets), receiving address (RA, occupying 6 octets), transmission address (TA, occupying 6 octets), coordinated transmission announce (Coordinated TX Announce, occupying a variable number of octets), and FCS (occupying 4 octets).

In some embodiments, the first announce information is carried in the coordinated transmission announce (Coordinated TX Announce) field.

As shown in FIG. 42, the coordinated transmission announce field includes at least one of the following fields:
a coordinated transmission scheme adopted field (Coordinated TX Scheme Adopted field), used to indicate the third target coordinated transmission scheme, or the multi-AP coordinated transmission scheme which is upcoming;
an AP list field (Participant AP List field), used to indicate APs participating in the third target coordinated transmission scheme;
a C-BF parameters field, used to indicate coordinated transmission parameters corresponding to the C-BF scheme;
a C-OFDMA parameters field, used to indicate coordinated transmission parameters corresponding to the C-OFDMA scheme;
a C-SR parameters field, used to indicate coordinated transmission parameters corresponding to the C-SR scheme;
a J-TX parameters field, used to indicate coordinated transmission parameters corresponding to the J-TX scheme; or
a C-UL MU-MIMO parameters field, used to indicate coordinated transmission parameters corresponding to the C-UL MU-MIMO scheme.

In some embodiments, as shown in FIG. 43, the coordinated transmission scheme adopted field (Coordinated TX Scheme Adopted field) includes at least one of the following fields:
a C-BF adopted field, used to indicate whether to adopt the multi-AP coordinated transmission of the C-BF scheme;
a C-OFDMA adopted field, used to indicate whether to adopt the multi-AP coordinated transmission of the C-OFDMA scheme;
a C-SR adopted field, used to indicate whether to adopt the multi-AP coordinated transmission of the C-SR scheme;
a J-TX adopted field, used to indicate whether to adopt the multi-AP coordinated transmission of the J-TX scheme; or
a C-UL MU-MIMO adopted field, used to indicate whether to adopt the multi-AP coordinated transmission of the C-UL MU MIMO scheme.

Optionally, the value of the C-BF adopted field being 1, indicates to perform the multi-AP coordinated transmission of the C-BF scheme, in this case, the coordinated transmission announce frame includes the C-BF parameters field. The value of the C-BF adopted field being 0, indicates not to perform the multi-AP coordinated transmission of the C-BF scheme, in this case, the coordinated transmission announce frame does not include the C-BF parameters field.

Optionally, the value of the C-OFDMA adopted field being 1, indicates to perform the multi-AP coordinated transmission of the C-OFDMA scheme, in this case, the coordinated transmission announce frame includes the C-OFDMA parameters field. The value of the C-OFDMA adopted field being 0, indicates not to perform the multi-AP coordinated transmission of the C-OFDMA scheme, in this case, the coordinated transmission announce frame does not include the C-OFDMA parameters field.

Optionally, the value of the C-SR adopted field being 1, indicates to perform the multi-AP coordinated transmission of the C-SR scheme, in this case, the coordinated transmission announce frame includes the C-SR parameters field. The value of the C-SR adopted field being 0, indicates not to perform the multi-AP coordinated transmission of the C-SR scheme, in this case, the coordinated transmission announce frame does not include the C-SR parameters field.

Optionally, the value of the J-TX adopted field being 1, indicates to perform the multi-AP coordinated transmission of the J-TX scheme, in this case, the coordinated transmission announce frame includes the J-TX parameters field. The value of the J-TX adopted field being 0, indicates not to perform the multi-AP coordinated transmission of the J-TX scheme, in this case, the coordinated transmission announce frame does not include the J-TX parameters field.

Optionally, the value of the C-UL MU-MIMO adopted field being 1, indicates to perform the multi-AP coordinated transmission of the C-UL MU-MIMO scheme, in this case, the coordinated transmission announce frame includes the C-UL MU-MIMO parameters field. The value of the C-UL MU-MIMO adopted field being 0, indicates not to perform the multi-AP coordinated transmission of the C-UL MU-MIMO scheme, in this case, the coordinated transmission announce frame does not include the C-UL MU-MIMO parameters field.

In some embodiments, as shown in FIG. 44, the coordinated transmission scheme adopted field (Coordinated TX Scheme Adopted field) includes:

coordinated transmission scheme adopted subfield (Coordinated TX Scheme Adopted subfield), used to indicate the adopted coordinated transmission scheme.

Optionally, the Coordinated TX Scheme Adopted field may be 8 bits, the Coordinated TX Scheme Adopted subfield may be 3 bits, and the remaining 5 bits are reserved bits. Herein, different values of the 3 bits are used to indicate different coordinated transmission schemes.

As an example, the 3-bit value of 001 indicates performing the multi-AP coordinated transmission of the C-BF scheme, the value of 010 indicates performing the multi-AP coordinated transmission of the C-OFDMA scheme, the value of 011 indicates performing the multi-AP coordinated transmission of the C-SR schemed, the value of 100 indicates performing the multi-AP coordinated transmission of the J-TX scheme, and the value of 101 indicates requesting to participate in the multi-AP coordinated transmission of the C-UL MU-MIMO scheme, where the values 000 and 110 to 111 are reserved values.

Optionally, in a case where the 3 bits indicate performing the C-BF scheme, the coordinated transmission announce frame includes the C-BF parameters field, or in a case where the 3 bits indicate requesting the C-OFDMA scheme, the coordinated transmission request frame includes the C-OFDMA parameters field, or in a case where the 3 bits indicate requesting the C-SR scheme, the coordinated transmission request frame includes the C-SR parameters field, or in a case where the 3 bits indicate requesting the J-TX scheme, the coordinated transmission request frame includes the J-TX parameters field, or in a case where the 3 bits indicate requesting the C-UL MU-MIMO scheme, the coordinated transmission request frame includes the C-UL MU-MIMO parameters field.

In some embodiments, as shown in FIG. 45, the participant AP list field includes at least one of the following fields:
a number of APs field, used to indicate the number of APs participating in the multi-AP coordinated transmission; or
at least one AP ID field, used to indicate APs participating in the multi-AP coordinated transmission.

For example, m IDs of APs participating in the multi-AP coordinated transmission may be included, where m is a positive integer.

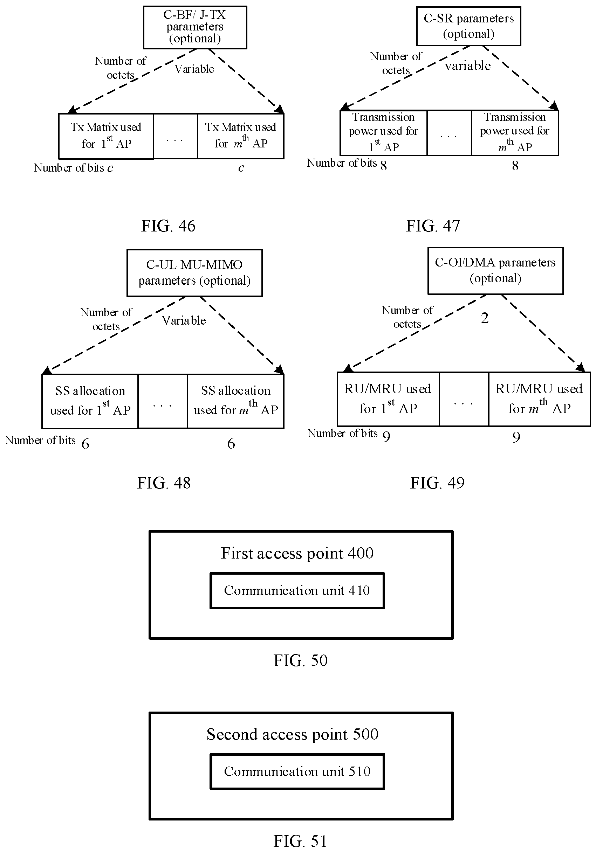

In some embodiments, as shown in FIG. 46, the C-BF/J-TX parameters field includes:
at least one transmission matrix (Tx Matrix) field, corresponding to at least one AP participating in the C-BF scheme and used to indicate a transmission matrix used by an AP participating in the C-BF scheme.

In some embodiments, the Tx Matrix field may occupy c bits, c is a positive integer, and the size of the c may be determined according to the size of the Tx Matrix.

For example, transmission matrices corresponding to m APs respectively may be included.

In some embodiments, as shown in FIG. 47, the C-SR parameters field includes:
at least one transmission power (Tx Power) field, corresponding to at least one AP participating in the C-SR scheme and used to indicate a transmission power used by an AP participating in the C-SR scheme.

For example, Tx powers corresponding to m APs respectively may be included.

In some embodiments, as shown in FIG. 48, the C-UL MU-MIMO parameters field includes:
at least one SS allocation field, corresponding to at least one AP participating in the C-UL MU-MIMO scheme and used to indicate SS allocation information used by an AP participating in the C-UL MU-MIMO scheme.

For example, SS allocations corresponding to m APs respectively may be included.

In some embodiments, as shown in FIG. 48, the C-OFDMA parameters field includes:
at least one RU/MRU field, corresponding to at least one AP participating in the C-OFDMA scheme and used to indicate an RU or MRU used by an AP participating in the C-OFDMA scheme.

For example, RU/MRU corresponding to m APs respectively may be included.

In some embodiments, the first announce information may be transmitted by the MAP transmission trigger frame, that is, the MAP transmission trigger frame is used to carry the first announce information and to transmit the multi-AP coordinated transmission.

In summary, the first AP may request the at least one second AP to participate in the multi-AP coordinated transmission of the first target coordinated transmission scheme, by the first request frame, and indicate the coordinated transmission command related to the first target coordinated transmission scheme to the at least one second AP, thereby enabling the unified multi-AP coordinated preparation process, which is conducive to reducing the complexity of the multi-AP coordinated transmission.

Furthermore, the second AP may reply whether to participate in the multi-AP coordinated transmission in which the first AP requests to participate, by the first response frame. If participating, the second AP may report related coordinated transmission information to the first AP, thereby enabling the unified multi-AP coordinated preparation process, which is conducive to reducing the complexity of the multi-AP coordinated transmission.

Furthermore, the first AP may announce the multi-AP coordinated transmission scheme adopted by the second AP participating in the multi-AP coordinated transmission and related coordinated transmission parameters, by the first announce frame, thereby enabling the unified multi-AP coordinated preparation process, which is conducive to reducing the complexity of multi-AP coordinated transmission.

The method embodiments of the present application are described in detail above in combination with FIG. 4 to FIG. 49, and apparatus embodiments of the present application will be described in detail below in combination with FIG. 50 to FIG. 54. It should be understood that the apparatus embodiments and the method embodiments correspond to each other, and similar descriptions may refer to the method embodiments.

FIG. 50 shows a schematic block diagram of a first access point (AP) 400 according to the embodiments of the present application. As shown in FIG. 50, the first AP 400 includes:
a communication unit 410, configured to transmit a first request frame to at least one second AP, the first request frame including first indication information and/or a target coordinated transmission command, where the first indication information is used to indicate a first target coordinated transmission scheme, the first target coordinated transmission scheme is a coordinated transmission scheme in which the first AP requests the at least one second AP to participate, and the target coordinated transmission command is a coordinated transmission command corresponding to the first target coordinated transmission scheme.

In some embodiments, the first indication information indicates the first target coordinated transmission scheme by a bitmap.

In some embodiments, the first indication information includes multiple bits, each bit corresponds to one of multiple coordinated transmission schemes, and a value of the each bit is used to indicate whether the first AP requests the at least one second AP to participate in a corresponding coordinated transmission scheme.

In some embodiments, different values of the first indication information are used to indicate different coordinated transmission schemes in which the first AP requests the at least one second AP to participate.

In some embodiments, the coordinated transmission command corresponding to the first target coordinated transmission scheme includes at least one of the following information:
indication information on whether to report channel state information (CSI) between the second AP and associated STAs of the second AP;
indication information on whether to report CSI between the second AP and an overlapping basic service set (OBSS) STA;
available resource units (RUs) or multiple resource units (MRUs) shared by the first AP to the at least one second AP;
indication information on whether to report received signal strength indication (RSSI) between the second AP and associated STAs of the second AP; or
indication information on whether to report RSSI between the second AP and OBSS STAs of the second AP.

In some embodiments, in a case where the first target coordinated transmission scheme includes a coordinated beamforming (C-BF) scheme, the first request frame includes a coordinated transmission command corresponding to the C-BF scheme, and the coordinated transmission command corresponding to the C-BF scheme includes at least one of the following information:
indication information on whether to report CSI between the second AP and associated STAs of the second AP; or
indication information on whether to report CSI between the second AP and OBSS STAs of the second AP.

In some embodiments, in a case where the first target coordinated transmission scheme includes a joint transmission (J-TX) scheme, the first request frame includes a coordinated transmission command corresponding to the J-TX scheme, and the coordinated transmission command corresponding to the J-TX scheme includes at least one of the following information:
indication information on whether to report CSI between the second AP and associated STAs of the second AP; or
indication information on whether to report CSI between the second AP and OBSS STAs of the second AP.

In some embodiments, in a case where the first target coordinated transmission scheme includes a coordinated orthogonal frequency division multiple access (C-OFDMA) scheme, the first request frame includes a coordinated transmission command corresponding to the C-OFDMA scheme, and the coordinated transmission command corresponding to the C-OFDMA scheme includes:
available RUs or MRUs shared by the first AP to the at least one second AP.

In some embodiments, in a case where the first target coordinated transmission scheme includes a coordinated spatial reuse (C-SR) scheme, the first request frame includes a coordinated transmission command corresponding to the C-SR scheme, and the coordinated transmission command corresponding to the C-SR scheme includes at least one of the following information:
indication information on whether to report RSSI between the second AP and associated STAs of the second AP; or
indication information on whether to report RSSI between the second AP and OBSS STAs of the second AP.

In some embodiments, in a case where the first target coordinated transmission scheme includes a coordinated uplink multiple-user multiple input multiple output (C-UL MU-MIMO) scheme, the first request frame includes a coordinated transmission command corresponding to the C-UL MU-MIMO scheme.

In some embodiments, the first request frame is a control frame.

In some embodiments, the first request frame includes a coordinated transmission request field, and the first indication information and/or the target coordinated transmission command is carried in the coordinated transmission request field.

In some embodiments, the coordinated transmission request field includes at least one of the following fields:
a coordinated transmission scheme used field, used to indicate a coordinated transmission scheme in which the first AP requests the at least one second AP to participate;
a C-BF command field, used to indicate a coordinated transmission command corresponding to a C-BF scheme;
a C-OFDMA command field, used to indicate a coordinated transmission command corresponding to a C-OFDMA scheme;
a C-SR command field, used to indicate a coordinated transmission command corresponding to a C-SR scheme;
a J-TX command field, used to indicate a coordinated transmission command corresponding to a J-TX scheme;
a C-BF command field, used to indicate a coordinated transmission command corresponding to a C-BF scheme; or
a C-UL MU-MIMO command field, used to indicate a coordinated transmission command corresponding to a C-UL MU-MIMO scheme.

In some embodiments, the C-BF command field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In some embodiments, the C-OFDMA command field includes:
an available RU/MRU field, used to indicate an RU or MRU shared by the first AP to the at least one second AP.

In some embodiments, the C-SR command field includes at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, the J-TX command field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In some embodiments, the first request frame is a trigger frame.

In some embodiments, the first indication information is carried in a common information field or a user information field in the first request frame.

In some embodiments, the target coordinated transmission command is carried in a common information field or a user information field in the first request frame.

In some embodiments, the first request frame includes a trigger frame type field, a value of the trigger frame type field is a first value, which is used to indicate that the first request frame is used to request the at least one second AP to participate in a multi-AP coordinated transmission of the first target coordinated transmission scheme, and the first value is a reserved value of the trigger frame type field.

In some embodiments, the first request frame includes a trigger frame type dependent common information field, and the first indication information and the target coordinated transmission command are carried in the trigger frame type dependent common information field.

In some embodiments, the trigger frame type dependent common information field includes at least one of the following fields:
a coordinated transmission scheme used field, used to indicate the first target coordinated transmission scheme; or
a coordinated transmission scheme related command field, used to indicate the coordinated transmission command corresponding to the first target coordinated transmission scheme.

In some embodiments, the first request frame includes a trigger frame type dependent common information field and a special user information field, the first indication information is carried in the trigger frame type dependent common information field, and the target coordinated transmission command is carried in the special user information field.

In some embodiments, the trigger frame type dependent common information field includes:
a coordinated transmission scheme used field, used to indicate the first target coordinated transmission scheme.

In some embodiments, the special user information field includes a trigger frame type dependent user information field, and the target coordinated transmission command is carried in the trigger frame type dependent user information field.

In some embodiments, the trigger frame type dependent user information field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, in a case where the first target coordinated transmission scheme includes a C-BF scheme and/or a J-TX scheme, the trigger frame type dependent user information field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In some embodiments, in a case where the first target coordinated transmission scheme includes a C-OFDMA scheme, the trigger frame type dependent user information field includes:
an available RU/MRU field, used to indicate an RU or MRU shared by the first AP to the at least one second AP.

In some embodiments, in a case where the first target coordinated transmission scheme includes a C-SR scheme, the trigger frame type dependent user information field includes at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, the special user information field includes an association identifier (AID)12 field, a value of the AID12 field is a second value, which is used to indicate that the first request frame is used to request the at least one second AP to participate in a multi-AP coordinated transmission of the first target coordinated transmission scheme, and the second value is a reserved value of the AID12 field.

In some embodiments, the first request frame includes a trigger frame type dependent common information field and a multi-AP user information field, the first indication information is carried in the trigger frame type dependent common information field, and the target coordinated transmission command is carried in the multi-AP user information field.

In some embodiments, the trigger frame type dependent common information field includes:
a coordinated transmission scheme used field, used to indicate the first target coordinated transmission scheme.

In some embodiments, the multi-AP user information field includes an AID12 field, a value of the AID12 field is a third value, which is used to indicate that the first request frame is used to request the at least one second AP to participate in a multi-AP coordinated transmission of the first target coordinated transmission scheme, and the third value is a reserved value of the AID12 field.

In some embodiments, the multi-AP user information field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, the first request frame includes a trigger frame type dependent user information field, and the first indication information and the target coordinated transmission command are carried in the trigger frame type dependent user information field.

In some embodiments, the trigger frame type dependent user information field includes at least one of the following fields:
a coordinated transmission scheme used field, used to indicate the first target coordinated transmission scheme; or
a coordinated transmission scheme related command field, used to indicate the coordinated transmission command corresponding to the first target coordinated transmission scheme.

In some embodiments, the coordinated transmission scheme related command field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, in a case where the first target coordinated transmission scheme includes a C-BF scheme and/or a J-TX scheme, the coordinated transmission scheme related command field includes at least one of the following fields:
the report CSI from associated STAs field, used to indicate whether to report the CSI between the second AP and the associated STAs; or
the report CSI from OBSS STAs field, used to indicate whether to report the CSI between the second AP and the OBSS STAs.

In some embodiments, in a case where the first target coordinated transmission scheme includes a C-OFDMA scheme, the coordinated transmission scheme related command field includes:
the available RU/MRU field, used to indicate the RU or MRU shared by the first AP to the at least one second AP.

In some embodiments, in a case where the first target coordinated transmission scheme includes a C-SR scheme, the coordinated transmission scheme related command field includes at least one of the following fields:
the report RSSI from associated STAs field, used to indicate whether to report the RSSI between the second AP and the associated STAs; or
the report RSSI from OBSS STAs field, used to indicate whether to report the RSSI between the second AP and the OBSS STAs.

In some embodiments, the coordinated transmission scheme used field includes at least one of the following fields:
a C-BF used field, used to indicate whether to request using a multi-AP coordinated transmission of a C-BF scheme;
a C-OFDMA used field, used to indicate whether to request using a multi-AP coordinated transmission of a C-OFDMA scheme;
a C-SR used field, used to indicate whether to request using a multi-AP coordinated transmission of a C-SR scheme;
a J-TX used field, used to indicate whether to request using a multi-AP coordinated transmission of a J-TX scheme; or
a C-UL MU MIMO used field, used to indicate whether to request using a multi-AP coordinated transmission of a C-UL MU MIMO scheme.

In some embodiments, the coordinated transmission scheme used field includes:
a coordinated transmission scheme used subfield, used to indicate the coordinated transmission scheme in which the first AP requests the at least one second AP to participate.

In some embodiments, the communication unit 410 is further configured to receive a first response frame transmitted by the at least one second AP, where the first response frame is used to indicate whether the at least one second AP participates in a multi-AP coordinated transmission of the first target coordinated transmission scheme.

In some embodiments, the communication unit 410 is further configured to:
receive the first response frame synchronously transmitted by the at least one second AP; or
receive the first response frame asynchronously transmitted by the at least one second AP.

In some embodiments, the first request frame is included in an aggregate medium access control protocol data unit (A-MPDU), and in a case where the at least one second AP synchronously transmits the first response frame, the A-MPDU further includes a trigger frame, and the trigger frame is used to allocate a transmission resource to the at least one second AP and trigger the at least one second AP to transmit the first response frame simultaneously.

In some embodiments, the first response frame includes second indication information and/or target coordinated transmission information, the second indication information is used to indicate a second target coordinated transmission scheme, the second target coordinated transmission scheme is a coordinated transmission scheme in which the second AP participates, and the target coordinated transmission information is coordinated transmission information corresponding to the second target coordinated transmission scheme.

In some embodiments, the second indication information is indicated by a bitmap.

In some embodiments, the second indication information includes multiple bits, each bit corresponds to one of multiple coordinated transmission schemes, and a value of the each bit is used to indicate whether the second AP participates in a corresponding coordinated transmission scheme.

In some embodiments, different values of the second indication information are used to indicate different coordinated transmission schemes in which the second AP participates.

In some embodiments, the target coordinated transmission information includes at least one of the following information:
a list of STAs participating in the second target coordinated transmission scheme, an RU or MRU selected by the second AP, CSI between the second AP and STAs participating in the second target coordinated transmission scheme, or RSSI between the second AP and STAs participating in the second target coordinated transmission scheme.

In some embodiments, in a case where the second target coordinated transmission scheme includes a C-BF scheme, the first response frame includes coordinated transmission information corresponding to the C-BF scheme, and the coordinated transmission information corresponding to the C-BF scheme includes at least one of:
a list of STAs participating in the C-BF scheme, CSI between the second AP and associated STAs participating in the C-BF scheme, or CSI between the second AP and OBSS STAs participating in the C-BF scheme.

In some embodiments, in a case where the second target coordinated transmission scheme includes a J-TX scheme, the first response frame includes coordinated transmission information corresponding to the J-TX scheme, and the coordinated transmission information corresponding to the J-TX scheme includes at least one of:
a list of STAs participating in the J-TX scheme, CSI between the second AP and associated STAs participating in the J-TX scheme, or CSI between the second AP and OBSS STAs participating in the J-TX scheme.

In some embodiments, in a case where the second target coordinated transmission scheme includes a C-OFDMA scheme, the first response frame includes coordinated transmission information corresponding to the C-OFDMA scheme, and the coordinated transmission information corresponding to the C-OFDMA scheme includes: an RU or MRU selected by the second AP.

In some embodiments, in a case where the second target coordinated transmission scheme includes a C-SR scheme, the first response frame includes coordinated transmission information corresponding to the C-SR scheme, and the coordinated transmission information corresponding to the C-SR scheme includes at least one of:
a list of STAs participating in the C-SR scheme, RSSI between the second AP and associated STAs participating in the C-RS scheme, or RSSI between the second AP and OBSS STAs participating in the C-RS scheme.

In some embodiments, in a case where the second target coordinated transmission scheme includes a C-UL MU-MIMO scheme, the first response frame includes coordinated transmission information corresponding to the C-UL MU-MIMO scheme.

In some embodiments, the first response frame is a control frame.

In some embodiments, the first response frame includes a coordinated transmission response field, and the second indication information and/or the target coordinated transmission information are carried in the coordinated transmission response field.

In some embodiments, the coordinated transmission response field includes at least one of the following fields:
a coordinated transmission scheme accepted field, used to indicate the coordinated transmission scheme in which the second AP participates;
a participant STA list field, used to indicate STAs participating in the second target coordinated transmission scheme;
a C-BF information field, used to indicate coordinated transmission information corresponding to a C-BF scheme;
a C-OFDMA information field, used to indicate coordinated transmission information corresponding to a C-OFDMA scheme;
a C-SR information field, used to indicate coordinated transmission information corresponding to a C-SR scheme;
a J-TX information field, used to indicate coordinated transmission information corresponding to a J-TX scheme; or
a C-UL MU-MIMO information field, used to indicate coordinated transmission information corresponding to a C-UL MU-MIMO scheme.

In some embodiments, the C-BF information field includes at least one of the following fields:
a participant STA list field, used to indicate STAs participating in the C-BF scheme; or
at least one CSI field, used to indicate CSI between the second AP and at least one STA participating in the C-BF scheme.

In some embodiments, the J-TX information field includes at least one of the following fields:
a participant STA list field, used to indicate STAs participating in the J-TX scheme; or
at least one CSI field, used to indicate CSI between the second AP and at least one STA participating in the J-TX scheme.

In some embodiments, the C-SR information field includes at least one of the following fields:
a participant STA list field, used to indicate STAs participating in the C-SR scheme; or
at least one RSSI field, used to indicate RSSI between the second AP and at least one STA participating in the C-SR scheme.

In some embodiments, the C-OFDMA information field includes:
a selected RU/MRU field, used to indicate an RU or MRU selected by the second AP.

In some embodiments, the first response frame is a quality of service (QoS) null frame, and the second indication information and/or the target coordinated transmission information are carried in an aggregate control (A-Control) field in the QoS null frame.

In some embodiments, the A-Control field includes a control information field, and the second indication information and/or target coordinated transmission information are carried in the control information field.

In some embodiments, the control information field includes at least one of:
a coordinated transmission scheme accepted field, used to indicate the coordinated transmission scheme in which the second AP participates; or
a coordinated transmission scheme information field, used to indicate the target coordinated transmission information.
In some embodiments, the coordinated transmission scheme information field includes at least one of the following fields:
a participant STA list field, used to indicate STAs participating in the second target coordinated transmission scheme;
at least one CSI field, used to indicate CSI between the second AP and at least one STA participating in a C-BF scheme and/or a J-TX scheme;
at least one RSSI field, used to indicate RSSI between the second AP and at least one STA participating in a C-SR scheme; or
a selected RU/MRU field, used to indicate an RU or MRU selected by the second AP.

In some embodiments, in a case where the second target coordinated transmission scheme includes a C-BF scheme, the coordinated transmission scheme information field includes the following field: a participant STA list field, used to indicate STAs participating in the C-BF scheme.

In some embodiments, in a case where the second target coordinated transmission scheme includes a J-TX scheme, the coordinated transmission scheme information field includes: a participant STA list field, used to indicate STAs participating in the J-TX scheme.

In some embodiments, in a case where the second target coordinated transmission scheme includes a C-SR scheme, the coordinated transmission scheme information field includes at least one of the following fields:
an RSSI from associated STA field, used to indicate RSSI between the second AP and at least one associated STA participating in the C-SR scheme; or
an RSSI from OBSS STA field, used to indicate RSSI between the second AP and at least one OBSS STA participating in the C-SR scheme.

In some embodiments, in a case where the second target coordinated transmission scheme includes a C-OFDMA scheme, the coordinated transmission scheme information field includes: a selected RU/MRU field, used to indicate an RU or MRU selected by the second AP.

In some embodiments, the coordinated transmission scheme accepted field includes at least one of the following fields:
a C-BF accepted field, used to indicate whether the second AP participates in a multi-AP coordinated transmission of a C-BF scheme;
a C-OFDMA accepted field, used to indicate whether the second AP participates in a multi-AP coordinated transmission of a C-OFDMA scheme;
a C-SR accepted field, used to indicate whether the second AP participates in a multi-AP coordinated transmission of a C-SR scheme;
a J-TX accepted field, used to indicate whether the second AP participates in a multi-AP coordinated transmission of a J-TX scheme; or
a C-UL MU MIMO accepted field, used to indicate whether the second AP participates in a multi-AP coordinated transmission of a C-UL MU MIMO scheme.

In some embodiments, the coordinated transmission scheme accepted field includes:
a coordinated transmission scheme accepted subfield, used to indicate the coordinated transmission scheme in which the second AP participates.

In some embodiments, the communication unit 410 is further configured to transmit a first announce frame to at least one third AP, where the first announce frame is used to announce coordinated transmission parameters used by APs participating in a coordinated transmission.

In some embodiments, the at least one second AP includes the at least one third AP.

In some embodiments, the first announce frame includes first announce information, and the first announce information includes at least one of:
third indication information, used to indicate a third target coordinated transmission scheme, where the third target coordinated transmission scheme is a coordinated transmission scheme determined to be adopted by the first AP;
a list of APs participating in the third target coordinated transmission scheme; or
coordinated transmission parameters used for the third target coordinated transmission scheme.

In some embodiments, the coordinated transmission parameters used for the third target coordinated transmission scheme include at least one of:
coordinated transmission parameters used for a C-BF scheme;
coordinated transmission parameters used for a C-OFDMA scheme;
coordinated transmission parameters used for a C-SR scheme;
coordinated transmission parameters used for a J-TX scheme; or
coordinated transmission parameters used for a C-UL-MU-MIMO scheme.

In some embodiments, the coordinated transmission parameters used for the C-BF scheme include:
a list of APs participating in the C-BF scheme, or a transmission matrix used for each AP participating in the C-BF scheme.

In some embodiments, the coordinated transmission parameters used for the J-TX scheme include:
a list of APs participating in the J-TX scheme, or a transmission matrix used for each AP participating in the J-TX scheme.

In some embodiments, the coordinated transmission parameters used for the C-OFDMA scheme include:
a list of APs participating in the C-OFDMA scheme, or an RU or MRU used for each AP participating in the C-OFDMA scheme.

In some embodiments, the coordinated transmission parameters used for the C-SR scheme include:
a list of APs participating in the C-SR scheme, or a transmission power used for each AP participating in the C-SR scheme.

In some embodiments, the coordinated transmission parameters used for the C-UL-MU-MIMO scheme include: a list of APs participating in the C-UL-MU-MIMO scheme, or spatial stream (SS) allocation information used for each AP participating in the C-UL-MU-MIMO scheme.

In some embodiments, the first announce frame includes a coordinated transmission announce field, and the first announce information is carried in the coordinated transmission announce field.

In some embodiments, the coordinated transmission announce field includes at least one of the following fields:
a coordinated transmission scheme adopted field, used to indicate the third target coordinated transmission scheme;
an AP list field, used to indicate APs participating in the third target coordinated transmission scheme;
a C-BF parameters field, used to indicate coordinated transmission parameters corresponding to a C-BF scheme;
a C-OFDMA parameters field, used to indicate coordinated transmission parameters corresponding to a C-OFDMA scheme;
a C-SR parameters field, used to indicate coordinated transmission parameters corresponding to a C-SR scheme;
a J-TX parameters field, used to indicate coordinated transmission parameters corresponding to a J-TX scheme; or
a C-UL MU-MIMO parameters field, used to indicate coordinated transmission parameters corresponding to a C-UL MU-MIMO scheme.

In some embodiments, the coordinated transmission scheme adopted field includes at least one of the following fields:
a C-BF adopted field, used to indicate whether to adopt a multi-AP coordinated transmission of the C-BF scheme;
a C-OFDMA adopted field, used to indicate whether to adopt a multi-AP coordinated transmission of the C-OFDMA scheme;
a C-SR adopted field, used to indicate whether to adopt a multi-AP coordinated transmission of the C-SR scheme;
a J-TX adopted field, used to indicate whether to adopt a multi-AP coordinated transmission of the J-TX scheme; or
a C-UL MU MIMO adopted field, used to indicate whether to adopt a multi-AP coordinated transmission of the C-UL MU MIMO scheme.

In some embodiments, the coordinated transmission scheme adopted field includes:
a coordinated transmission scheme adopted subfield, used to indicate a coordinated transmission scheme which is adopted.

In some embodiments, the C-BF parameters field includes at least one of the following fields:
an AP list field, used to indicate at least one AP participating in the C-BF scheme; or
at least one transmission matrix field, corresponding to at least one AP participating in the C-BF scheme and used to indicate a transmission matrix used by an AP participating in the C-BF scheme.

In some embodiments, the J-TX parameters field includes at least one of the following fields:
an AP list field, used to indicate at least one AP participating in the J-TX scheme; or
at least one transmission matrix field, corresponding to at least one AP participating in the J-TX scheme and used to indicate a transmission matrix used by an AP participating in the J-TX scheme.

In some embodiments, the C-OFDMA parameters field includes at least one of the following fields:
an AP list field, used to indicate at least one AP participating in the C-OFDMA scheme; or
at least one RU/MRU field, corresponding to at least one AP participating in the C-OFDMA scheme and used to indicate an RU or MRU used by an AP participating in the C-OFDMA scheme.

In some embodiments, the C-SR parameters field includes at least one of the following fields:
an AP list field, used to indicate at least one AP participating in the C-SR scheme; or
at least one transmission power field, corresponding to at least one AP participating in the C-SR scheme and used to indicate a transmission power used by an AP participating in the C-SR scheme.

In some embodiments, the C-UL MU-MIMO parameters field includes at least one of the following fields:
a AP list field, used to indicate at least one AP participating in the C-UL MU-MIMO scheme; or
at least one SS allocation field, corresponding to at least one AP participating in the C-UL MU-MIMO scheme and used to indicate SS allocation information used by an AP participating in the C-UL MU-MIMO scheme.

In some embodiments, the first announce frame is further used to trigger an AP to perform a multi-AP coordinated transmission adopting the third target coordinated transmission scheme.

Optionally, in some embodiments, the communication unit mentioned above may be a communication interface or a transceiver, or an input/output interface of a communication chip or a system on chip. The processing unit mentioned above may be one or more processors.

It should be understood that the first AP 400 according to the embodiments of the present application may correspond to the first AP or the sharing AP in the method embodiments of the present application, and the above and other operations and/or functions of various units in the first AP 400 are respectively for implementing the corresponding processes of the first AP or the sharing AP in the method 200 shown in FIG. 4 to FIG. 49, which will not be repeated here for the sake of brevity.

FIG. 51 is a schematic block diagram of a second access point (AP) according to the embodiments of the present application. The second AP 500 of FIG. 51 includes:
a communication unit 510, configured to receive a first request frame transmitted by a first AP, where the first request frame includes first indication information and/or a target coordinated transmission command, where the first indication information is used to indicate a first target coordinated transmission scheme, the first target coordinated transmission scheme is a coordinated transmission scheme in which the first AP requests the second AP to participate, and the target coordinated transmission command is a coordinated transmission command corresponding to the first target coordinated transmission scheme.

In some embodiments, the first indication information indicates the first target coordinated transmission scheme by a bitmap.

In some embodiments, the first indication information includes multiple bits, each bit corresponds to one of multiple coordinated transmission schemes, and a value of the each bit is used to indicate whether the first AP requests the second AP to participate in a corresponding coordinated transmission scheme.

In some embodiments, different values of the first indication information are used to indicate different coordinated transmission schemes in which the first AP requests the second AP to participate.

In some embodiments, the coordinated transmission command corresponding to the first target coordinated transmission scheme includes at least one of the following information:
indication information on whether to report channel state information (CSI) between the second AP and associated STAs of the second AP;
indication information on whether to report CSI between the second AP and an overlapping basic service set (OBSS) STA;
an available resource unit (RU) or multiple resource units (MRU) shared by the first AP to the second AP;
indication information on whether to report received signal strength indication (RSSI) between the second AP and associated STAs of the second AP; or
indication information on whether to report RSSI between the second AP and OBSS STAs of the second AP.

In some embodiments, in a case where the first target coordinated transmission scheme includes a coordinated beamforming (C-BF) scheme, the first request frame includes a coordinated transmission command corresponding to the C-BF scheme, and the coordinated transmission command corresponding to the C-BF scheme includes at least one of the following information:
indication information on whether to report CSI between the second AP and associated STAs of the second AP; or
indication information on whether to report CSI between the second AP and OBSS STAs of the second AP.

In some embodiments, in a case where the first target coordinated transmission scheme includes a joint transmission (J-TX) scheme, the first request frame includes a coordinated transmission command corresponding to the J-TX scheme, and the coordinated transmission command corresponding to the J-TX scheme includes at least one of the following information:
indication information on whether to report CSI between the second AP and associated STAs of the second AP; or
indication information on whether to report CSI between the second AP and OBSS STAs of the second AP.

In some embodiments, in a case where the first target coordinated transmission scheme includes a coordinated orthogonal frequency division multiple access (C-OFDMA) scheme, the first request frame includes a coordinated transmission command corresponding to the C-OFDMA scheme, and the coordinated transmission command corresponding to the C-OFDMA scheme includes:
available RUs or MRUs shared by the first AP to the second AP.

In some embodiments, in a case where the first target coordinated transmission scheme includes a coordinated spatial reuse (C-SR) scheme, the first request frame includes a coordinated transmission command corresponding to the C-SR scheme, and the coordinated transmission command corresponding to the C-SR scheme includes at least one of the following information:
indication information on whether to report RSSI between the second AP and associated STAs of the second AP; or
indication information on whether to report RSSI between the second AP and OBSS STAs of the second AP.

In some embodiments, in a case where the first target coordinated transmission scheme includes a coordinated uplink multiple-user multiple input multiple output (C-UL MU-MIMO) scheme, the first request frame includes a coordinated transmission command corresponding to the C-UL MU-MIMO scheme.

In some embodiments, the first request frame is a control frame.

In some embodiments, the first request frame includes a coordinated transmission request field, and the first indication information and/or the target coordinated transmission command is carried in the coordinated transmission request field.

In some embodiments, the coordinated transmission request field includes at least one of the following fields:
a coordinated transmission scheme used field, used to indicate a coordinated transmission scheme in which the first AP requests the AP to participate;
a C-BF command field, used to indicate a coordinated transmission command corresponding to a C-BF scheme;
a C-OFDMA command field, used to indicate a coordinated transmission command corresponding to a C-OFDMA scheme;
a C-SR command field, used to indicate a coordinated transmission command corresponding to a C-SR scheme;
a J-TX command field, used to indicate a coordinated transmission command corresponding to a J-TX scheme;
a C-BF command field, used to indicate a coordinated transmission command corresponding to a C-BF scheme; or
a C-UL MU-MIMO command field, used to indicate a coordinated transmission command corresponding to a C-UL MU-MIMO scheme.

In some embodiments, the C-BF command field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In some embodiments, the C-OFDMA command field includes:
an available RU/MRU field, used to indicate an RU or MRU shared by the first AP to the second AP.

In some embodiments, the C-SR command field includes at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, the J-TX command field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In some embodiments, the first request frame is a trigger frame.

In some embodiments, the first indication information is carried in a common information field or a user information field in the first request frame.

In some embodiments, the target coordinated transmission command is carried in a common information field or a user information field in the first request frame.

In some embodiments, the first request frame includes a trigger frame type field, a value of the trigger frame type field is a first value, which is used to indicate that the first request frame is used to request the second AP to participate in a multi-AP coordinated transmission of the first target coordinated transmission scheme, and the first value is a reserved value of the trigger frame type field.

In some embodiments, the first request frame includes a trigger frame type dependent common information field, and the first indication information and the target coordinated transmission command are carried in the trigger frame type dependent common information field.

In some embodiments, the trigger frame type dependent common information field includes at least one of the following fields:
a coordinated transmission scheme used field, used to indicate the first target coordinated transmission scheme; or
a coordinated transmission scheme related command field, used to indicate the coordinated transmission command corresponding to the first target coordinated transmission scheme.

In some embodiments, the first request frame includes a trigger frame type dependent common information field and a special user information field, the first indication information is carried in the trigger frame type dependent common information field, and the target coordinated transmission command is carried in the special user information field.

In some embodiments, the trigger frame type dependent common information field includes:
a coordinated transmission scheme used field, used to indicate the first target coordinated transmission scheme.

In some embodiments, the special user information field includes a trigger frame type dependent user information field, and the target coordinated transmission command is carried in the trigger frame type dependent user information field.

In some embodiments, the trigger frame type dependent user information field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, in a case where the first target coordinated transmission scheme includes a C-BF scheme and/or a J-TX scheme, the trigger frame type dependent user information field includes at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

In some embodiments, in a case where the first target coordinated transmission scheme includes a C-OFDMA scheme, the trigger frame type dependent user information field includes:
an available RU/MRU field, used to indicate an RU or MRU shared by the first AP to the second AP.

In some embodiments, in a case where the first target coordinated transmission scheme includes a C-SR scheme, the trigger frame type dependent user information field includes at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, the special user information field includes an association identifier (AID)12 field, a value of the AID12 field is a second value, which is used to indicate that the first request frame is used to request the second AP to participate in a multi-AP coordinated transmission of the first target coordinated transmission scheme, and the second value is a reserved value of the AID12 field.

In some embodiments, the first request frame includes a trigger frame type dependent common information field and a multi-AP user information field, the first indication information is carried in the trigger frame type dependent common information field, and the target coordinated transmission command is carried in the multi-AP user information field.

In some embodiments, the trigger frame type dependent common information field includes:
a coordinated transmission scheme used field, used to indicate the first target coordinated transmission scheme.

In some embodiments, the multi-AP user information field includes an AID12 field, a value of the AID12 field is a third value, which is used to indicate that the first request frame is used to request the second AP to participate in a multi-AP coordinated transmission of the first target coordinated transmission scheme, and the third value is a reserved value of the AID12 field.

In some embodiments, the multi-AP user information field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, the first request frame includes a trigger frame type dependent user information field, and the first indication information and the target coordinated transmission command are carried in the trigger frame type dependent user information field.

In some embodiments, the trigger frame type dependent user information field includes at least one of the following fields:
a coordinated transmission scheme used field, used to indicate the first target coordinated transmission scheme; or
a coordinated transmission scheme related command field, used to indicate the coordinated transmission command corresponding to the first target coordinated transmission scheme.

In some embodiments, the coordinated transmission scheme related command field includes at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

In some embodiments, in a case where the first target coordinated transmission scheme includes a C-BF scheme and/or a J-TX scheme, the coordinated transmission scheme related command field includes at least one of the following fields:
the report CSI from associated STAs field, used to indicate whether to report the CSI between the second AP and the associated STAs; or
the report CSI from OBSS STAs field, used to indicate whether to report the CSI between the second AP and the OBSS STAs.

In some embodiments, in a case where the first target coordinated transmission scheme includes a C-OFDMA scheme, the coordinated transmission scheme related command field includes:
the available RU/MRU field, used to indicate the RU or MRU shared by the first AP to the at least one second AP.

In some embodiments, in a case where the first target coordinated transmission scheme includes a C-SR scheme, the coordinated transmission scheme related command field includes at least one of the following fields:
the report RSSI from associated STAs field, used to indicate whether to report the RSSI between the second AP and the associated STAs; or
the report RSSI from OBSS STAs field, used to indicate whether to report the RSSI between the second AP and the OBSS STAs.

In some embodiments, the coordinated transmission scheme used field includes at least one of the following fields:
a C-BF used field, used to indicate whether to request using a multi-AP coordinated transmission of a C-BF scheme;
a C-OFDMA used field, used to indicate whether to request using a multi-AP coordinated transmission of a C-OFDMA scheme;
a C-SR used field, used to indicate whether to request using a multi-AP coordinated transmission of a C-SR scheme;
a J-TX used field, used to indicate whether to request using a multi-AP coordinated transmission of a J-TX scheme; or
a C-UL MU MIMO used field, used to indicate whether to request using a multi-AP coordinated transmission of a C-UL MU MIMO scheme.

In some embodiments, the coordinated transmission scheme used field includes:
a coordinated transmission scheme used subfield, used to indicate the coordinated transmission scheme in which the first AP requests the second AP to participate.

In some embodiments, the communication unit 510 is further configured to transmit a first response frame to the first AP, where the first response frame is used to indicate whether the second AP participates in a multi-AP coordinated transmission of the first target coordinated transmission scheme.

In some embodiments, the first response frame includes second indication information and/or target coordinated transmission information, the second indication information is used to indicate a second target coordinated transmission scheme, the second target coordinated transmission scheme is a coordinated transmission scheme in which the second AP participates, and the target coordinated transmission information is coordinated transmission information corresponding to the second target coordinated transmission scheme.

In some embodiments, the second indication information is indicated by a bitmap.

In some embodiments, the second indication information includes multiple bits, each bit corresponds to one of multiple coordinated transmission schemes, and a value of the each bit is used to indicate whether the second AP participates in a corresponding coordinated transmission scheme.

In some embodiments, different values of the second indication information are used to indicate different coordinated transmission schemes in which the second AP participates.

In some embodiments, the target coordinated transmission information includes at least one of the following information:
a list of STAs participating in the second target coordinated transmission scheme, an RU or MRU selected by the second AP, CSI between the second AP and STAs participating in the second target coordinated transmission scheme, or RSSI between the second AP and STAs participating in the second target coordinated transmission scheme.

In some embodiments, in a case where the second target coordinated transmission scheme includes a C-BF scheme, the first response frame includes coordinated transmission information corresponding to the C-BF scheme, and the coordinated transmission information corresponding to the C-BF scheme includes at least one of:
a list of STAs participating in the C-BF scheme, CSI between the second AP and associated STAs participating in the C-BF scheme, or CSI between the second AP and OBSS STAs participating in the C-BF scheme.

In some embodiments, in a case where the second target coordinated transmission scheme includes a J-TX scheme, the first response frame includes coordinated transmission information corresponding to the J-TX scheme, and the coordinated transmission information corresponding to the J-TX scheme includes at least one of:
a list of STAs participating in the J-TX scheme, CSI between the second AP and associated STAs participating in the J-TX scheme, or CSI between the second AP and OBSS STAs participating in the J-TX scheme.

In some embodiments, in a case where the second target coordinated transmission scheme includes a C-OFDMA scheme, the first response frame includes coordinated transmission information corresponding to the C-OFDMA scheme, and the coordinated transmission information corresponding to the C-OFDMA scheme includes: an RU or MRU selected by the second AP.

In some embodiments, in a case where the second target coordinated transmission scheme includes a C-SR scheme, the first response frame includes coordinated transmission information corresponding to the C-SR scheme, and the coordinated transmission information corresponding to the C-SR scheme includes at least one of:
a list of STAs participating in the C-SR scheme, RSSI between the second AP and associated STAs participating in the C-RS scheme, or RSSI between the second AP and OBSS STAs participating in the C-RS scheme.

In some embodiments, in a case where the second target coordinated transmission scheme includes a C-UL MU-MIMO scheme, the first response frame includes coordinated transmission information corresponding to the C-UL MU-MIMO scheme.

In some embodiments, the first response frame is a control frame.

In some embodiments, the first response frame includes a coordinated transmission response field, and the second indication information and/or the target coordinated transmission information are carried in the coordinated transmission response field.

In some embodiments, the coordinated transmission response field includes at least one of the following fields:
a coordinated transmission scheme accepted field, used to indicate the coordinated transmission scheme in which the second AP participates;
a participant STA list field, used to indicate STAs participating in the second target coordinated transmission scheme;
a C-BF information field, used to indicate coordinated transmission information corresponding to a C-BF scheme;
a C-OFDMA information field, used to indicate coordinated transmission information corresponding to a C-OFDMA scheme;
a C-SR information field, used to indicate coordinated transmission information corresponding to a C-SR scheme;
a J-TX information field, used to indicate coordinated transmission information corresponding to a J-TX scheme; or
a C-UL MU-MIMO information field, used to indicate coordinated transmission information corresponding to a C-UL MU-MIMO scheme.

In some embodiments, the C-BF information field includes at least one of the following fields:
a participant STA list field, used to indicate STAs participating in the C-BF scheme; or
at least one CSI field, used to indicate CSI between the second AP and at least one STA participating in the C-BF scheme.

In some embodiments, the J-TX information field includes at least one of the following fields:
a participant STA list field, used to indicate STAs participating in the J-TX scheme; or
at least one CSI field, used to indicate CSI between the second AP and at least one STA participating in the J-TX scheme.

In some embodiments, the C-SR information field includes at least one of the following fields:
a participant STA list field, used to indicate STAs participating in the C-SR scheme; or
at least one RSSI field, used to indicate RSSI between the second AP and at least one STA participating in the C-SR scheme.

In some embodiments, the C-OFDMA information field includes:
a selected RU/MRU field, used to indicate an RU or MRU selected by the second AP.

In some embodiments, the first response frame is a quality of service (QoS) null frame, and the second indication information and/or the target coordinated transmission information are carried in an aggregate control (A-Control) field in the QoS null frame.

In some embodiments, the A-Control field includes a control information field, and the second indication information and/or target coordinated transmission information are carried in the control information field.

In some embodiments, the control information field includes at least one of:
a coordinated transmission scheme accepted field, used to indicate the coordinated transmission scheme in which the second AP participates; or
a coordinated transmission scheme information field, used to indicate the target coordinated transmission information.

In some embodiments, the coordinated transmission scheme information field includes at least one of the following fields:
a participant STA list field, used to indicate STAs participating in the second target coordinated transmission scheme;
at least one CSI field, used to indicate CSI between the second AP and at least one STA participating in a C-BF scheme and/or a J-TX scheme;
at least one RSSI field, used to indicate RSSI between the second AP and at least one STA participating in a C-SR scheme; or
a selected RU/MRU field, used to indicate an RU or MRU selected by the second AP.

In some embodiments, in a case where the second target coordinated transmission scheme includes a C-BF scheme, the coordinated transmission scheme information field includes: a participant STA list field, used to indicate STAs participating in the C-BF scheme.

In some embodiments, in a case where the second target coordinated transmission scheme includes a J-TX scheme, the coordinated transmission scheme information field includes: a participant STA list field, used to indicate STAs participating in the J-TX scheme.

In some embodiments, in a case where the second target coordinated transmission scheme includes a C-SR scheme, the coordinated transmission scheme information field includes at least one of the following fields:
an RSSI from associated STA field, used to indicate RSSI between the second AP and at least one associated STA participating in the C-SR scheme; or
an RSSI from OBSS STA field, used to indicate RSSI between the second AP and at least one OBSS STA participating in the C-SR scheme.

In some embodiments, in a case where the second target coordinated transmission scheme includes a C-OFDMA scheme, the coordinated transmission scheme information field includes: a selected RU/MRU field, used to indicate an RU or MRU selected by the second AP.

In some embodiments, the coordinated transmission scheme accepted field includes at least one of the following fields:
a C-BF accepted field, used to indicate whether the second AP participates in a multi-AP coordinated transmission of a C-BF scheme;
a C-OFDMA accepted field, used to indicate whether the second AP participates in a multi-AP coordinated transmission of a C-OFDMA scheme;
a C-SR accepted field, used to indicate whether the second AP participates in a multi-AP coordinated transmission of a C-SR scheme;
a J-TX accepted field, used to indicate whether the second AP participates in a multi-AP coordinated transmission of a J-TX scheme; or
a C-UL MU MIMO accepted field, used to indicate whether the second AP participates in a multi-AP coordinated transmission of a C-UL MU MIMO scheme.

In some embodiments, the coordinated transmission scheme accepted field includes:
a coordinated transmission scheme accepted subfield, used to indicate the coordinated transmission scheme in which the second AP participates.

In some embodiments, the communication unit 510 is further configured to receive a first announce frame transmitted by the first AP, where the first announce frame is used to announce coordinated transmission parameters used by APs participating in a coordinated transmission.

In some embodiments, the first announce frame includes first announce information, and the first announce information includes at least one of:
third indication information, used to indicate a third target coordinated transmission scheme, where the third target coordinated transmission scheme is a coordinated transmission scheme determined to be adopted by the first AP;
a list of APs participating in the third target coordinated transmission scheme; or
coordinated transmission parameters used for the third target coordinated transmission scheme.

In some embodiments, the coordinated transmission parameters used for the third target coordinated transmission scheme include at least one of:
coordinated transmission parameters used for a C-BF scheme;
coordinated transmission parameters used for a C-OFDMA scheme;
coordinated transmission parameters used for a C-SR scheme;
coordinated transmission parameters used for a J-TX scheme; or
coordinated transmission parameters used for a C-UL-MU-MIMO scheme.

In some embodiments, the coordinated transmission parameters used for the C-BF scheme include:
a list of APs participating in the C-BF scheme, or a transmission matrix used for each AP participating in the C-BF scheme.

In some embodiments, the coordinated transmission parameters used for the J-TX scheme include:
a list of APs participating in the J-TX scheme, or a transmission matrix used for each AP participating in the J-TX scheme.

In some embodiments, the coordinated transmission parameters used for the C-OFDMA scheme include:
a list of APs participating in the C-OFDMA scheme, or an RU or MRU used for each AP participating in the C-OFDMA scheme.

In some embodiments, the coordinated transmission parameters used for the C-SR scheme include:
a list of APs participating in the C-SR scheme, or a transmission power used for each AP participating in the C-SR scheme.

In some embodiments, the coordinated transmission parameters used for the C-UL-MU-MIMO scheme include: a list of APs participating in the C-UL-MU-MIMO scheme, or spatial stream (SS) allocation information used for each AP participating in the C-UL-MU-MIMO scheme.

In some embodiments, the first announce frame includes a coordinated transmission announce field, and the first announce information is carried in the coordinated transmission announce field.

In some embodiments, the coordinated transmission announce field includes at least one of the following fields:
a coordinated transmission scheme adopted field, used to indicate the third target coordinated transmission scheme;
an AP list field, used to indicate APs participating in the third target coordinated transmission scheme;
a C-BF parameters field, used to indicate coordinated transmission parameters corresponding to a C-BF scheme;
a C-OFDMA parameters field, used to indicate coordinated transmission parameters corresponding to a C-OFDMA scheme;
a C-SR parameters field, used to indicate coordinated transmission parameters corresponding to a C-SR scheme;
a J-TX parameters field, used to indicate coordinated transmission parameters corresponding to a J-TX scheme; or
a C-UL MU-MIMO parameters field, used to indicate coordinated transmission parameters corresponding to a C-UL MU-MIMO scheme.

In some embodiments, the coordinated transmission scheme adopted field includes at least one of the following fields:
a C-BF adopted field, used to indicate whether to adopt a multi-AP coordinated transmission of the C-BF scheme;
a C-OFDMA adopted field, used to indicate whether to adopt a multi-AP coordinated transmission of the C-OFDMA scheme;
a C-SR adopted field, used to indicate whether to adopt a multi-AP coordinated transmission of the C-SR scheme;
a J-TX adopted field, used to indicate whether to adopt a multi-AP coordinated transmission of the J-TX scheme; or
a C-UL MU MIMO adopted field, used to indicate whether to adopt a multi-AP coordinated transmission of the C-UL MU MIMO scheme.

In some embodiments, the coordinated transmission scheme adopted field includes:
a coordinated transmission scheme adopted subfield, used to indicate a coordinated transmission scheme which is adopted.

In some embodiments, the C-BF parameters field includes at least one of the following fields:
an AP list field, used to indicate at least one AP participating in the C-BF scheme; or
at least one transmission matrix field, corresponding to at least one AP participating in the C-BF scheme and used to indicate a transmission matrix used by an AP participating in the C-BF scheme.

In some embodiments, the J-TX parameters field includes at least one of the following fields:
an AP list field, used to indicate at least one AP participating in the J-TX scheme; or
at least one transmission matrix field, corresponding to at least one AP participating in the J-TX scheme and used to indicate a transmission matrix used by an AP participating in the J-TX scheme.

In some embodiments, the C-OFDMA parameters field includes at least one of the following fields:
an AP list field, used to indicate at least one AP participating in the C-OFDMA scheme; or
at least one RU/MRU field, corresponding to at least one AP participating in the C-OFDMA scheme and used to indicate an RU or MRU used by an AP participating in the C-OFDMA scheme.

In some embodiments, the C-SR parameters field includes at least one of the following fields:
an AP list field, used to indicate at least one AP participating in the C-SR scheme; or
at least one transmission power field, corresponding to at least one AP participating in the C-SR scheme and used to indicate a transmission power used by an AP participating in the C-SR scheme.

In some embodiments, the C-UL MU-MIMO parameters field includes at least one of the following fields:
a AP list field, used to indicate at least one AP participating in the C-UL MU-MIMO scheme; or
at least one SS allocation field, corresponding to at least one AP participating in the C-UL MU-MIMO scheme and used to indicate SS allocation information used by an AP participating in the C-UL MU-MIMO scheme.

In some embodiments, the first announce frame is further used to trigger an AP to perform a multi-AP coordinated transmission adopting the third target coordinated transmission scheme.

Optionally, in some embodiments, the communication unit mentioned above may be a communication interface or a transceiver, or an input/output interface of a communication chip or a system on chip. The processing unit mentioned above may be one or more processors.

It should be understood that the second AP 500 according to the embodiments of the present application may correspond to the second AP or the shared AP in the method embodiments of the present application, and the above and other operations and/or functions of various units in the second AP 500 are respectively for implementing the corresponding processes of the second AP 500 in the method 200 shown in FIG. 4 to FIG. 49, which will not be repeated here for the sake of brevity.

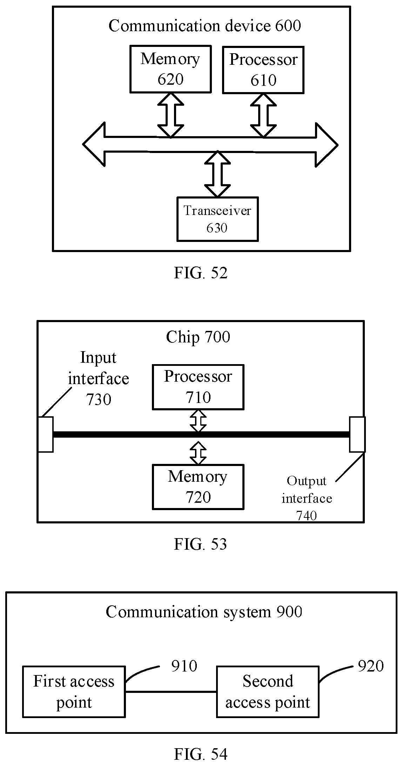

FIG. 52 is a schematic structural diagram of a communication device 600 provided in the embodiments of the present application. The communication device 600 shown in FIG. 52 includes a processor 610, the processor 610 may invoke and execute a computer program from a memory to implement the method in the embodiments of the present application.

Optionally, as shown in FIG. 52, the communication device 600 may further include a memory 620. Herein, the processor 610 may invoke and execute a computer program from the memory 620 to implement the method in the embodiments of the present application.

Herein, the memory 620 may be a separate device independent from the processor 610, or may also be integrated into the processor 610.

Optionally, as shown in FIG. 52, the communication device 600 may further include a transceiver 630, and the processor 610 may control the transceiver 630 to communicate with other devices, specifically, to transmit information or data to other devices, or receive information or data transmitted by other devices.

Herein, the transceiver 630 may include a transmitter and a receiver. The transceiver 630 may further include antenna(s), and the number of the antenna(s) may be one or more.

Optionally, the communication device 600 may specifically be the first AP or sharing AP in the embodiments of the present application, and the communication device 600 may implement the corresponding processes implemented by the first AP or sharing AP in various methods of the embodiments of the present application, which will not be repeated here, for the sake of brevity.

Optionally, the communication device 600 may specifically be the second AP or shared AP in the embodiments of the present application, and the communication device 600 may implement the corresponding processes implemented by the second AP or shared AP in various methods of the embodiments of the present application, which will not be repeated here, for the sake of brevity.

FIG. 53 is a schematic structural diagram of a chip of the embodiments of the present application. The chip 700 shown in FIG. 53 includes a processor 710, the processor 710 may invoke and execute a computer program from a memory to implement the method in the embodiments of the present application.

Optionally, as shown in FIG. 53, the chip 700 may further include a memory 720. Herein, the processor 710 may invoke and execute a computer program from the memory 720 to implement the method in the embodiments of the present application.

Herein, the memory 720 may be a separate device independent from the processor 710, or may also be integrated into the processor 710.

Optionally, the chip 700 may further include an input interface 730. Herein, the processor 710 may control the input interface 730 to communicate with other devices or chips, and specifically, the input interface 730 may acquire information or data sent by other devices or chips.

Optionally, the chip 700 may further include an output interface 740. Herein, the processor 710 may control the output interface 740 to communicate with other devices or chips, and specifically, the output interface 740 may output information or data to other devices or chips.

Optionally, the chip may be applied to the first AP or sharing AP in the embodiments of the present application, and the chip may implement the corresponding processes implemented by the first AP or sharing AP in the various methods of the embodiments of the present application, which will not be repeated here for the sake of brevity.

Optionally, the chip may be applied to the second AP or shared AP in the embodiments of the present application, and the chip may implement the corresponding processes implemented by the second AP or shared AP in the various methods of the embodiments of the present application, which will not be repeated here for the sake of brevity.

It should be understood that the chip mentioned in the embodiments of the present application may also be referred to as a system on chip, a system chip, a chip system or a system-on-chip chip, etc.

FIG. 54 is a schematic block diagram of a communication system 900, provided in the embodiments of the present application. As shown in FIG. 54, the communication system 900 includes a first access point 910 and a second access point 920.

Herein, the first access point 910 may be used to implement the corresponding functions implemented by the first AP or sharing AP in the above method, and the second access point 920 may be used to implement the corresponding functions implemented by the second AP or shared AP in the above method, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

The embodiments of the present application further provide a computer readable storage medium for storing a computer program.

Optionally, the computer readable storage medium may be applied to the first AP or sharing AP in the embodiments of the present application, and the computer program causes a computer to perform the corresponding processes implemented by the first AP or sharing AP in the various methods of the embodiments of the present application, which will not be repeated here for the sake of brevity.

Optionally, the computer readable storage medium may be applied to the second AP or shared AP in the embodiments of the present application, and the computer program causes a computer to perform the corresponding processes implemented by the second AP or shared AP in various methods of the embodiments of the present application, which will not be repeated here for the sake of brevity.

The embodiments of the present application further provide a computer program product including a computer program instruction.

Optionally, the computer program product may be applied to the first AP or sharing AP in the embodiments of the present application, and the computer program instruction causes a computer to perform the corresponding processes implemented by the first AP or sharing AP in the various methods of the embodiments of the present application, which will not be repeated here for the sake of brevity.

Optionally, the computer program product may be applied to the second AP or shared AP in the embodiments of the present application, and the computer program instruction causes a computer to perform the corresponding processes implemented by the second AP or shared AP in various methods of the embodiments of the present application, which will not be repeated here for the sake of brevity.

The embodiments of the present application further provide a computer program.

Optionally, the computer program may be applied to the first AP or sharing AP in the embodiments of the present application, the computer program when being executed on a computer, causes the computer to perform the corresponding processes implemented by the first AP or sharing AP in various methods of the embodiments of the present application, which will not be repeated here for the sake of brevity.

Optionally, the computer program may be applied to the second AP or shared AP in the embodiments of the present application, the computer program when being executed on a computer, causes the computer to perform the corresponding processes implemented by the second AP or shared AP in various methods of the embodiments of the present application, which will not be repeated here for the sake of brevity.

Those ordinary skilled in the art may realize that, units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in a form of a software functional unit and sold or used as an independent product, they may be stored in a computer readable storage medium. Based on this understanding, the technical solution of the present application essentially, or a part of the technical solution that contributes to the prior art, or a part of the technical solution, may be embodied in a form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method, comprising:
transmitting, by a first access point (AP), a first request frame to at least one second AP, the first request frame comprising first indication information and/or a target coordinated transmission command, wherein the first indication information is used to indicate a first target coordinated transmission scheme, the first target coordinated transmission scheme is a coordinated transmission scheme in which the first AP requests the at least one second AP to participate, and the target coordinated transmission command is a coordinated transmission command corresponding to the first target coordinated transmission scheme.

2. The method according to claim 1, wherein the first indication information indicates the first target coordinated transmission scheme by a bitmap.

3. The method according to claim 2, wherein the first indication information comprises multiple bits, each bit corresponds to one of multiple coordinated transmission schemes, and a value of the each bit is used to indicate whether the first AP requests the at least one second AP to participate in a corresponding coordinated transmission scheme.

4. The method according to claim 1, wherein different values of the first indication information are used to indicate different coordinated transmission schemes in which the first AP requests the at least one second AP to participate.

5. The method according to any one of claims 1 to 4, wherein the coordinated transmission command corresponding to the first target coordinated transmission scheme comprises at least one of the following information:
indication information on whether to report channel state information (CSI) between the second AP and associated STAs of the second AP;
indication information on whether to report CSI between the second AP and an overlapping basic service set (OBSS) STA;
an available resource unit (RU) or multiple resource units (MRU) shared by the first AP to the at least one second AP;
indication information on whether to report received signal strength indication (RSSI) between the second AP and associated STAs of the second AP; or
indication information on whether to report RSSI between the second AP and OBSS STAs of the second AP.

6. The method according to any one of claims 1 to 5, wherein in a case where the first target coordinated transmission scheme comprises a coordinated beamforming (C-BF) scheme, the first request frame comprises a coordinated transmission command corresponding to the C-BF scheme, and the coordinated transmission command corresponding to the C-BF scheme comprises at least one of the following information:
indication information on whether to report CSI between the second AP and associated STAs of the second AP; or
indication information on whether to report CSI between the second AP and OBSS STAs of the second AP.

7. The method according to any one of claims 1 to 6, wherein in a case where the first target coordinated transmission scheme comprises a joint transmission (J-TX) scheme, the first request frame comprises a coordinated transmission command corresponding to the J-TX scheme, and the coordinated transmission command corresponding to the J-TX scheme comprises at least one of the following information:
indication information on whether to report CSI between the second AP and associated STAs of the second AP; or
indication information on whether to report CSI between the second AP and OBSS STAs of the second AP.

8. The method according to any one of claims 1 to 7, wherein in a case where the first target coordinated transmission scheme comprises a coordinated orthogonal frequency division multiple access (C-OFDMA) scheme, the first request frame comprises a coordinated transmission command corresponding to the C-OFDMA scheme, and the coordinated transmission command corresponding to the C-OFDMA scheme comprises:
available RUs or MRUs shared by the first AP to the at least one second AP.

9. The method according to any one of claims 1 to 8, wherein in a case where the first target coordinated transmission scheme comprises a coordinated spatial reuse (C-SR) scheme, the first request frame comprises a coordinated transmission command corresponding to the C-SR scheme, and the coordinated transmission command corresponding to the C-SR scheme comprises at least one of the following information:
indication information on whether to report RSSI between the second AP and associated STAs of the second AP; or
indication information on whether to report RSSI between the second AP and OBSS STAs of the second AP.

10. The method according to any one of claims 1 to 9, wherein in a case where the first target coordinated transmission scheme comprises a coordinated uplink multiple-user multiple input multiple output (C-UL MU-MIMO) scheme, the first request frame comprises a coordinated transmission command corresponding to the C-UL MU-MIMO scheme.

11. The method according to any one of claims 1 to 10, wherein the first request frame is a control frame.

12. The method according to claim 11, wherein the first request frame comprises a coordinated transmission request field, and the first indication information and/or the target coordinated transmission command is carried in the coordinated transmission request field.

13. The method according to claim 12, wherein the coordinated transmission request field comprises at least one of the following fields:
a coordinated transmission scheme used field, used to indicate a coordinated transmission scheme in which the first AP requests the at least one second AP to participate;
a C-BF command field, used to indicate a coordinated transmission command corresponding to a C-BF scheme;
a C-OFDMA command field, used to indicate a coordinated transmission command corresponding to a C-OFDMA scheme;
a C-SR command field, used to indicate a coordinated transmission command corresponding to a C-SR scheme;
a J-TX command field, used to indicate a coordinated transmission command corresponding to a J-TX scheme;
a C-BF command field, used to indicate a coordinated transmission command corresponding to a C-BF scheme; or
a C-UL MU-MIMO command field, used to indicate a coordinated transmission command corresponding to a C-UL MU-MIMO scheme.

14. The method according to claim 13, wherein the C-BF command field comprises at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

15. The method according to claim 13 or 14, wherein the C-OFDMA command field comprises:
an available RU/MRU field, used to indicate an RU or MRU shared by the first AP to the at least one second AP.

16. The method according to any one of claims 13 to 15, wherein the C-SR command field comprises at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

17. The method according to any one of claims 13 to 16, wherein the J-TX command field comprises at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

18. The method according to any one of claims 1 to 10, wherein the first request frame is a trigger frame.

19. The method according to claim 18, wherein the first indication information is carried in a common information field or a user information field in the first request frame; and/or
the target coordinated transmission command is carried in a common information field or a user information field in the first request frame.

20. The method according to claim 18 or 19, wherein the first request frame comprises a trigger frame type field, a value of the trigger frame type field is a first value, which is used to indicate that the first request frame is used to request the at least one second AP to participate in a multi-AP coordinated transmission of the first target coordinated transmission scheme, and the first value is a reserved value of the trigger frame type field.

21. The method according to any one of claims 18 to 20, wherein the first request frame comprises a trigger frame type dependent common information field, and the first indication information and the target coordinated transmission command are carried in the trigger frame type dependent common information field.

22. The method according to claim 21, wherein the trigger frame type dependent common information field comprises at least one of the following fields:
a coordinated transmission scheme used field, used to indicate the first target coordinated transmission scheme; or
a coordinated transmission scheme related command field, used to indicate the coordinated transmission command corresponding to the first target coordinated transmission scheme.

23. The method according to any one of claims 18 to 20, wherein the first request frame comprises a trigger frame type dependent common information field and a special user information field, the first indication information is carried in the trigger frame type dependent common information field, and the target coordinated transmission command is carried in the special user information field.

24. The method according to claim 23, wherein the trigger frame type dependent common information field comprises:
a coordinated transmission scheme used field, used to indicate the first target coordinated transmission scheme.

25. The method according to claim 23 or 24, wherein the special user information field comprises a trigger frame type dependent user information field, and the target coordinated transmission command is carried in the trigger frame type dependent user information field.

26. The method according to claim 25, wherein the trigger frame type dependent user information field comprises at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

27. The method according to claim 25 or 26, wherein in a case where the first target coordinated transmission scheme comprises a C-BF scheme and/or a J-TX scheme, the trigger frame type dependent user information field comprises at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

28. The method according to any one of claims 25 to 27, wherein in a case where the first target coordinated transmission scheme comprises a C-OFDMA scheme, the trigger frame type dependent user information field comprises:
an available RU/MRU field, used to indicate an RU or MRU shared by the first AP to the at least one second AP.

29. The method according to any one of claims 25 to 28, wherein in a case where the first target coordinated transmission scheme comprises a C-SR scheme, the trigger frame type dependent user information field comprises at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

30. The method according to any one of claims 23 to 29, wherein the special user information field comprises an association identifier (AID)12 field, a value of the AID12 field is a second value, which is used to indicate that the first request frame is used to request the at least one second AP to participate in a multi-AP coordinated transmission of the first target coordinated transmission scheme, and the second value is a reserved value of the AID12 field.

31. The method according to any one of claims 18 to 20, wherein the first request frame comprises a trigger frame type dependent common information field and a multi-AP user information field, the first indication information is carried in the trigger frame type dependent common information field, and the target coordinated transmission command is carried in the multi-AP user information field.

32. The method according to claim 31, wherein the trigger frame type dependent common information field comprises:
a coordinated transmission scheme used field, used to indicate the first target coordinated transmission scheme.

33. The method according to claim 31 or 32, wherein the multi-AP user information field comprises an AID12 field, a value of the AID12 field is a third value, which is used to indicate that the first request frame is used to request the at least one second AP to participate in a multi-AP coordinated transmission of the first target coordinated transmission scheme, and the third value is a reserved value of the AID12 field.

34. The method according to any one of claims 31 to 33, wherein the multi-AP user information field comprises at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

35. The method according to any one of claims 18 to 20, wherein the first request frame comprises a trigger frame type dependent user information field, and the first indication information and the target coordinated transmission command are carried in the trigger frame type dependent user information field.

36. The method according to claim 35, wherein the trigger frame type dependent user information field comprises at least one of the following fields:
a coordinated transmission scheme used field, used to indicate the first target coordinated transmission scheme; or
a coordinated transmission scheme related command field, used to indicate the coordinated transmission command corresponding to the first target coordinated transmission scheme.

37. The method according to claim 22 or 36, wherein the coordinated transmission scheme related command field comprises at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

38. The method according to claim 37, wherein in a case where the first target coordinated transmission scheme comprises a C-BF scheme and/or a J-TX scheme, the coordinated transmission scheme related command field comprises at least one of the following fields:
the report CSI from associated STAs field, used to indicate whether to report the CSI between the second AP and the associated STAs; or
the report CSI from OBSS STAs field, used to indicate whether to report the CSI between the second AP and the OBSS STAs.

39. The method according to claim 37 or 38, wherein in a case where the first target coordinated transmission scheme comprises a C-OFDMA scheme, the coordinated transmission scheme related command field comprises:
the available RU/MRU field, used to indicate the RU or MRU shared by the first AP to the at least one second AP.

40. The method according to any one of claims 37 to 39, wherein in a case where the first target coordinated transmission scheme comprises a C-SR scheme, the coordinated transmission scheme related command field comprises at least one of the following fields:
the report RSSI from associated STAs field, used to indicate whether to report the RSSI between the second AP and the associated STAs; or
the report RSSI from OBSS STAs field, used to indicate whether to report the RSSI between the second AP and the OBSS STAs.

41. The method according to claim 13, 22, 24, 32 or 36, wherein the coordinated transmission scheme used field comprises at least one of the following fields:
a C-BF used field, used to indicate whether to request using a multi-AP coordinated transmission of a C-BF scheme;
a C-OFDMA used field, used to indicate whether to request using a multi-AP coordinated transmission of a C-OFDMA scheme;
a C-SR used field, used to indicate whether to request using a multi-AP coordinated transmission of a C-SR scheme;
a J-TX used field, used to indicate whether to request using a multi-AP coordinated transmission of a J-TX scheme; or
a C-UL MU MIMO used field, used to indicate whether to request using a multi-AP coordinated transmission of a C-UL MU MIMO scheme.

42. The method according to claim 13, 22, 24, 32 or 36, wherein the coordinated transmission scheme used field comprises:
a coordinated transmission scheme used subfield, used to indicate the coordinated transmission scheme in which the first AP requests the at least one second AP to participate.

43. The method according to any one of claims 1 to 42, further comprising:
receiving, by the first AP, a first response frame transmitted by at least one second AP, wherein the first response frame is used to indicate whether the at least one second AP participates in a multi-AP coordinated transmission of the first target coordinated transmission scheme.

44. The method according to claim 43, wherein receiving, by the first AP, the first response frame transmitted by the at least one second AP, comprises:
receiving, by the first AP, the first response frame synchronously transmitted by the at least one second AP; or
receiving, by the first AP, the first response frame asynchronously transmitted by the at least one second AP.

45. The method according to claim 44, wherein the first request frame is comprised in an aggregate medium access control protocol data unit (A-MPDU), and in a case where the at least one second AP synchronously transmits the first response frame, the A-MPDU further comprises a trigger frame, and the trigger frame is used to allocate a transmission resource to the at least one second AP and trigger the at least one second AP to transmit the first response frame simultaneously.

46. The method according to any one of claims 43 to 45, wherein the first response frame comprises second indication information and/or target coordinated transmission information, the second indication information is used to indicate a second target coordinated transmission scheme, the second target coordinated transmission scheme is a coordinated transmission scheme in which the second AP participates, and the target coordinated transmission information is coordinated transmission information corresponding to the second target coordinated transmission scheme.

47. The method according to claim 46, wherein the second indication information is indicated by a bitmap.

48. The method according to claim 46, wherein the second indication information comprises multiple bits, each bit corresponds to one of multiple coordinated transmission schemes, and a value of the each bit is used to indicate whether the second AP participates in a corresponding coordinated transmission scheme.

49. The method according to claim 46, wherein different values of the second indication information are used to indicate different coordinated transmission schemes in which the second AP participates.

50. The method according to any one of claims 46 to 49, wherein the target coordinated transmission information comprises at least one of the following information:
a list of STAs participating in the second target coordinated transmission scheme, an RU or MRU selected by the second AP, CSI between the second AP and STAs participating in the second target coordinated transmission scheme, or RSSI between the second AP and STAs participating in the second target coordinated transmission scheme.

51. The method according to any one of claims 46 to 50, wherein in a case where the second target coordinated transmission scheme comprises a C-BF scheme, the first response frame comprises coordinated transmission information corresponding to the C-BF scheme, and the coordinated transmission information corresponding to the C-BF scheme comprises at least one of:
a list of STAs participating in the C-BF scheme, CSI between the second AP and associated STAs participating in the C-BF scheme, or CSI between the second AP and OBSS STAs participating in the C-BF scheme.

52. The method according to any one of claims 46 to 51, wherein in a case where the second target coordinated transmission scheme comprises a J-TX scheme, the first response frame comprises coordinated transmission information corresponding to the J-TX scheme, and the coordinated transmission information corresponding to the J-TX scheme comprises at least one of:
a list of STAs participating in the J-TX scheme, CSI between the second AP and associated STAs participating in the J-TX scheme, or CSI between the second AP and OBSS STAs participating in the J-TX scheme.

53. The method according to any one of claims 46 to 52, wherein in a case where the second target coordinated transmission scheme comprises a C-OFDMA scheme, the first response frame comprises coordinated transmission information corresponding to the C-OFDMA scheme, and the coordinated transmission information corresponding to the C-OFDMA scheme comprises: an RU or MRU selected by the second AP.

54. The method according to any one of claims 46 to 53, wherein in a case where the second target coordinated transmission scheme comprises a C-SR scheme, the first response frame comprises coordinated transmission information corresponding to the C-SR scheme, and the coordinated transmission information corresponding to the C-SR scheme comprises at least one of:
a list of STAs participating in the C-SR scheme, RSSI between the second AP and associated STAs participating in the C-RS scheme, or RSSI between the second AP and OBSS STAs participating in the C-RS scheme.

55. The method according to any one of claims 46 to 54, wherein in a case where the second target coordinated transmission scheme comprises a C-UL MU-MIMO scheme, the first response frame comprises coordinated transmission information corresponding to the C-UL MU-MIMO scheme.

56. The method according to any one of claims 46 to 55, wherein the first response frame is a control frame.

57. The method according to claim 56, wherein the first response frame comprises a coordinated transmission response field, and the second indication information and/or the target coordinated transmission information are carried in the coordinated transmission response field.

58. The method according to claim 57, wherein the coordinated transmission response field comprises at least one of the following fields:
a coordinated transmission scheme accepted field, used to indicate the coordinated transmission scheme in which the second AP participates;
a participant STA list field, used to indicate STAs participating in the second target coordinated transmission scheme;
a C-BF information field, used to indicate coordinated transmission information corresponding to a C-BF scheme;
a C-OFDMA information field, used to indicate coordinated transmission information corresponding to a C-OFDMA scheme;
a C-SR information field, used to indicate coordinated transmission information corresponding to a C-SR scheme;
a J-TX information field, used to indicate coordinated transmission information corresponding to a J-TX scheme; or
a C-UL MU-MIMO information field, used to indicate coordinated transmission information corresponding to a C-UL MU-MIMO scheme.

59. The method according to claim 58, wherein the C-BF information field comprises at least one of the following fields:
a participant STA list field, used to indicate STAs participating in the C-BF scheme; or
at least one CSI field, used to indicate CSI between the second AP and at least one STA participating in the C-BF scheme.

60. The method according to claim 58 or 59, wherein the J-TX information field comprises at least one of the following fields:
a participant STA list field, used to indicate STAs participating in the J-TX scheme; or
at least one CSI field, used to indicate CSI between the second AP and at least one STA participating in the J-TX scheme.

61. The method according to any one of claims 56 to 58, wherein the C-SR information field comprises at least one of the following fields:
a participant STA list field, used to indicate STAs participating in the C-SR scheme; or
at least one RSSI field, used to indicate RSSI between the second AP and at least one STA participating in the C-SR scheme.

62. The method according to any one of claims 58 to 61, wherein the C-OFDMA information field comprises:
a selected RU/MRU field, used to indicate an RU or MRU selected by the second AP.

63. The method according to any one of claims 46 to 55, wherein the first response frame is a quality of service (QoS) null frame, and the second indication information and/or the target coordinated transmission information are carried in an aggregate control (A-Control) field in the QoS null frame.

64. The method according to claim 63, wherein the A-Control field comprises a control information field, and the second indication information and/or target coordinated transmission information are carried in the control information field.

65. The method according to claim 64, wherein the control information field comprises at least one of:
a coordinated transmission scheme accepted field, used to indicate the coordinated transmission scheme in which the second AP participates; or
a coordinated transmission scheme information field, used to indicate the target coordinated transmission information.

66. The method according to claim 65, wherein the coordinated transmission scheme information field comprises at least one of the following fields:
a participant STA list field, used to indicate STAs participating in the second target coordinated transmission scheme;
at least one CSI field, used to indicate CSI between the second AP and at least one STA participating in a C-BF scheme and/or a J-TX scheme;
at least one RSSI field, used to indicate RSSI between the second AP and at least one STA participating in a C-SR scheme; or
a selected RU/MRU field, used to indicate an RU or MRU selected by the second AP.

67. The method according to claim 65 or 66, wherein in a case where the second target coordinated transmission scheme comprises a C-BF scheme, the coordinated transmission scheme information field comprises the following field:
a participant STA list field, used to indicate STAs participating in the C-BF scheme.

68. The method according to any one of claims 65 to 67, wherein in a case where the second target coordinated transmission scheme comprises a J-TX scheme, the coordinated transmission scheme information field comprises at least one of the following fields:
a participant STA list field, used to indicate STAs participating in the J-TX scheme.

69. The method according to any one of claims 65 to 68, wherein in a case where the second target coordinated transmission scheme comprises a C-SR scheme, the coordinated transmission scheme information field comprises at least one of the following fields:
an RSSI from associated STA field, used to indicate RSSI between the second AP and at least one associated STA participating in the C-SR scheme; or
an RSSI from OBSS STA field, used to indicate RSSI between the second AP and at least one OBSS STA participating in the C-SR scheme.

70. The method according to any one of claims 65 to 69, wherein in a case where the second target coordinated transmission scheme comprises a C-OFDMA scheme, the coordinated transmission scheme information field comprises:
a selected RU/MRU field, used to indicate an RU or MRU selected by the second AP.

71. The method according to claim 58 or 65, wherein the coordinated transmission scheme accepted field comprises at least one of the following fields:
a C-BF accepted field, used to indicate whether the second AP participates in a multi-AP coordinated transmission of a C-BF scheme;
a C-OFDMA accepted field, used to indicate whether the second AP participates in a multi-AP coordinated transmission of a C-OFDMA scheme;
a C-SR accepted field, used to indicate whether the second AP participates in a multi-AP coordinated transmission of a C-SR scheme;
a J-TX accepted field, used to indicate whether the second AP participates in a multi-AP coordinated transmission of a J-TX scheme; or
a C-UL MU MIMO accepted field, used to indicate whether the second AP participates in a multi-AP coordinated transmission of a C-UL MU MIMO scheme.

72. The method according to claim 58 or 65, wherein the coordinated transmission scheme accepted field comprises:
a coordinated transmission scheme accepted subfield, used to indicate the coordinated transmission scheme in which the second AP participates.

73. The method according to any one of claims 1 to 72, further comprising:
transmitting, by the first AP, a first announce frame to at least one third AP, wherein the first announce frame is used to announce coordinated transmission parameters used by APs participating in a coordinated transmission.

74. The method according to claim 73, wherein the at least one second AP comprises the at least one third AP.

75. The method according to claim 73 or 74, wherein the first announce frame comprises first announce information, and the first announce information comprises at least one of:
third indication information, used to indicate a third target coordinated transmission scheme, wherein the third target coordinated transmission scheme is a coordinated transmission scheme determined to be adopted by the first AP;
a list of APs participating in the third target coordinated transmission scheme; or
coordinated transmission parameters used for the third target coordinated transmission scheme.

76. The method according to claim 75, wherein the coordinated transmission parameters used for the third target coordinated transmission scheme comprise at least one of:
coordinated transmission parameters used for a C-BF scheme;
coordinated transmission parameters used for a C-OFDMA scheme;
coordinated transmission parameters used for a C-SR scheme;
coordinated transmission parameters used for a J-TX scheme; or
coordinated transmission parameters used for a C-UL-MU-MIMO scheme.

77. The method according to claim 76, wherein the coordinated transmission parameters used for the C-BF scheme comprise:
a list of APs participating in the C-BF scheme, or a transmission matrix used for each AP participating in the C-BF scheme.

78. The method according to claim 76 or 77, wherein the coordinated transmission parameters used for the J-TX scheme comprise at least one of:
a list of APs participating in the J-TX scheme, or a transmission matrix used for each AP participating in the J-TX scheme.

79. The method according to any one of claims 76 to 78, wherein the coordinated transmission parameters used for the C-OFDMA scheme comprise:
a list of APs participating in the C-OFDMA scheme, or an RU or MRU used for each AP participating in the C-OFDMA scheme.

80. The method according to any one of claims 76 to 79, wherein the coordinated transmission parameters used for the C-SR scheme comprise at least one of:
a list of APs participating in the C-SR scheme, or a transmission power used for each AP participating in the C-SR scheme.

81. The method according to any one of claims 76 to 80, wherein the coordinated transmission parameters used for the C-UL-MU-MIMO scheme comprise at least one of:
a list of APs participating in the C-UL-MU-MIMO scheme, or spatial stream (SS) allocation information used for each AP participating in the C-UL-MU-MIMO scheme.

82. The method according to any one of claims 75 to 81, wherein the first announce frame comprises a coordinated transmission announce field, and the first announce information is carried in the coordinated transmission announce field.

83. The method according to claim 82, wherein the coordinated transmission announce field comprises at least one of the following fields:
a coordinated transmission scheme adopted field, used to indicate the third target coordinated transmission scheme;
an AP list field, used to indicate APs participating in the third target coordinated transmission scheme;
a C-BF parameters field, used to indicate coordinated transmission parameters corresponding to a C-BF scheme;
a C-OFDMA parameters field, used to indicate coordinated transmission parameters corresponding to a C-OFDMA scheme;
a C-SR parameters field, used to indicate coordinated transmission parameters corresponding to a C-SR scheme;
a J-TX parameters field, used to indicate coordinated transmission parameters corresponding to a J-TX scheme; or
a C-UL MU-MIMO parameters field, used to indicate coordinated transmission parameters corresponding to a C-UL MU-MIMO scheme.

84. The method according to claim 83, wherein the coordinated transmission scheme adopted field comprises at least one of the following fields:
a C-BF adopted field, used to indicate whether to adopt a multi-AP coordinated transmission of the C-BF scheme;
a C-OFDMA adopted field, used to indicate whether to adopt a multi-AP coordinated transmission of the C-OFDMA scheme;
a C-SR adopted field, used to indicate whether to adopt a multi-AP coordinated transmission of the C-SR scheme;
a J-TX adopted field, used to indicate whether to adopt a multi-AP coordinated transmission of the J-TX scheme; or
a C-UL MU MIMO adopted field, used to indicate whether to adopt a multi-AP coordinated transmission of the C-UL MU MIMO scheme.

85. The method according to claim 83, wherein the coordinated transmission scheme adopted field comprises:
a coordinated transmission scheme adopted subfield, used to indicate a coordinated transmission scheme which is adopted.

86. The method according to any one of claims 83 to 85, wherein the C-BF parameters field comprises at least one of the following fields:
an AP list field, used to indicate at least one AP participating in the C-BF scheme; or
at least one transmission matrix field, corresponding to at least one AP participating in the C-BF scheme and used to indicate a transmission matrix used by an AP participating in the C-BF scheme.

87. The method according to any one of claims 83 to 86, wherein the J-TX parameters field comprises at least one of the following fields:
an AP list field, used to indicate at least one AP participating in the J-TX scheme; or
at least one transmission matrix field, corresponding to at least one AP participating in the J-TX scheme and used to indicate a transmission matrix used by an AP participating in the J-TX scheme.

88. The method according to any one of claims 83 to 87, wherein the C-OFDMA parameters field comprises at least one of the following fields:
an AP list field, used to indicate at least one AP participating in the C-OFDMA scheme; or
at least one RU/MRU field, corresponding to at least one AP participating in the C-OFDMA scheme and used to indicate an RU or MRU used by an AP participating in the C-OFDMA scheme.

89. The method according to any one of claims 83 to 88, wherein the C-SR parameters field comprises at least one of the following fields:
an AP list field, used to indicate at least one AP participating in the C-SR scheme; or
at least one transmission power field, corresponding to at least one AP participating in the C-SR scheme and used to indicate a transmission power used by an AP participating in the C-SR scheme.

90. The method according to any one of claims 83 to 89, wherein the C-UL MU-MIMO parameters field comprises at least one of the following fields:
a AP list field, used to indicate at least one AP participating in the C-UL MU-MIMO scheme; or
at least one SS allocation field, corresponding to at least one AP participating in the C-UL MU-MIMO scheme and used to indicate SS allocation information used by an AP participating in the C-UL MU-MIMO scheme.

91. The method according to any one of claims 75 to 90, wherein the first announce frame is further used to trigger an AP to perform a multi-AP coordinated transmission adopting the third target coordinated transmission scheme.

92. A wireless communication method, comprising:
receiving, by a second access point (AP), a first request frame transmitted by a first AP, the first request frame comprising first indication information and/or a target coordinated transmission command, wherein the first indication information is used to indicate a first target coordinated transmission scheme, the first target coordinated transmission scheme is a coordinated transmission scheme in which the first AP requests the second AP to participate, and the target coordinated transmission command is a coordinated transmission command corresponding to the first target coordinated transmission scheme.

93. The method according to claim 92, wherein the first indication information indicates the first target coordinated transmission scheme by a bitmap.

94. The method according to claim 93, wherein the first indication information comprises multiple bits, each bit corresponds to one of multiple coordinated transmission schemes, and a value of the each bit is used to indicate whether the first AP requests the second AP to participate in a corresponding coordinated transmission scheme.

95. The method according to claim 92, wherein different values of the first indication information are used to indicate different coordinated transmission schemes in which the first AP requests the second AP to participate.

96. The method according to any one of claims 92 to 95, wherein the coordinated transmission command corresponding to the first target coordinated transmission scheme comprises at least one of the following information:
indication information on whether to report channel state information (CSI) between the second AP and associated STAs of the second AP;
indication information on whether to report CSI between the second AP and an overlapping basic service set (OBSS) STA;
an available resource unit (RU) or multiple resource units (MRU) shared by the first AP to the second AP;
indication information on whether to report received signal strength indication (RSSI) between the second AP and associated STAs of the second AP; or
indication information on whether to report RSSI between the second AP and OBSS STAs of the second AP.

97. The method according to any one of claims 92 to 96, wherein in a case where the first target coordinated transmission scheme comprises a coordinated beamforming (C-BF) scheme, the first request frame comprises a coordinated transmission command corresponding to the C-BF scheme, and the coordinated transmission command corresponding to the C-BF scheme comprises at least one of the following information:
indication information on whether to report CSI between the second AP and associated STAs of the second AP; or
indication information on whether to report CSI between the second AP and OBSS STAs of the second AP.

98. The method according to any one of claims 92 to 97, wherein in a case where the first target coordinated transmission scheme comprises a joint transmission (J-TX) scheme, the first request frame comprises a coordinated transmission command corresponding to the J-TX scheme, and the coordinated transmission command corresponding to the J-TX scheme comprises at least one of the following information:
indication information on whether to report CSI between the second AP and associated STAs of the second AP; or
indication information on whether to report CSI between the second AP and OBSS STAs of the second AP.

99. The method according to any one of claims 92 to 98, wherein in a case where the first target coordinated transmission scheme comprises a coordinated orthogonal frequency division multiple access (C-OFDMA) scheme, the first request frame comprises a coordinated transmission command corresponding to the C-OFDMA scheme, and the coordinated transmission command corresponding to the C-OFDMA scheme comprises:
available RUs or MRUs shared by the first AP to the second AP.

100. The method according to any one of claims 92 to 99, wherein in a case where the first target coordinated transmission scheme comprises a coordinated spatial reuse (C-SR) scheme, the first request frame comprises a coordinated transmission command corresponding to the C-SR scheme, and the coordinated transmission command corresponding to the C-SR scheme comprises at least one of the following information:
indication information on whether to report RSSI between the second AP and associated STAs of the second AP; or
indication information on whether to report RSSI between the second AP and OBSS STAs of the second AP.

101. The method according to any one of claims 92 to 100, wherein in a case where the first target coordinated transmission scheme comprises a coordinated uplink multiple-user multiple input multiple output (C-UL MU-MIMO) scheme, the first request frame comprises a coordinated transmission command corresponding to the C-UL MU-MIMO scheme.

102. The method according to any one of claims 92 to 101, wherein the first request frame is a control frame.

103. The method according to claim 102, wherein the first request frame comprises a coordinated transmission request field, and the first indication information and/or the target coordinated transmission command is carried in the coordinated transmission request field.

104. The method according to claim 103, wherein the coordinated transmission request field comprises at least one of the following fields:
a coordinated transmission scheme used field, used to indicate a coordinated transmission scheme in which the first AP requests the second AP to participate;
a C-BF command field, used to indicate a coordinated transmission command corresponding to a C-BF scheme;
a C-OFDMA command field, used to indicate a coordinated transmission command corresponding to a C-OFDMA scheme;
a C-SR command field, used to indicate a coordinated transmission command corresponding to a C-SR scheme;
a J-TX command field, used to indicate a coordinated transmission command corresponding to a J-TX scheme;
a C-BF command field, used to indicate a coordinated transmission command corresponding to a C-BF scheme; or
a C-UL MU-MIMO command field, used to indicate a coordinated transmission command corresponding to a C-UL MU-MIMO scheme.

105. The method according to claim 104, wherein the C-BF command field comprises at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

106. The method according to claim 104 or 105, wherein the C-OFDMA command field comprises:
an available RU/MRU field, used to indicate an RU or MRU shared by the first AP to the second AP.

107. The method according to any one of claims 104 to 106, wherein the C-SR command field comprises at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

108. The method according to any one of claims 104 to 107, wherein the J-TX command field comprises at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

109. The method according to any one of claims 92 to 101, wherein the first request frame is a trigger frame.

110. The method according to claim 109, wherein the first indication information is carried in a common information field or a user information field in the first request frame; and/or
the target coordinated transmission command is carried in a common information field or a user information field in the first request frame.

111. The method according to claim 109 or 110, wherein the first request frame comprises a trigger frame type field, a value of the trigger frame type is a first value, which is used to indicate that the first request frame is used to request the second AP to participate in a multi-AP coordinated transmission of the first target coordinated transmission scheme, and the first value is a reserved value of the trigger frame type field.

112. The method according to any one of claims 109 to 111, wherein the first request frame comprises a trigger frame type dependent common information field, and the first indication information and the target coordinated transmission command are carried in the trigger frame type dependent common information field.

113. The method according to claim 112, wherein the trigger frame type dependent common information field comprises at least one of the following fields:
a coordinated transmission scheme used field, used to indicate the first target coordinated transmission scheme; or
a coordinated transmission scheme related command field, used to indicate the coordinated transmission command corresponding to the first target coordinated transmission scheme.

114. The method according to any one of claims 109 to 111, wherein the first request frame comprises a trigger frame type dependent common information field and a special user information field, the first indication information is carried in the trigger frame type dependent common information field, and the target coordinated transmission command is carried in the special user information field.

115. The method according to claim 114, wherein the trigger frame type dependent common information field comprises:
a coordinated transmission scheme used field, used to indicate the first target coordinated transmission scheme.

116. The method according to claim 114 or 115, wherein the special user information field comprises a trigger frame type dependent user information field, and the target coordinated transmission command is carried in the trigger frame type dependent user information field.

117. The method according to claim 116, wherein the trigger frame type dependent user information field comprises at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

118. The method according to claim 116 or 117, wherein in a case where the first target coordinated transmission scheme comprises a C-BF scheme and/or a J-TX scheme, the trigger frame type dependent user information field comprises at least one of the following fields:
a report CSI from associated STAs field, used to indicate whether to report CSI between the second AP and associated STAs; or
a report CSI from OBSS STAs field, used to indicate whether to report CSI between the second AP and OBSS STAs.

119. The method according to any one of claims 116 to 118, wherein in a case where the first target coordinated transmission scheme comprises a C-OFDMA scheme, the trigger frame type dependent user information field comprises:
an available RU/MRU field, used to indicate an RU or MRU shared by the first AP to the second AP.

120. The method according to any one of claims 116 to 119, wherein in a case where the first target coordinated transmission scheme comprises a C-SR scheme, the trigger frame type dependent user information field comprises at least one of the following fields:
a report RSSI from associated STAs field, used to indicate whether to report RSSI between the second AP and associated STAs; or
a report RSSI from OBSS STAs field, used to indicate whether to report RSSI between the second AP and OBSS STAs.

121. The method according to any one of claims 114 to 120, wherein the special user information field comprises an association identifier (AID)12 field, a value of the AID12 field is a second value, which is used to indicate that the first request frame is used to request the second AP to participate in a multi-AP coordinated transmission of the first target coordinated transmission scheme, and the second value is a reserved value of the AID12 field.

122. The method according to any one of claims 109 to 110, wherein the first request frame comprises a trigger frame type dependent common information field and a multi-AP user information field, the first indication information is carried in the trigger frame type dependent common information field, and the target coordinated transmission command is carried in the multi-AP user information field.

123. The method according to claim 122, wherein the trigger frame type dependent common information field comprises:
a coordinated transmission scheme used field, used to indicate the first target coordinated transmission scheme.

124. The method according to claim 122 or 123, wherein the multi-AP user information field comprises an AID12 field, a value of the AID12 field is a third value, which is used to indicate that the first request frame is used to request the second AP to participate in a multi-AP coordinated transmission of the first target coordinated transmission scheme, and the third value is a reserved value of the AID12 field.

125. The method according to any one of claims 122 to 124, wherein the multi-AP user information field comprises at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

126. The method according to any one of claims 109-110, wherein the first request frame comprises a trigger frame type dependent user information field, and the first indication information and the target coordinated transmission command are carried in the trigger frame type dependent user information field.

127. The method according to claim 126, wherein the trigger frame type dependent user information field comprises at least one of the following fields:
a coordinated transmission scheme used field, used to indicate the first target coordinated transmission scheme; or
a coordinated transmission scheme related command field, used to indicate the coordinated transmission command corresponding to the first target coordinated transmission scheme.

128. The method according to claim 113 or 127, wherein the coordinated transmission scheme related command field comprises at least one of the following fields:
a report CSI from associated STAs field, used to indicate whether to report CSI between the second AP and associated STAs;
a report CSI from OBSS STAs field, used to indicate whether to report CSI between the second AP and OBSS STAs;
an available RU/MRU field, used to indicate an RU or MRU shared by the first AP to the at least one second AP;
a report RSSI from associated STAs field, used to indicate whether to report RSSI between the second AP and associated STAs; or
a report RSSI from OBSS STAs field, used to indicate whether to report RSSI between the second AP and OBSS STAs.

129. The method according to claim 128, wherein in a case where the first target coordinated transmission scheme comprises a C-BF scheme and/or a J-TX scheme, the coordinated transmission scheme related command field comprises at least one of the following fields:
the report CSI from associated STAs field, used to indicate whether to report the CSI between the second AP and the associated STAs; or
the report CSI from OBSS STAs field, used to indicate whether to report the CSI between the second AP and the OBSS STAs.

130. The method according to claim 128 or 129, wherein in a case where the first target coordinated transmission scheme comprises a C-OFDMA scheme, the coordinated transmission scheme related command field comprises:
the available RU/MRU field, used to indicate the RU or MRU shared by the first AP to the at least one second AP.

131. The method according to any one of claims 128 to 130, wherein in a case where the first target coordinated transmission scheme comprises a C-SR scheme, the coordinated transmission scheme related command field comprises at least one of the following fields:
the report RSSI from associated STAs field, used to indicate whether to report the RSSI between the second AP and the associated STAs; or
the report RSSI from OBSS STAs field, used to indicate whether to report the RSSI between the second AP and the OBSS STAs.

132. The method according to claim 104, 113, 115, 123 or 127, wherein the coordinated transmission scheme used field comprises at least one of the following fields:
a C-BF used field, used to indicate whether to request using a multi-AP coordinated transmission of a C-BF scheme;
a C-OFDMA used field, used to indicate whether to request using a multi-AP coordinated transmission of a C-OFDMA scheme;
a C-SR used field, used to indicate whether to request using a multi-AP coordinated transmission of a C-SR scheme;
a J-TX used field, used to indicate whether to request using a multi-AP coordinated transmission of a J-TX scheme; or
a C-UL MU MIMO used field, used to indicate whether to request using a multi-AP coordinated transmission of a C-UL MU MIMO scheme.

133. The method according to claim 104, 113, 115, 123 or 127, wherein the coordinated transmission scheme used field comprises:
a coordinated transmission scheme used subfield, used to indicate the coordinated transmission scheme in which the first AP requests the second AP to participate.

134. The method according to any one of claims 92 to 133, further comprising:
transmitting, by the second AP, a first response frame to the first AP, wherein the first response frame is used to indicate whether the second AP participates in a multi-AP coordinated transmission of the first target coordinated transmission scheme.

135. The method according to claim 134, wherein the first response frame comprises second indication information and/or target coordinated transmission information, the second indication information is used to indicate a second target coordinated transmission scheme, the second target coordinated transmission scheme is a coordinated transmission scheme in which the second AP participates, and the target coordinated transmission information is coordinated transmission information corresponding to the second target coordinated transmission scheme.

136. The method according to claim 135, wherein the second indication information is indicated by a bitmap.

137. The method according to claim 136, wherein the second indication information comprises multiple bits, each bit corresponds to one of multiple coordinated transmission schemes, and a value of the each bit is used to indicate whether the second AP participates in a corresponding coordinated transmission scheme.

138. The method according to claim 135, wherein different values of the second indication information are used to indicate different coordinated transmission schemes in which the second AP participates.

139. The method according to any one of claims 135 to 138, wherein the target coordinated transmission information comprises at least one of the following information:
a list of STAs participating in the second target coordinated transmission scheme, an RU or MRU selected by the second AP, CSI between the second AP and STAs participating in the second target coordinated transmission scheme, or RSSI between the second AP and STAs participating in the second target coordinated transmission scheme.

140. The method according to any one of claims 135 to 139, wherein in a case where the second target coordinated transmission scheme comprises a C-BF scheme, the first response frame comprises coordinated transmission information corresponding to the C-BF scheme, and the coordinated transmission information corresponding to the C-BF scheme comprises at least one of:
a list of STAs participating in the C-BF scheme, CSI between the second AP and associated STAs participating in the C-BF scheme, or CSI between the second AP and OBSS STAs participating in the C-BF scheme.

141. The method according to any one of claims 135 to 140, wherein in a case where the second target coordinated transmission scheme comprises a J-TX scheme, the first response frame comprises coordinated transmission information corresponding to the J-TX scheme, and the coordinated transmission information corresponding to the J-TX scheme comprises at least one of:
a list of STAs participating in the J-TX scheme, CSI between the second AP and associated STAs participating in the J-TX scheme, or CSI between the second AP and OBSS STAs participating in the J-TX scheme.

142. The method according to any one of claims 135 to 141, wherein in a case where the second target coordinated transmission scheme comprises a C-OFDMA scheme, the first response frame comprises coordinated transmission information corresponding to the C-OFDMA scheme, and the coordinated transmission information corresponding to the C-OFDMA scheme comprises: an RU or MRU selected by the second AP.

143. The method according to any one of claims 135 to 142, wherein in a case where the second target coordinated transmission scheme comprises a C-SR scheme, the first response frame comprises coordinated transmission information corresponding to the C-SR scheme, and the coordinated transmission information corresponding to the C-SR scheme comprises at least one of:
a list of STAs participating in the C-SR scheme, RSSI between the second AP and associated STAs participating in the C-RS scheme, or RSSI between the second AP and OBSS STAs participating in the C-RS scheme.

144. The method according to any one of claims 135 to 143, wherein in a case where the second target coordinated transmission scheme comprises a C-UL MU-MIMO scheme, the first response frame comprises coordinated transmission information corresponding to the C-UL MU-MIMO scheme.

145. The method according to any one of claims 135 to 144, wherein the first response frame is a control frame.

146. The method according to claim 145, wherein the first response frame comprises a coordinated transmission response field, and the second indication information and/or the target coordinated transmission information are carried in the coordinated transmission response field.

147. The method according to claim 146, wherein the coordinated transmission response field comprises at least one of the following fields:
a coordinated transmission scheme accepted field, used to indicate the coordinated transmission scheme in which the second AP participates;
a participant STA list field, used to indicate STAs participating in the second target coordinated transmission scheme;
a C-BF information field, used to indicate coordinated transmission information corresponding to a C-BF scheme;
a C-OFDMA information field, used to indicate coordinated transmission information corresponding to a C-OFDMA scheme;
a C-SR information field, used to indicate coordinated transmission information corresponding to a C-SR scheme;
a J-TX information field, used to indicate coordinated transmission information corresponding to a J-TX scheme; or
a C-UL MU-MIMO information field, used to indicate coordinated transmission information corresponding to a C-UL MU-MIMO scheme.

148. The method according to claim 147, wherein the C-BF information field comprises at least one of the following fields:
a participant STA list field, used to indicate STAs participating in the C-BF scheme; or
at least one CSI field, used to indicate CSI between the second AP and at least one STA participating in the C-BF scheme.

149. The method according to claim 147 or 148, wherein the J-TX information field comprises at least one of the following fields:
a participant STA list field, used to indicate STAs participating in the J-TX scheme; or
at least one CSI field, used to indicate CSI between the second AP and at least one STA participating in the J-TX scheme.

150. The method according to any one of claims 147 to 149, wherein the C-SR information field comprises at least one of the following fields:
a participant STA list field, used to indicate STAs participating in the C-SR scheme; or
at least one RSSI field, used to indicate RSSI between the second AP and at least one STA participating in the C-SR scheme.

151. The method according to any one of claims 147 to 150, wherein the C-OFDMA information field comprises:
a selected RU/MRU field, used to indicate an RU or MRU selected by the second AP.

152. The method according to any one of claims 135 to 144, wherein the first response frame is a quality of service (QoS) null frame, and the second indication information and/or the target coordinated transmission information are carried in an aggregate control (A-Control) field in the QoS null frame.

153. The method according to claim 152, wherein the A-Control field comprises a control information field, and the second indication information and/or target coordinated transmission information are carried in the control information field.

154. The method according to claim 153, wherein the control information field comprises at least one of:
a coordinated transmission scheme accepted field, used to indicate the coordinated transmission scheme in which the second AP participates; or
a coordinated transmission scheme information field, used to indicate the target coordinated transmission information.

155. The method according to claim 154, wherein the coordinated transmission scheme information field comprises at least one of the following fields:
a participant STA list field, used to indicate STAs participating in the second target coordinated transmission scheme;
at least one CSI field, used to indicate CSI between the second AP and at least one STA participating in a C-BF scheme and/or a J-TX scheme;
at least one RSSI field, used to indicate RSSI between the second AP and at least one STA participating in a C-SR scheme; or
a selected RU/MRU field, used to indicate an RU or MRU selected by the second AP.

156. The method according to claim 154 or 155, wherein in a case where the second target coordinated transmission scheme comprises a C-BF scheme, the coordinated transmission scheme information field comprises the following field:
a participant STA list field, used to indicate STAs participating in the C-BF scheme.

157. The method according to any one of claims 154 to 156, wherein in a case where the second target coordinated transmission scheme comprises a J-TX scheme, the coordinated transmission scheme information field comprises:
a participant STA list field, used to indicate STAs participating in the J-TX scheme.

158. The method according to any one of claims 154 to 157, wherein in a case where the second target coordinated transmission scheme comprises a C-SR scheme, the coordinated transmission scheme information field comprises at least one of the following fields:
an RSSI from associated STA field, used to indicate RSSI between the second AP and at least one associated STA participating in the C-SR scheme; or
an RSSI from OBSS STA field, used to indicate RSSI between the second AP and at least one OBSS STA participating in the C-SR scheme.

159. The method according to any one of claims 154 to 158, wherein in a case where the second target coordinated transmission scheme comprises a C-OFDMA scheme, the coordinated transmission scheme information field comprises:
a selected RU/MRU field, used to indicate an RU or MRU selected by the second AP.

160. The method according to claim 147 or 154, wherein the coordinated transmission scheme accepted field comprises at least one of the following fields:
a C-BF accepted field, used to indicate whether the second AP participates in a multi-AP coordinated transmission of a C-BF scheme;
a C-OFDMA accepted field, used to indicate whether the second AP participates in a multi-AP coordinated transmission of a C-OFDMA scheme;
a C-SR accepted field, used to indicate whether the second AP participates in a multi-AP coordinated transmission of a C-SR scheme;
a J-TX accepted field, used to indicate whether the second AP participates in a multi-AP coordinated transmission of a J-TX scheme; or
a C-UL MU MIMO accepted field, used to indicate whether the second AP participates in a multi-AP coordinated transmission of a C-UL MU MIMO scheme.

161. The method according to claim 147 or 154, wherein the coordinated transmission scheme accepted field comprises:
a coordinated transmission scheme accepted subfield, used to indicate the coordinated transmission scheme in which the second AP participates.

162. The method according to any one of claims 92 to 161, further comprising:
receiving, by the second AP, a first announce frame transmitted by the first AP, wherein the first announce frame is used to announce coordinated transmission parameters used by APs participating in a coordinated transmission.

163. The method according to claim 162, wherein the first announce frame comprises first announce information, and the first announce information comprises at least one of:
third indication information, used to indicate a third target coordinated transmission scheme, wherein the third target coordinated transmission scheme is a coordinated transmission scheme determined to be adopted by the first AP;
a list of APs participating in the third target coordinated transmission scheme; or
coordinated transmission parameters used for the third target coordinated transmission scheme.

164. The method according to claim 163, wherein the coordinated transmission parameters used for the third target coordinated transmission scheme comprise at least one of:
coordinated transmission parameters used for a C-BF scheme;
coordinated transmission parameters used for a C-OFDMA scheme;
coordinated transmission parameters used for a C-SR scheme;
coordinated transmission parameters used for a J-TX scheme; or
coordinated transmission parameters used for a C-UL-MU-MIMO scheme .

165. The method according to claim 164, wherein the coordinated transmission parameters used for the C-BF scheme comprise:
a list of APs participating in the C-BF scheme, or a transmission matrix used for each AP participating in the C-BF scheme.

166. The method according to claim 164 or 165, wherein the coordinated transmission parameters used for the J-TX scheme comprise at least one of:
a list of APs participating in the J-TX scheme, or a transmission matrix used for each AP participating in the J-TX scheme.

167. The method according to any one of claims 164 to 166, wherein the coordinated transmission parameters used for the C-OFDMA scheme comprise:
a list of APs participating in the C-OFDMA scheme, or an RU or MRU used for each AP participating in the C-OFDMA scheme.

168. The method according to any one of claims 164 to 167, wherein the coordinated transmission parameters used for the C-SR scheme comprise at least one of:
a list of APs participating in the C-SR scheme, or a transmission power used for each AP participating in the C-SR scheme.

169. The method according to any one of claims 164 to 168, wherein the coordinated transmission parameters used for the C-UL-MU-MIMO scheme comprise at least one of:
a list of APs participating in the C-UL-MU-MIMO scheme, or spatial stream (SS) allocation information used for each AP participating in the C-UL-MU-MIMO scheme.

170. The method according to any one of claims 163 to 169, wherein the first announce frame comprises a coordinated transmission announce field, and the first announce information is carried in the coordinated transmission announce field.

171. The method according to claim 170, wherein the coordinated transmission announce field comprises at least one of the following fields:
a coordinated transmission scheme adopted field, used to indicate the third target coordinated transmission scheme;
an AP list field, used to indicate APs participating in the third target coordinated transmission scheme;
a C-BF parameters field, used to indicate coordinated transmission parameters corresponding to a C-BF scheme;
a C-OFDMA parameters field, used to indicate coordinated transmission parameters corresponding to a C-OFDMA scheme;
a C-SR parameters field, used to indicate coordinated transmission parameters corresponding to a C-SR scheme;
a J-TX parameters field, used to indicate coordinated transmission parameters corresponding to a J-TX scheme; or
a C-UL MU-MIMO parameters field, used to indicate coordinated transmission parameters corresponding to a C-UL MU-MIMO scheme.

172. The method according to claim 171, wherein the coordinated transmission scheme adopted field comprises at least one of the following fields:
a C-BF adopted field, used to indicate whether to adopt a multi-AP coordinated transmission of the C-BF scheme;
a C-OFDMA adopted field, used to indicate whether to adopt a multi-AP coordinated transmission of the C-OFDMA scheme;
a C-SR adopted field, used to indicate whether to adopt a multi-AP coordinated transmission of the C-SR scheme;
a J-TX adopted field, used to indicate whether to adopt a multi-AP coordinated transmission of the J-TX scheme; or
a C-UL MU MIMO adopted field, used to indicate whether to adopt a multi-AP coordinated transmission of the C-UL MU MIMOscheme.

173. The method according to claim 171, wherein the coordinated transmission scheme adopted field comprises:
a coordinated transmission scheme adopted subfield, used to indicate a coordinated transmission scheme which is adopted.

174. The method according to any one of claims 171 to 173, wherein the C-BF parameters field comprises at least one of the following fields:
an AP list field, used to indicate at least one AP participating in the C-BF scheme; or
at least one transmission matrix field, corresponding to at least one AP participating in the C-BF scheme and used to indicate a transmission matrix used by an AP participating in the C-BF scheme.

175. The method according to any one of claims 171 to 174, wherein the J-TX parameters field comprises at least one of the following fields:
an AP list field, used to indicate at least one AP participating in the J-TX scheme; or
at least one transmission matrix field, corresponding to at least one AP participating in the J-TX scheme and used to indicate a transmission matrix used by an AP participating in the J-TX scheme.

176. The method according to any one of claims 171 to 175, wherein the C-OFDMA parameters field comprises at least one of the following fields:
an AP list field, used to indicate at least one AP participating in the C-OFDMA scheme; or
at least one RU/MRU field, corresponding to at least one AP participating in the C-OFDMA scheme and used to indicate an RU or MRU used by an AP participating in the C-OFDMA scheme.

177. The method according to any one of claims 171 to 176, wherein the C-SR parameters field comprises at least one of the following fields:
an AP list field, used to indicate at least one AP participating in the C-SR scheme; or
at least one transmission power field, corresponding to at least one AP participating in the C-SR scheme and used to indicate a transmission power used by an AP participating in the C-SR scheme.

178. The method according to any one of claims 171 to 177, wherein the C-UL MU-MIMO parameters field comprises at least one of the following fields:
an AP list field, used to indicate at least one AP participating in the C-UL MU-MIMO scheme; or
at least one SS allocation field, corresponding to at least one AP participating in the C-UL MU-MIMO scheme and used to indicate SS allocation information used by an AP participating in the C-UL MU-MIMO scheme.

179. The method according to any one of claims 163 to 178, wherein the first announce frame is further used to trigger an AP to perform a multi-AP coordinated transmission adopting the third target coordinated transmission scheme.

180. A first access point (AP), comprising:
a communication unit, configured to transmit a first request frame to at least one second AP, the first request frame comprising first indication information and/or a target coordinated transmission command, wherein the first indication information is used to indicate a first target coordinated transmission scheme, the first target coordinated transmission scheme is a coordinated transmission scheme in which the first AP requests the at least one second AP to participate, and the target coordinated transmission command is a coordinated transmission command corresponding to the first target coordinated transmission scheme.

181. A second access point (AP), comprising:
a communication unit, configured to receive a first request frame transmitted by a first AP, wherein the first request frame comprises first indication information and/or a target coordinated transmission command, wherein the first indication information is used to indicate a first target coordinated transmission scheme, the first target coordinated transmission scheme is a coordinated transmission scheme in which the first AP requests the second AP to participate, and the target coordinated transmission command is a coordinated transmission command corresponding to the first target coordinated transmission scheme.

182. An access point, comprising: a processor and a memory, wherein the memory is configured to store a computer program, and the processor is configured to call and run the computer program stored in the memory to perform the method according to any one of claims 1 to 91, or the method according to any one of claims 92 to 179.

183. A chip, comprising: a processor, configured to call and run a computer program from a memory, to cause a device equipped with the chip to perform the method according to any one of claims 1 to 91, or the method according to any one of claims 92 to 179.

184. A computer-readable storage medium, configured to store a computer program, wherein the computer program causes a computer to perform the method according to any one of claims 1 to 91, or the method according to any one of claims 92 to 179.

185. A computer program product, comprising computer program instructions, wherein the computer program instructions causes a computer to perform the method according to any one of claims 1 to 91, or the method according to any one of claims 92 to 179.

186. A computer program, wherein the computer program causes a computer to perform the method according to any one of claims 1 to 91, or the method according to any one of claims 92 to 179.
